# EUROPEAN PATENT APPLICATION

(11) **EP 4 803 361 A1**
(43) Date of publication of application: **09.09.2026**
(21) Application number: 24886489.4
(22) Date of filing: 01.11.2024
(51) Int. Cl.: B60N 2/28, A01K 1/02, A47D 13/02

(54) **CARRIER FIXING MECHANISM**

(30) Priority: 02.11.2023 US 202363595376 P; 03.11.2023 US 202363595918 P; 15.11.2023 US 202363599064 P; 15.11.2023 US 202363599067 P; 28.11.2023 US 202363603187 P; 30.11.2023 US 202363604526 P; 30.05.2024 US 202463653518 P
(71) Applicant: Jani International Pte. Ltd., Singapore 569874 (SG)
(72) Inventor: CHENG, Chinming, Taipei, Taiwan 114 (CN); LIN, Lihung, Taipei, Taiwan 114 (CN); YU, Tsung-Chun, Taipei, Taiwan 114 (CN)
(74) Representative: Pfenning, Meinig & Partner mbB
(86) International application number: PCT/SG2024/050711
(87) International publication number: WO 2025/095871

(57) **Abstract**

The present invention provides a carrier fixing mechanism. The carrier fixing mechanism comprises a carrier and a top lace; the top lace is provided with an anchoring component; the carrier and the top lace are detachably connected by means of at least one connecting assembly; the connecting assembly comprises a connector and a positioner; the connector is connected to the top lace; the positioner is connected to the carrier and is located on the front surface of the carrier; the connector and the positioner are detachably connected.

## Description

### TECHNICAL FIELD

The invention relates to a carrier fixing mechanism.

### BACKGROUND

Carriers, such as pet case, provide convenience for people to take their pets out of the house. When people go out by vehicle, pet cases are usually placed on the vehicle seats. Generally, the pet case is connected to the vehicle seat through LATCH (Lower Anchors and Tethers for Children) connectors provided on a soft webbing ISOFIX (International Standards Organization FIX) connectors.

Users can conveniently carry a pet out by means of the pet case. However, how to reliably fix the pet case on the vehicle seat remains a problem that needs to be solved urgently by those skilled in the art.

It is necessary to provide a carrier fixing mechanism to reliably fix the carrier to the vehicle seat.

### SUMMARY

In view of the above, in order to overcome the above defects, the present invention provides a carrier fixing mechanism, which can prevent a carrier from falling from a seat and effectively suppress a forward tipping trend of the carrier during emergency braking of a vehicle, thereby reducing the possibility of causing damage to the carrier.

An aspect of the present invention provides a carrier fixing mechanism including a carrier and a top tether. The top tether has an anchoring member. The carrier and the top tether are detachably connected by at least one connecting assembly.

In some embodiments, the carrier fixing mechanism further includes a LATCH structure. The LATCH structure is connected to the carrier and includes at least one insertion connector configured for connecting to at least one connection point of a vehicle seat.

In some embodiments, the connecting assembly includes a connector and a positioner. The connector is connected to the top tether. The positioner is connected to the carrier. The connector is detachably connected to the positioner. The top tether includes a webbing portion and a sheet portion. The webbing portion is connected to the anchoring member. The sheet portion is connected to the connector.

In some embodiments, an adjuster is disposed on the webbing portion.

In some embodiments, the sheet portion covers at least a part of a front surface of the carrier.

In some embodiments, the sheet portion is formed as triangular. The webbing portion extends from one of corners of the sheet portion. The connectors are respectively disposed on another two corners of the sheet portion.

In some embodiments, the top tether further includes a rod. The webbing portion and the sheet portion are respectively connected to the rod.

In some embodiments, the rod is provided with a hollow structure and an aperture communicating with the hollow structure. An automatic reeling retractor is disposed in the hollow structure. The sheet portion extends through the aperture and is connected to the automatic reeling retractor.

Another aspect of the present invention provides a top tether including a rod, a webbing portion and a sheet portion. The webbing portion and the sheet portion are respectively connected to the rod. The webbing portion is connected to an anchoring member. The sheet portion is connected to a connector.

In some embodiments, the rod is provided with a hollow structure and an aperture communicating with the hollow structure. An automatic reeling retractor is disposed in the hollow structure. The sheet portion extends through the aperture and is connected to the automatic reeling retractor.

Another aspect of the present invention provides a carrier restraint structure including a top tether and a LATCH structure. The top tether includes an anchoring member configured for connecting to an anchoring structure in a vehicle. The LATCH structure includes at least one insertion connector configured for connecting to at least one connection point of a vehicle seat. The top tether and the LATCH structure are configured to define a space for restraining the carrier with a backrest of the vehicle seat.

In some embodiments, the top tether includes a connecting band and a sheet portion. The anchoring member is connected to the connecting band. The LATCH structure is connected to the sheet portion.

In some embodiments, the top tether includes a connecting band, a sheet portion, a rod, and at least one extension band. A first side edge of the sheet portion and the connecting band are respectively connected to the rod. A second side edge of the sheet portion is connected to the at least one extension band. The first side edge is opposite to the second side edge. The

LATCH structure is connected to the at least one extension band.

In some embodiments, at least a part of the sheet portion covers a front surface of the carrier.

In some embodiments, the rod is provided with a hollow structure and an aperture communicating with the hollow structure. An automatic reeling retractor is disposed in the hollow structure. The first side edge of the sheet portion extends through the aperture, and is connected to the automatic reeling retractor.

In some embodiments, at least one connector is disposed on the connecting band. The at least one connector is configured for connecting to the carrier.

In some embodiments, at least one connector is disposed on the top tether, and the at least one connector is configured for detachably connecting to the front surface of the carrier.

Another aspect of the present invention provides a carrier fixing mechanism including a carrier and the above-described carrier restraint structure.

In some embodiments, the top tether is connected to the carrier by at least one connecting assembly.

In some embodiments, the connecting assembly includes a connector and a positioner. The connector is connected to the top tether. The positioner is connected to the carrier. The connector is detachably connected to the positioner.

Another aspect of the present invention provides a carrier fixing device including a pedestal and a blocking member. A LATCH structure is disposed on an end of the pedestal. The pedestal is adapted to be placed on a seat cushion of a seat. The blocking member is connected to another end of the pedestal. The blocking member extends upward from the pedestal to form a space for receiving a carrier with a backrest of the seat.

In some embodiments, the blocking member is pivotally connected to the pedestal.

In some embodiments, the pedestal has a telescopic structure.

In some embodiments, the pedestal includes two parallel bar members. Each bar member includes at least one tube unit sleeved together. Relative positions of the at least one tube unit is locked by a position locking mechanism.

In some embodiments, a shock absorbing structure is disposed on the pedestal and/or the blocking member.

In some embodiments, a carrier is mounted on the pedestal. The carrier is connected to the pedestal by a first positioning structure.

In some embodiments, the first positioning structure is a snap-on structure or a magnetic structure.

In some embodiments, a carrier is mounted on the pedestal. The carrier is connected to the blocking member by a second positioning structure.

Another aspect of the present invention provides a carrier fixing mechanism including a base and a carrier. The base is adapted to be detachably mounted on a seat. The base includes a basal portion and an abutment portion extending upward from the basal portion. The basal portion is adapted to be placed on a seat cushion of the seat. The abutment portion is adapted to abut against a backrest of the seat. The carrier is detachably connected to the base.

In some embodiments, the carrier includes a receiving body and a canopy assembly disposed on the receiving body. The carrier is further provided with an anti-collision protection device covering at least a part of an area of the canopy assembly.

In some embodiments, the anti-collision protection device covers a front side area of the canopy assembly.

In some embodiments, the anti-collision protection device includes a shield body and two second connecting elements. The two second connecting elements are disposed at both ends of the shield body. Each of left and right sides of the carrier is provided with a first connecting element. Each second connecting element is detachably connected to the corresponding first connecting element.

In some embodiments, the anti-collision protection device includes an energy-absorbing device disposed on the shield body.

In some embodiments, when the anti-collision protection device is in a usage state, at least one connection point is formed between a lower edge of the anti-collision protection device and an outer side surface of the receiving body.

In some embodiments, the carrier includes a receiving body and a canopy assembly disposed on the receiving body. The canopy assembly is a partially covering ceiling. A U-shaped elastic strip is disposed in an area of the receiving body that is not covered by the canopy assembly.

In some embodiments, two arms of the U-shaped elastic strip protrude upward from an upper edge of the receiving body that is not covered by the canopy assembly.

In some embodiments, the number of the U-shaped elastic strips is more than one. A plurality of U-shaped elastic strips are arranged at intervals along a front-rear direction.

In some embodiments, the carrier includes a receiving body and a canopy assembly disposed on the receiving body. The canopy assembly is a partially covering ceiling. An upper edge of the receiving body that is not connected to the canopy assembly is detachably connected to an anti-collision protection device.

In some embodiments, the receiving body includes two opposite first side surfaces and two opposite second side surfaces. The two second side surfaces are located between the two first side surfaces. The first side surfaces extend in a front-rear direction, and the second side surfaces extend in a left-right direction. The anti-collision protection device includes a first portion protruding upward from the second side surface, and a second portion protruding upward from the first side surface. A height of the first portion is greater than a height of the second portion.

In some embodiments, the anti-collision protection device includes an integrally formed foamed material.

In some embodiments, the carrier includes a receiving body and a handle pivotally connected to the receiving body. The carrier fixing mechanism further includes a protective sheet. A first side edge of the protective sheet is connected to the carrier or the basal portion. A second side edge of the protective sheet is detachably connected to the handle or a top tether assembly.

In some embodiments, the carrier includes a receiving body and a handle pivotally connected to the receiving body. A protective shed is mounted on the handle. The protective shed includes a U-shaped frame and a shed fabric. Two ends of the U-shaped frame are pivotally connected to two ends of the handle. A pivot position of the U-shaped frame relative to the handle is adjustable to allow the shed fabric to cover over the receiving body.

In some embodiments, a positioning member is disposed on the protective shed. The positioning member is configured to cooperate with a corresponding positioning member on the receiving body or the canopy assembly to form a fixing joint point so as to lock the position of the U-shaped frame.

In some embodiments, a blocking member extending upward is disposed on a front end of the basal portion or the carrier. The blocking member includes an energy-absorbing device and a bar member supporting the energy-absorbing device. The energy-absorbing device faces the carrier.

In some embodiments, the blocking member is pivotally connected to the basal portion. A storage cavity is formed inside the base. The blocking member can be inserted into the storage cavity when being pivoted to a horizontal state.

In some embodiments, a supporting leg device is disposed at a bottom of the carrier. The supporting leg device has an unfolded state and a stored state. When the carrier is removed from the base and the supporting leg device is in the unfolded state, the carrier can be used as a stroller. When the supporting leg device is in the stored state, a bar member of the supporting leg device can be detachably engaged with the base.

Another aspect of the present invention provides a carrier fixing mechanism including a base, a carrier and a protective sheet. The base is adapted to be detachably mounted on a seat. The base includes a basal portion. The basal portion is adapted to be placed on a seat cushion of the seat. The carrier is detachably connected to the base. The carrier includes a receiving body and a handle pivotally connected to the receiving body. A first side edge of the protective sheet is connected to the basal portion. A second side edge of the protective sheet is detachably connected to the handle or a top tether assembly.

Another aspect of the present invention provides a carrier fixing mechanism including a carrier and a protective sheet. The carrier includes a receiving body and a handle pivotally connected to the receiving body. A first side edge of the protective sheet is connected to the receiving body. A second side edge of the protective sheet is detachably connected to the handle or a top tether assembly.

In some embodiments, the protective sheet is tensioned by rotating the handle position or adjusting the top tether assembly. The tensioned protective sheet covers a front side area of the carrier.

In some embodiments, a receiving cavity for receiving the protective sheet is formed in the carrier or the basal portion. The protective sheet has a stored state when being received in the receiving cavity, and a usage state when extending out from the receiving cavity and being connected to the handle or the top tether assembly.

In some embodiments, the tensioned protective sheet covers at least a part of the canopy assembly of the carrier.

In some embodiments, the second side edge of the protective sheet is connected to an abutment portion of the base after passing over the handle in a vertical state, so that the handle supports the protective sheet. The abutment portion extends upward from a rear end of the basal portion. The abutment portion is adapted to abut against a backrest of a seat.

### BRIEF DESCRIPTION OF THE DRAWINGS

The accompanying drawings that constitute part of the present application are intended to provide further understandings of the present application. The illustrative embodiments of the present invention as well as the description thereof are provided to explain the present invention, and do not constitute improper limitations to the present invention.
FIG. 1 shows a perspective view illustrating a carrier fixing mechanism mounted to a seat according to a first embodiment of the present invention.
FIG. 2 shows a side view of the carrier fixing mechanism and the seat in FIG. 1, FIG. 3 shows a rear perspective view of the carrier fixing mechanism and the seat in FIG. 1, FIG. 4 shows a front view of the carrier fixing mechanism and the seat in FIG. 1, and FIG. 5 shows a cross-sectional view taken along the line U-U in FIG. 4.
FIGS. 6 to 8 show perspective views of the carrier and the LATCH structure in FIG. 1 from different angles.
FIGS. 9 and 10 show variants of the connecting assembly in FIG. 8, respectively.
FIGS. 11 and 12 show perspective views of the top tether in FIG. 1 from different angles.
FIG. 13 shows a variant of the carrier fixing mechanism shown in FIG. 1.
FIG. 14 shows a perspective view illustrating a carrier fixing mechanism mounted to a seat according to a second embodiment of the present invention.
FIGS. 15 and 16 show perspective views of the top tether in FIG. 14 from different angles.
FIG. 17 shows a perspective view of the top tether shown in FIG. 15 in a stored state.
FIG. 18 shows a perspective view illustrating the top tether of the carrier fixing mechanism shown in FIG. 14 separated from the carrier.
FIGS. 19 and 20 show perspective views illustrating a carrier fixing mechanism mounted to a seat according to a third embodiment of the present invention from different angles.
FIG. 21 shows a side view of the carrier fixing mechanism and the seat in FIG. 19.
FIG. 22 shows a rear view of the carrier fixing mechanism and the seat in FIG. 19.
FIG. 23 shows a perspective view of the carrier fixing mechanism and the seat in FIG. 19 with the top tether and the LATCH structure removed from the seat and the carrier placed on the seat.
FIG. 24 shows a perspective view of the top tether and the LATCH of the carrier fixing mechanism in FIG. 19.
FIGS. 25 and 26 show perspective views illustrating a carrier fixing mechanism mounted to a seat according to a fourth embodiment of the present invention from different angles.
FIG. 27 shows a side view of the carrier fixing mechanism and the seat in FIG. 25.
FIG. 28 shows a perspective view of the carrier fixing mechanism and the seat in FIG. 25 with the top tether and the LATCH structure removed from the seat and the top tether in an expanded state.
FIG. 29 shows a perspective view of the top tether and the LATCH structure of the carrier fixing mechanism in FIG. 25 with the top tether in the expanded state.
FIGS. 30 and 31 show perspective views of the top tether and the LATCH structure shown in FIG. 29 from different angles with the top tether in the stored state.
FIGS. 32 and 33 show perspective views illustrating a carrier fixing device in an expanded state according to a fifth embodiment of the present invention from different angles.
FIG. 34 shows a perspective view of the carrier fixing device shown in FIG. 32 in another expanded state.
FIG. 35 shows a perspective view of the carrier fixing device shown in FIG. 32 in a folded state.
FIG. 36 shows a perspective view illustrating the carrier fixing device shown in FIG. 35 mounted to a vehicle seat.
FIG. 37 shows a perspective view illustrating a carrier mounted to the vehicle seat by the carrier fixing device shown in FIG. 32 with the carrier fixing device in the expanded state.
FIG. 38 shows a side view of the carrier fixing device, the carrier and the vehicle seat shown in FIG. 37.
FIGS. 39 and 40 show perspective views illustrating a carrier fixing device in an expanded state according to a sixth embodiment of the present invention from different angles.
FIG. 41 shows a perspective view illustrating a carrier mounted to a vehicle seat by the carrier fixing device shown in FIG. 39 with the carrier fixing device in the expanded state.
FIG. 42 shows a side view of the carrier fixing device, the carrier and the vehicle seat shown in FIG. 41.
FIGS. 43 and 44 show perspective views illustrating a carrier fixing device in an expanded state according to a seventh embodiment of the present invention from different angles.
FIG. 45 shows a perspective view illustrating a carrier mounted to a vehicle seat by the carrier fixing device shown in FIG. 43 with the carrier fixing device in the expanded state.
FIG. 46 shows a side view of the carrier fixing device, the carrier and the vehicle seat shown in FIG. 45.
FIGS. 47 and 48 show perspective views illustrating a carrier fixing device in an expanded state according to an eighth embodiment of the present invention from different angles.
FIG. 49 shows a perspective view illustrating a carrier mounted to a vehicle seat by the carrier fixing device shown in FIG. 47 with the carrier fixing device in the expanded state.
FIG. 50 shows a side view of the carrier fixing device, the carrier and the vehicle seat shown in FIG. 49.
FIG. 51 shows a perspective view of a carrier fixing device according to a ninth embodiment of the present invention, illustrating that the carrier fixing device is mounted on a vehicle seat and in an expanded state, and a carrier is separated from the carrier fixing device.
FIG. 52 shows a perspective view illustrating the carrier fixing device shown in FIG. 51 is mounted to the vehicle seat with the carrier is mounted on the carrier fixing device.
FIG. 53 shows a cross-sectional perspective view taken along the line U1-U1 in FIG. 52.
FIG. 54 shows a front view of a first positioning structure shown in the partial enlarged view *Q* of FIG. 53.
FIGS. 55 to 60 show a plurality of variant embodiments of the first positioning structure shown in FIG. 54.
FIG. 61 shows a variant embodiment of the first positioning structure shown in FIG. 51.
FIGS. 62 to 64 show variant embodiments of a carrier according to a tenth embodiment of the present invention.
FIG. 65 shows a perspective view of a carrier fixing device according to an eleventh embodiment of the present invention.
FIG. 66 shows a perspective view illustrating the carrier fixing device shown in FIG. 65 mounted to a vehicle seat.
FIG. 67 shows a side view illustrating a carrier mounted to a vehicle seat by the carrier fixing device shown in FIG. 65 with the carrier fixing device in the expanded state.
FIG. 68 shows a perspective view of a carrier and a carrier fixing device according to a twelfth embodiment of the present invention with the carrier separated from the carrier fixing device.
FIG. 69 shows a partial sectional view of a carrier and a carrier fixing device according to a thirteenth embodiment of the present invention.
FIGS. 70 to 72 show cross-sectional views taken along the line U2-U2 in FIG. 69, illustrating different operating states of a position locking mechanism.
FIG. 73 shows a perspective view of a carrier fixing device according to a fourteenth embodiment of the present invention, illustrating that the carrier fixing device is mounted on a vehicle seat and in an expanded state, and a carrier is separated from the carrier fixing device.
FIG. 74 shows a partial sectional view taken along the line U3-U3 in FIG. 73.
FIG. 75 shows a perspective view of the first positioning structure in FIG. 73.
FIG. 76 shows a perspective view of a carrier fixing device according to a fifteenth embodiment of the present invention, illustrating that the carrier fixing device is mounted on a vehicle seat and in an expanded state, and a carrier is separated from the carrier fixing device.
FIG. 77 shows a partial sectional view taken along the line U4-U4 in FIG. 76.
FIG. 78 shows a perspective view illustrating a carrier fixing mechanism mounted to a seat according to a sixteenth embodiment of the present invention, illustrating that a canopy assembly of a carrier is in a closed state.
FIG. 79 shows an exemplary perspective view of the base in FIG. 78.
FIG. 80 shows a perspective view of the carrier in FIG. 78.
FIG. 81 shows a top view of the carrier in FIG. 80.
FIG. 82 shows another perspective view of the carrier fixing mechanism and the seat in FIG. 78, illustrating that the canopy assembly of the carrier is in an opening state.
FIGS. 83 and 84 show perspective views of a carrier according to a seventeenth embodiment of the present invention from different angles.
FIGS. 85 and 86 show perspective views of a carrier fixing mechanism according to an eighteenth embodiment of the present invention from different angles.
FIGS. 87 and 88 show perspective views of a variant embodiment of the carrier fixing mechanism shown in FIGS. 85 and 86.
FIGS. 89 and 90 show perspective views of a carrier according to a nineteenth embodiment of the present invention from different angles.
FIGS. 91 to 93 show perspective views of a carrier according to a twentieth embodiment of the present invention from different angles.
FIGS. 94 and 95 show perspective views of a variant embodiment of the carrier shown in FIG. 91 from different angles.
FIGS. 96 and 97 show perspective views of a carrier fixing mechanism according to a twenty-first embodiment of the present invention from different angles.
FIGS. 98 to 101 show perspective views of a carrier fixing mechanism according to a twenty-second embodiment of the present invention from different angles.
FIGS. 102 to 103 show perspective views of a carrier fixing mechanism according to a twenty-third embodiment of the present invention from different angles.
FIGS. 104 and 105 show perspective views of a variant embodiment of the carrier fixing mechanism shown in FIGS. 102 and 103 from different angles.
FIGS. 106 to 108 show a process of receiving a blocking member in a base.
FIGS. 109 and 110 show perspective views of another variant embodiment of the carrier fixing mechanism shown in FIGS. 102 and 103 from different angles.
FIGS. 111 and 112 show perspective views of a variant embodiment of the carrier from different angles.
FIGS. 113 to 115 show perspective views illustrating a carrier used as a stroller according to a twenty-fourth embodiment of the present invention from different angles, illustrating that supporting leg device of the carrier is in an unfolded state.
FIGS. 116 and 117 show perspective views illustrating the carrier with the supporting leg device being in a stored state from different angles.
FIGS. 118 and 119 show perspective views illustrating that the carrier shown in FIGS. 116 and 117 is mounted to a base from different angles.

### DETAILED DESCRIPTION

In order to make the objectives, features, and advantages of the present invention more apparent and understandable, the embodiment of the present invention will be explained in detail below in conjunction with the accompanying drawings.

It should be understood that, although the terms "first", "second" etc., may be used herein to describe various elements, they do not imply any order, quantity, or importance, but merely used to distinguish between different components. These terms are only used to distinguish one element from another. For example, without departing from the scope of the present invention, a first element may be referred to as a second element, and similarly, a second element may be referred to as a first element. Terms such as "including" or "containing" mean that the component or object present before the term includes the component or object listed after the term and its equivalent, and does not exclude other components or objects. In addition, in the specification of the present invention, the term "a" or "an" may include one or more items, unless otherwise specified.

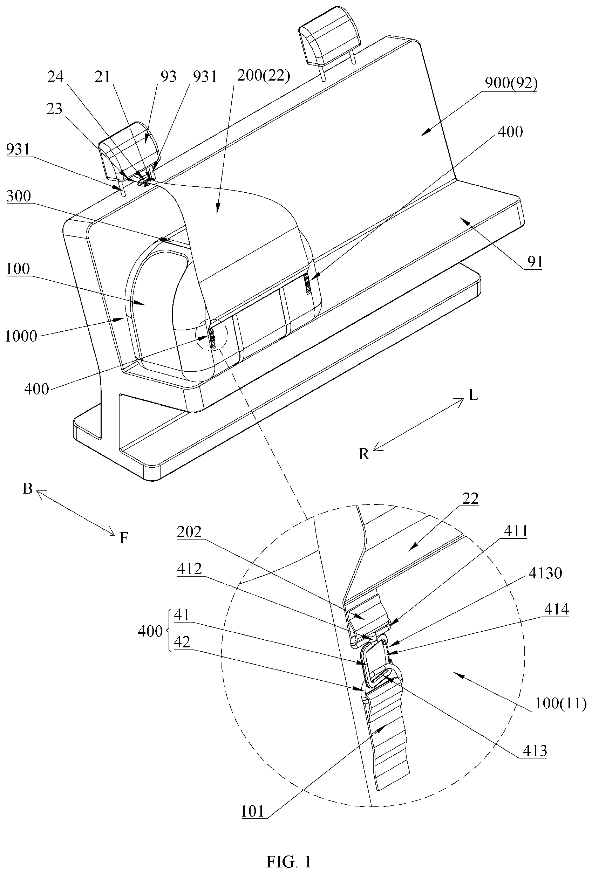

For ease of understanding, in FIGS. 1 to 18, arrow *F* indicates a forward direction, arrow *B* indicates a backward direction, arrow *L* indicates a left direction, and arrow *R* indicates a right direction. These orientational terms are only used to make the description of various embodiments of the invention clearer, and are not used to unduly limit the scope of the invention.

### First Embodiment

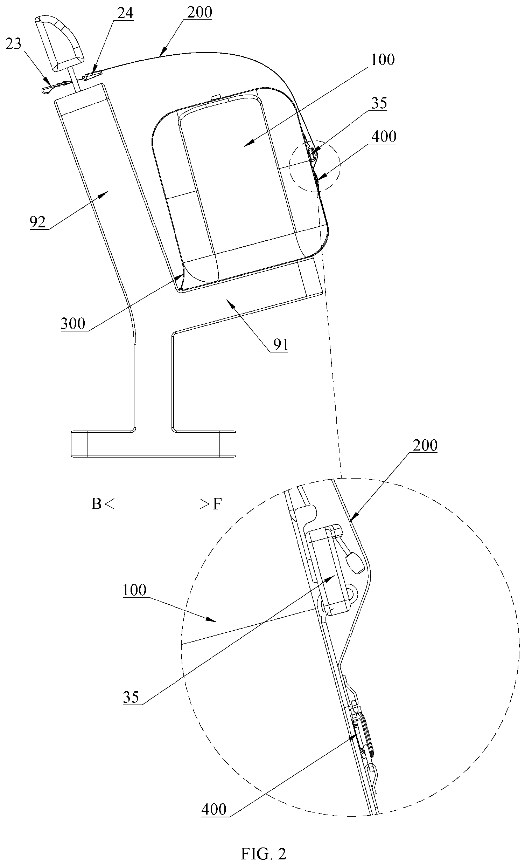

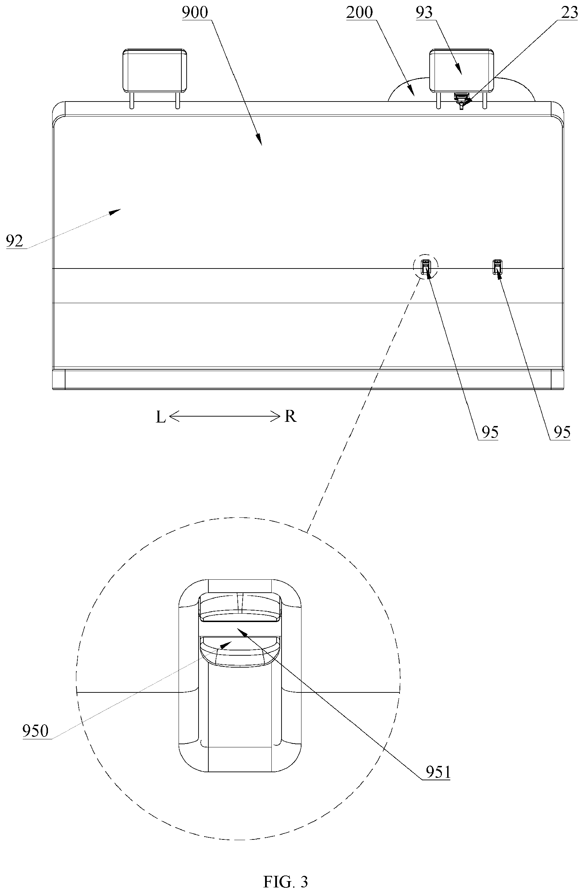

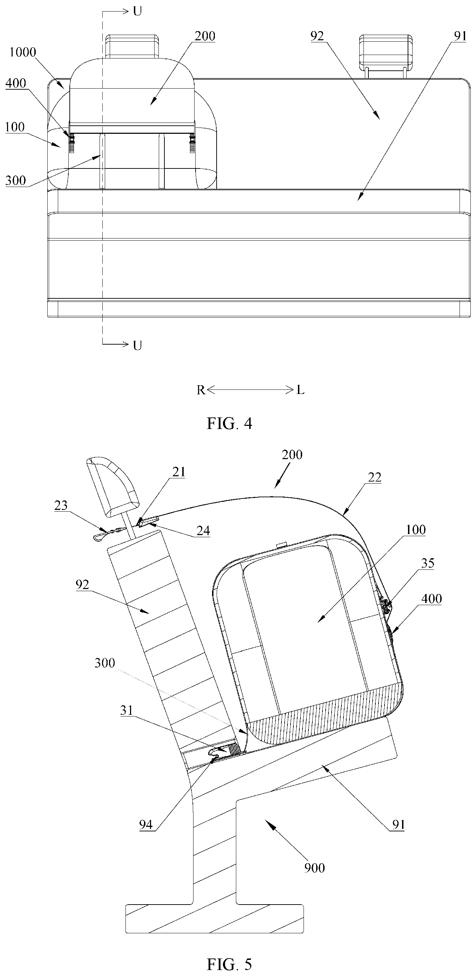

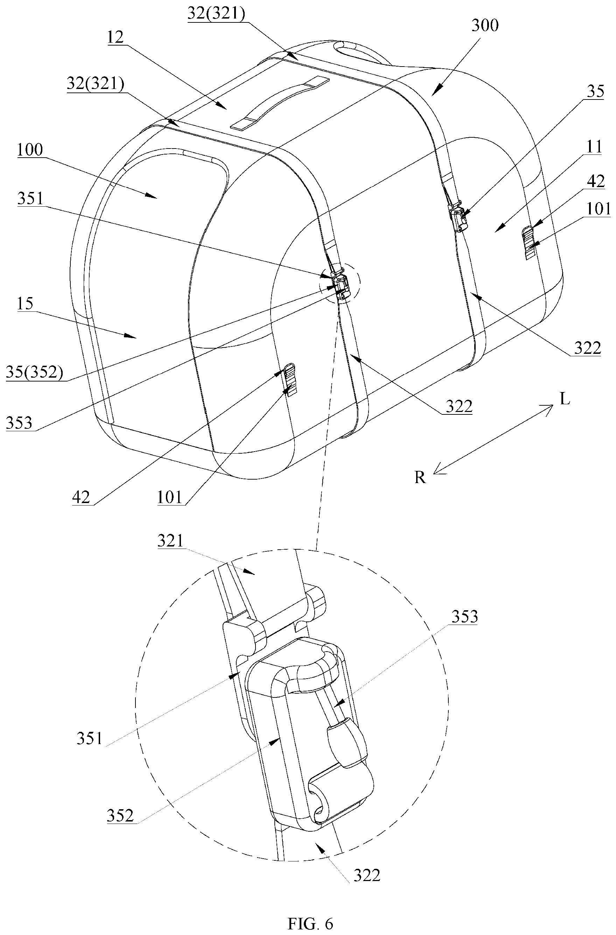

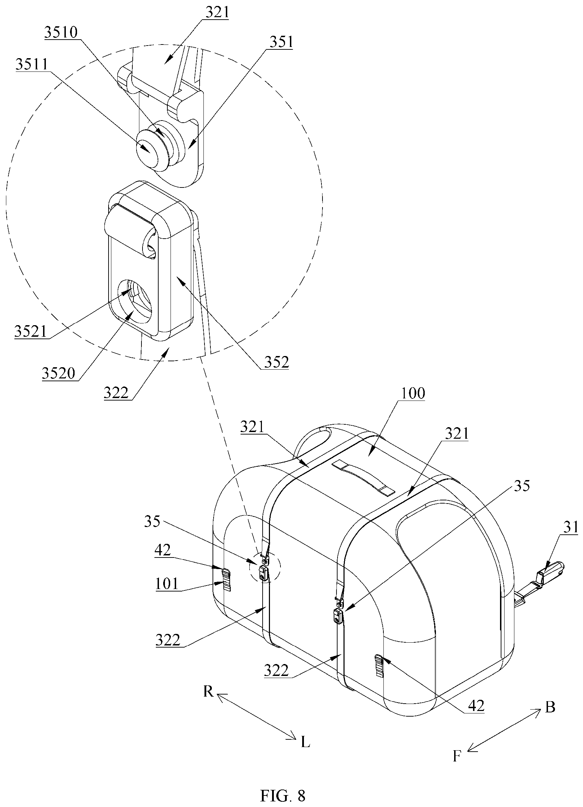

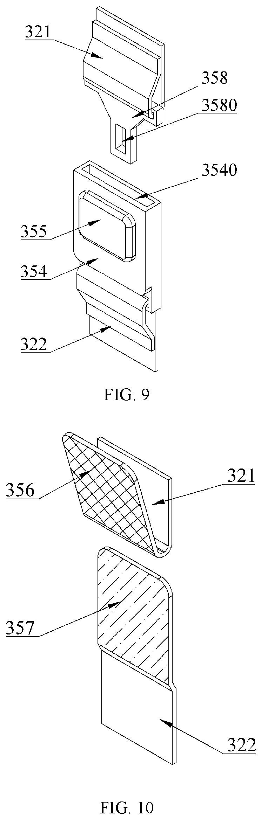

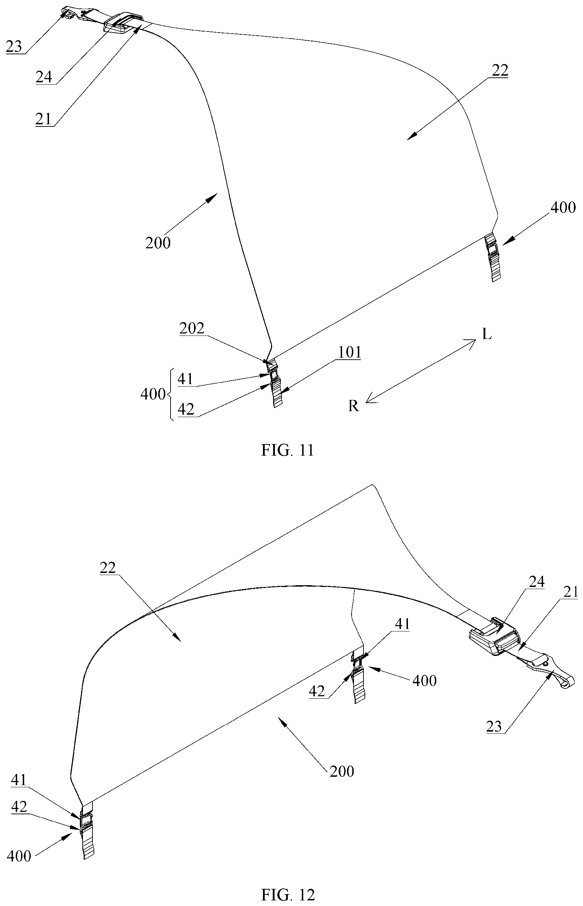

FIG. 1 shows a perspective view illustrating a carrier fixing mechanism 1000 mounted to a seat 900 according to a first embodiment of the present invention. FIG. 2 shows a side view of the carrier fixing mechanism 1000 and the seat 900 in FIG. 1. FIG. 3 shows a rear view of the carrier fixing mechanism 1000 and the seat 900 in FIG. 1. FIG. 4 shows a front view of the carrier fixing mechanism 1000 and the seat 900 in FIG. 1. FIG. 5 shows a cross-sectional view taken along the line U-U in FIG. 4. FIGS. 6 to 8 show perspective views of the carrier 100 and the LATCH structure 300 in FIG. 1 from different angles. FIGS. 9 and 10 show variant implementations of the connecting assembly 35 in FIG. 8, respectively. FIGS. 11 and 12 show perspective views of the top tether 200 in FIG. 1 from different angles.

Referring to FIG. 1, the carrier fixing mechanism 1000 may include a carrier 100, a top tether 200, and a LATCH structure 300. The seat 900 is, for example, a vehicle seat, including a seat cushion 91, a backrest 92, and a headrest 93. In some embodiments, the headrest 93 has an insertion pole 931 that is inserted into the backrest 92 from the top of the backrest 92.

The carrier 100 may be, for example, but not limited to, an infant carrier (e.g., infant basket), or a pet carrier (e.g., pet basket, pet case). In FIG. 1, the carrier 100 is specifically described by taking a pet case as an example, and the carrier 100 forms an accommodation space for accommodating a pet.

Referring to FIGS. 2, 4, and 5, in some embodiments, the LATCH structure 300 includes an insertion connector 31 that can be connected to a connection point on the seat 900, such as an ISOFIX structure 94. Thus, the carrier 100 is connected and fixed to the ISOFIX structure 94 of the seat 900 by the LATCH structure 300. The connection between the LATCH structure 300 and the ISOFIX structure 94 can prevent the carrier 100 from falling from the seat 900 in the event of emergency braking. In some embodiments, the LATCH structure 300 may be detachably connected to the carrier 100. In some embodiments, for example, the LATCH structure is non-detachably connected to the carrier 100.

Referring to FIGS. 6 to 8, an exemplary implementation of the LATCH structure 300 is shown in this embodiment. The LATCH structure 300 is detachably connected to the carrier 100. Specifically, the LATCH structure 300 includes a webbing 32 connected to the insertion connector 31, the webbing 32 being detachably fitted on the carrier 100 so that the LATCH structure 300 can be separated from the carrier 100.

Continuing to refer to FIGS. 6 to 8, the webbing 32 may include a first webbing section 321 and a second webbing section 322 to facilitate the fitting of the webbing 32 with the carrier 100. A first end of the first webbing section 321 is connected to a first end of the second webbing section 322, and the first end of the first webbing section 321 and the first end of the second webbing section 322 are directly or indirectly connected to the insertion connector 31. A second end of the first webbing section 321 is detachably connected to a second end of the second webbing section 322, so that the first webbing section 321 and the second webbing section 322 define an annular structure (not marked in the figures) fitted on the carrier 100. When the second end of the first webbing section 321 and the second end of the second webbing section 322 are separated, the annular structure is opened, and the carrier 100 and the LATCH structure 300 can be easily separated.

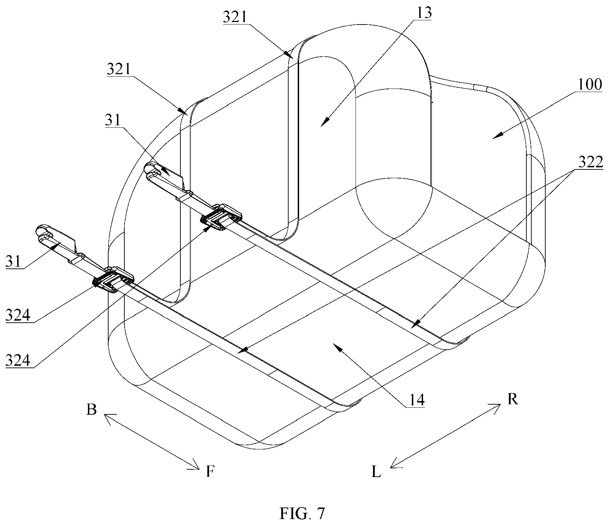

Referring to FIG. 7, in some embodiments, at least one of the first webbing section 321 or the second webbing section 322 may be provided with an adjuster 324. Alternatively, in some embodiments, the first end of the first webbing section 321 is connected to the second webbing section 322 through the adjuster 324, and the first end of the second webbing section 322 is connected to the insertion connector 31. By providing the adjuster 324, the length of the first webbing section 321 and/or the second webbing section 322 can be changed to adjust the size of the annular structure defined by the first webbing section 321 and the second webbing section 322, so that the annular structure can be adapted to the carrier 100 of different sizes.

Referring to FIGS. 6 and 8, in some embodiments, the second end of the first webbing section 321 is detachably connected to the second end of the second webbing section 322 by a connecting assembly 35. In some embodiments, the connecting assembly 35 is, for example, a magnetic buckle mechanism. More specifically, the magnetic buckle mechanism includes, for example, a first connecting element 351 and a second connecting element 352. The first connecting element 351 is, for example, a male buckle, and the second connecting element 352 is, for example, a female buckle. The first connecting element 351 is connected to one of the first webbing section 321 and the second webbing section 322, and the second connecting element 352 is connected to another one of the first webbing section 321 and the second webbing section 322. The first connecting element 351 has a convex structure 3511, and the second connecting element 352 has a cavity 3520 for coupling with the convex structure 3511 of the first connecting element 351. A groove 3510 is formed on the convex structure 3511, and the second connecting element 352 further includes a lock mechanism 3521 which can be engaged with the groove 3510 in the cavity 3520. The groove 3510 may be a partially annular or fully annular structure.

Continuing to refer to FIGS. 6 and 8, in some embodiments, the second connecting element 352 is further provided with a release member 353 operatively connected to the lock mechanism 3521. Specifically, the release member 353 may be a release tape. When the release member 353 is pulled, the lock mechanism 3521 is driven to disengage from the groove 3510 of the first connecting element 351, so that the first connecting element 351 and the second connecting element 352 can be further separated. In some embodiments, the lock mechanism 3521 may include a magnetic component, and the first connecting element 351 (for example, the convex structure 3511) may also be provided with a magnetic component, so that the firmness of locking between the first connecting element 351 and the second connecting element 352 can be further strengthened by mutual attraction of the magnetic components of the first connecting element 351 and the lock mechanism 3521.

Referring to FIGS. 6 and 7, when the first connecting element 351 and the second connecting element 352 of the magnetic buckle mechanism 35 are buckled, the webbing 32 surrounds the carrier 100, and the magnetic buckle mechanism 35 is located on a surface of the carrier 100 that is not blocked by the seat 900 (for example, a front surface 11 or a top surface 12 of the carrier 100). The first end of the first webbing section 321 extends, for example, from the top surface 12 to a back surface 13 of the carrier 100, and the first end of the second webbing section 322 extends, for example, from a bottom surface 14 to the back surface 13 of the carrier 100. Referring to FIG. 8, when the first connecting element 351 and the second connecting element 352 of the magnetic buckle mechanism 35 are separated, the carrier 100 and the LATCH structure 300 can be easily separated.

In some embodiments, the surface of the carrier 100 may also be provided with a guide structure for guiding the webbing 32. The guide structure includes, for example, a C-shaped opening groove formed on the surface of the carrier 100.

Of course, implementations of the connecting assembly 35 are not limited to the above examples, and any suitable detachable connection structure may be employed. FIGS. 9 and 10 show some variants of the connecting assembly 35.

In a variant implementation of the connecting assembly 35 shown in FIG. 9, the connecting assembly 35 includes a third connecting element 354 and a fourth connecting element 358. The fourth connecting element 358 is connected to one of the first webbing section 321 and the second webbing section 322, and the third connecting element 354 is connected to another one of the first webbing section 321 and the second webbing section 322. The fourth connecting element 358 is, for example, a male buckle, and the third connecting element 354 is, for example, a female buckle, and the male buckle can be inserted into the female buckle. A lock hole 3580 is formed on the fourth connecting element 358, an engagement chamber 3540 is formed in the third connecting element 354, and a locking member (not shown in the figures) is disposed in the engagement chamber 3540. When the fourth connecting element 358 and the third connecting element 354 are connected, the lock hole 3580 is located in the engagement chamber 3540 and engages with the locking member. The third connecting element 354 further includes a release member 355 operatively connected to the locking member. When the release member 355 is pressed, the locking member is driven out of the lock hole 3580, and the fourth connecting element 358 can be pulled out from the third connecting element 354.

In a variant embodiment of the connecting assembly 35 shown in FIG. 10, the connecting assembly 35 includes a fifth connecting element 356 and a sixth connecting element 357. The fifth connecting element 356 and the sixth connecting element 357 can be Velcro that cooperate with each other. The fifth connecting element 356 and the sixth connecting element 357 may be sewn to the first webbing section 321 and the second webbing section 322, respectively.

Referring again to FIG. 1, the top tether 200 is connected to the carrier 100 by at least one connecting assembly 400, and the top tether 200 is further provided with an anchoring member 23 that can be connected to an anchoring structure within the vehicle to further secure the carrier 100 to the seat 900.

Referring to FIG. 3, in some embodiments, an anchoring structure 95 is disposed on a back surface of the backrest 92. The anchoring structure 95 is configured to be detachably connected with the anchoring member 23. Referring to FIGS. 1 and 2, the anchoring member 23 extends rearward from a position above the backrest 92, and then is connected to the anchoring structure 95. In some embodiments, the anchoring member 23 may pass between the two insertion poles 931 of the headrest 93. In this way, when the vehicle is in emergency braking, the top tether 200 can effectively suppress a forward tipping trend of the carrier 100. Referring to FIG. 3, in some embodiments, the anchoring structure 95 may have, for example, a recess portion 950, and a connecting rod 951 is mounted in the recess portion 950. The anchoring member 23 may include, for example, a hook that may be hooked on the connecting rod 951. In some embodiments, the anchoring structure 95 may be located behind the seat 900, such as on a wall surface of the vehicle.

Of course, the anchoring member 23 and the anchoring structure 95 may also have any other suitable structure. For example, in some embodiments not shown, at least one of the two insertion poles 931 of the headrest 93 may be used as the anchoring structure, and the anchoring member 23 may be connected to the insertion pole 931. For example, the anchoring member 23 may be a lace that is tied to one or both of the insertion poles 931.

Referring again to FIG. 1, an exemplary embodiment of the connecting assembly 400 is shown. In some embodiments, the connecting assembly 400 includes a connector 41 and a positioner 42. The connector 41 is connected to the top tether 200, the positioner 42 is connected to the carrier 100, and the connector 41 is detachably connected to the positioner 42. In some embodiments, one of the connector 41 and the positioner 42 may be a connecting buckle, while the other may be a buckle ring, and the connecting buckle can be hooked to the buckle ring. In this embodiment, for example, the connector 41 is the connecting buckle, and the positioner 42 is the buckle ring. In some embodiments, the connecting buckle includes a connecting ring 411, a pivot shaft 412, a hook body 413, and a lock arm 414. The connecting ring 411 is connected to the webbing 202 that can be connected to the top tether 200. The hook body 413 is pivotally connected to the connecting ring 411 through the pivot shaft 412, and the hook body 413 is provided with a mounting opening 4130. The lock arm 414 is connected to the hook body 413, which allows to open or close the mounting opening 4130. The buckle ring is connected to the webbing 101 that can be connected to the carrier 100. The buckle ring may enter the hook body 413 through the mounting opening 4130 to hook the hook body 413.

It should be noted that the embodiment of the connecting assembly 400 is not limited to the above combination of the connecting buckle and buckle ring. For example, the connector 41 and the positioner 42 may adopt structures of any two cooperating connecting elements (for example, the first connecting element 351 and the second connecting element 352, the fourth connecting element 358 and the third connecting element 354, or the fifth connecting element 356 and the sixth connecting element 357) of the above-mentioned connecting assembly 35. Of course, any two cooperating connecting elements of the connecting assembly 35 may also adopt structures of the connector 41 and the positioner 42 of the connecting assembly 400 described above.

Referring to FIG. 1, in some embodiments, the top tether 200 is connected to the carrier 100 through two connecting assemblies 400. The two positioners 42 of the two connecting assemblies 400 are disposed on the front surface 11 of the carrier 100. In some embodiments, the two positioners 42 are located at the same height. Of course, in some alternative embodiments, the top tether 200 may be connected to the carrier 100 through one, three, or more connecting assemblies 400. The positioners 42 of one or more connecting assemblies 400 may be disposed, for example, on at least one surface selected from the front surface 11, the top surface 12, the back surface 13, the bottom surface 14, and two side surfaces 15 of the carrier 100.

Continuing to refer to FIG. 1, in some embodiments, two positioners 42 are located on the front surface 11 of the carrier 100 and arranged symmetrically left and right. In some embodiments, the two positioners 42 may be closer to the bottom surface of the carrier 100. A sheet portion 22 covers the carrier 100 (in particular, the front surface 11 of the carrier 100) with a sufficiently large area so that the carrier 100 is subjected to a more balanced pulling force applied by the top tether 200 in the left-right direction, thereby better preventing the carrier 100 from tipping forward.

When two or more connecting assemblies 400 are provided, the positioners 42 of these connecting assemblies 400 may be disposed at the same or different height on the carrier 100. In some embodiments, at least some positioners 42 are disposed at the same height on the carrier 100. In some embodiments, the positioners 42 at the same height are arranged symmetrically left and right.

Referring to FIGS. 11 and 12, an exemplary embodiment of the top tether 200 is shown. The top tether 200 may include a webbing portion 21 and a sheet portion 22. The webbing portion 21 extends from the sheet portion 22. The anchoring member 23 is connected to the webbing portion 21. The connector 41 is connected to the sheet portion 22. In some embodiments, the sheet portion 22 is generally formed as triangular. The webbing portion 21 extends from one corner of the sheet portion 22. Two connectors 41 are connected to the other two corners of the sheet portion 22. In some embodiments, in addition to the two connectors 41 shown in FIGS. 11 and 12, at least one connector 41 may be provided along at least one edge of the sheet portion 22, and a positioner 42 corresponding to the at least one connector 41 is correspondingly provided on the carrier 100.

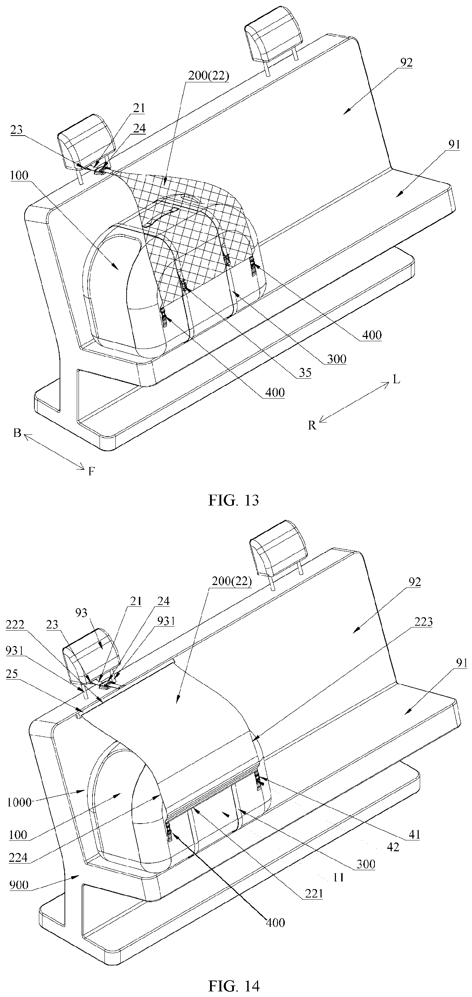

Referring to FIG. 1, in some embodiments, the sheet portion 22 may cover at least a portion of the area of the front surface 11 of the carrier 100. In some embodiments, the sheet portion 22 may be made of nylon fabric or other high strength fabric. Referring to FIG. 13, in some embodiments, the sheet portion 22 may be made of mesh fabric. In some embodiments, the sheet portion 22 may be made of a light-tight fabric.

Referring again to FIGS. 11 and 12, in some embodiments, an adjuster 24 may be disposed on the webbing portion 21. The adjuster 24 is configured to adjust the length of the webbing portion 21 to tension the top tether 200.

In some embodiments not shown, the top tether 200 may not include the sheet portion 22. For example, when the top tether 200 has only one connector 41, the connector 41 and the anchoring member 23 may be connected by the same webbing. In some embodiments not shown, when two or more connectors 41 are disposed on the top tether 200, the top tether 200 may include at least two branched webbings connected to the same webbing portion 21, and the ends of the branched webbings are connected to the corresponding connectors 41, respectively.

### Second Embodiment

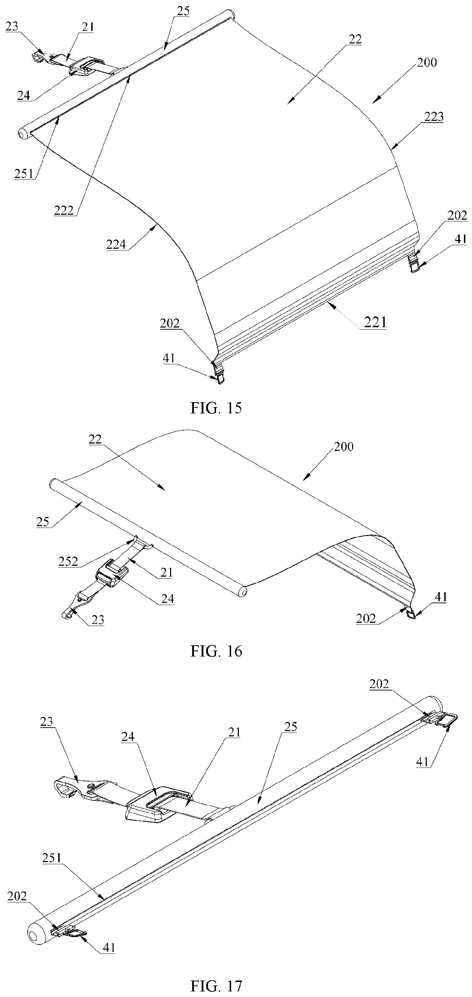

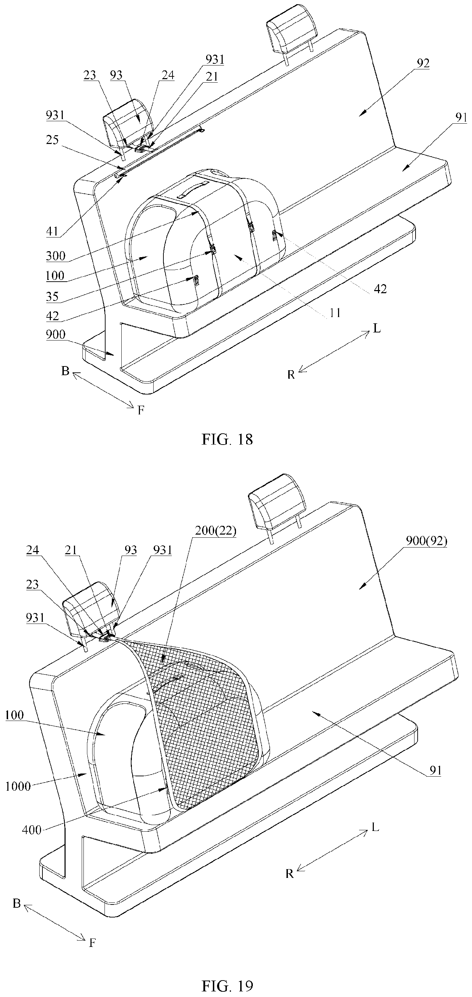

FIG. 14 shows a perspective view illustrating a carrier fixing mechanism 1000 mounted to a seat 900 according to a second embodiment of the present invention. FIGS. 15 and 16 show perspective views of the top tether 200 in FIG. 14 from different angles. FIG. 17 shows a perspective view of the top tether 200 shown in FIG. 15 in a stored state. FIG. 18 shows a perspective view illustrating that the carrier fixing mechanism 1000 is mounted on the seat 900 in FIG. 14, while the top tether 200 is separated from the carrier 100.

Compared with the first embodiment described above, this embodiment mainly modifies the structure of the top tether 200. In the case of no conflict, the structure of the carrier fixing mechanism 1000 in this embodiment can refer to descriptions of the first embodiment above.

Referring to FIGS. 14 to 16, in the present embodiment, the top tether 200 includes a webbing portion 21, a sheet portion 22, and a rod 25. A side edge 222 of the sheet portion 22 is connected to the rod 25, two connectors 41 are connected to another side edge 221, and the side edge 222 is opposed to the side edge 221. In some embodiments, the sheet portion 22 is quadrangular and two connectors 41 are respectively located at two ends of the side edge 221. A fixing portion 252 is disposed on the rod 25. An end of the webbing portion 21 is connected to the fixing portion 252, and the other end of the webbing portion 21 is connected to the anchoring member 23. An adjuster 24 may be disposed on the webbing portion 21 for adjusting the length of the webbing portion 21. In some embodiments, the fixing portion 252 may be a fixing ring connected to the rod 25.

Referring to FIG. 14, when the top tether 200 is connected to the positioner 42 of the carrier 100 through the connector 41 and connected to the anchoring structure 95 in the vehicle through the anchoring member 23, the rod 25 may abut against the backrest 92 or against the two insertion poles 931 of the headrest 93. In this way, the sheet portion 22 can be sufficiently expanded to cover a relatively large range of the carrier 100. In some embodiments, the rod 25 may be an elongated structure, which may be made of rubber, plastic, metal (e.g., iron), or other suitable material. Other suitable materials may be, for example, EPP materials or resilient wood or the like.

Continuing to refer to FIG. 14, in some embodiments, two positioners 42 are located on the front surface 11 of the carrier 100 and arranged symmetrically left and right. In some embodiments, the two positioners 42 may be closer to the bottom surface of the carrier 100. The sufficiently expanded sheet portion 22 covers the carrier 100 (in particular, the front surface 11 of the carrier 100) with a sufficiently large area, so that the carrier 100 is subjected to a more balanced pulling force applied by the top tether 200 in the left-right direction, thereby better preventing the carrier 100 from tipping forward.

Referring to FIGS. 15 to 17, in some embodiments, the rod 25 has a hollow structure (not shown in the figures) and an aperture 251 communicating with the hollow structure. An automatic reeling retractor (not shown in the figures) may be provided in the hollow structure, and in some embodiments, the automatic reeling retractor may include a reeling shaft and a reeling spring connected to the reeling shaft. The side edge 222 of the sheet portion 22 enters the hollow structure through the aperture 251 and is connected to the automatic reeling retractor. Referring to FIG. 18, when the top tether 200 needs to be removed from the seat 900, the connection relationship between the connector 41 and the fixer 42 can be released first, the reeling spring of the automatic reeling retractor can then drive the reeling shaft to rotate. When the reeling shaft rotates, the sheet portion 22 can be driven to be automatically wound on the reeling shaft, so that the sheet portion 22 can be stored in the hollow structure of the rod 25 and the top tether 200 is in the stored state. Then, the connection relationship between the anchoring member 23 and the anchoring structure 95 is released, and the top tether 200 can be easily removed.

In some alternative embodiments, the number of connectors 41 disposed on the side edge 221 of the sheet portion 22 is not limited to two. In some embodiments, three, four, or more connectors 41 may be disposed on side edge 221.

In some alternative embodiments, the rod 25 may not have the hollow structure for receiving the sheet portion 22. For example, the side edge 222 of the sheet portion 22 is sleeved on the rod 25. In this case, the connector 41 is not limited to be disposed on the side edge 221. In some embodiments, one or more connector 41 may also be disposed along the side edge 223 and/or the side edge 224 of the sheet portion 22.

It should be noted that, in some embodiments, the carrier fixing mechanism 1000 may only be configured with the top tether 200 without the LATCH structure 300. In some embodiments, the carrier fixing mechanism 1000 may only be configured with the LATCH structure 300 without the top tether 200.

### Third Embodiment

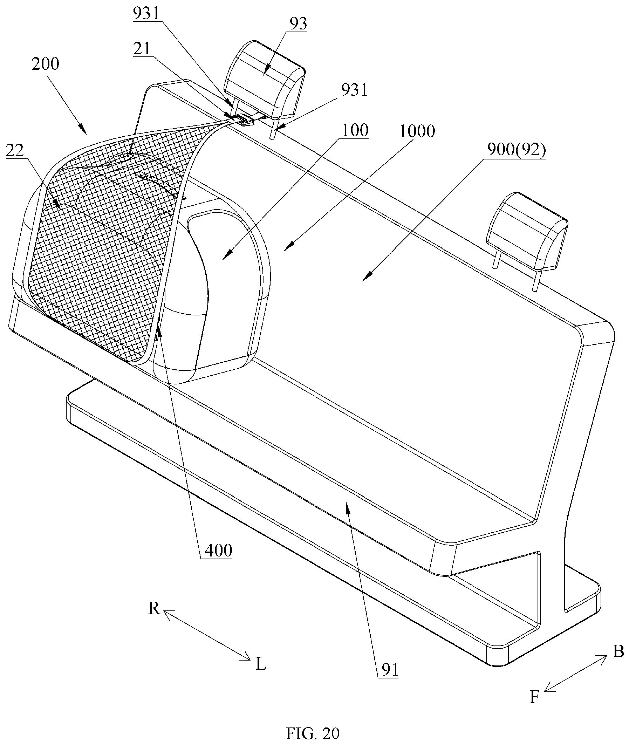

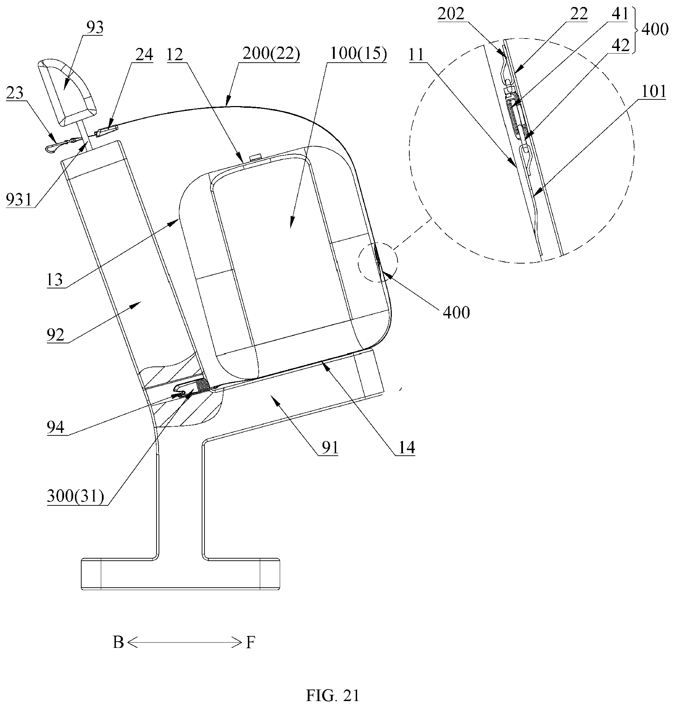

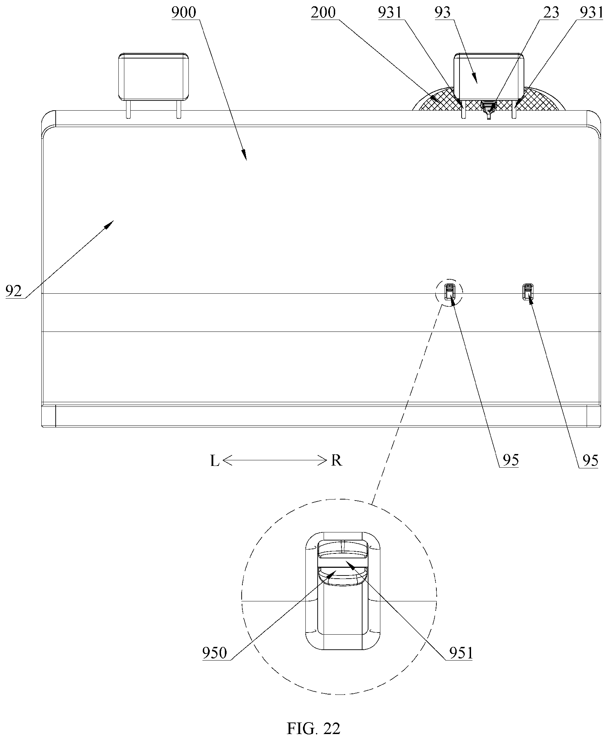

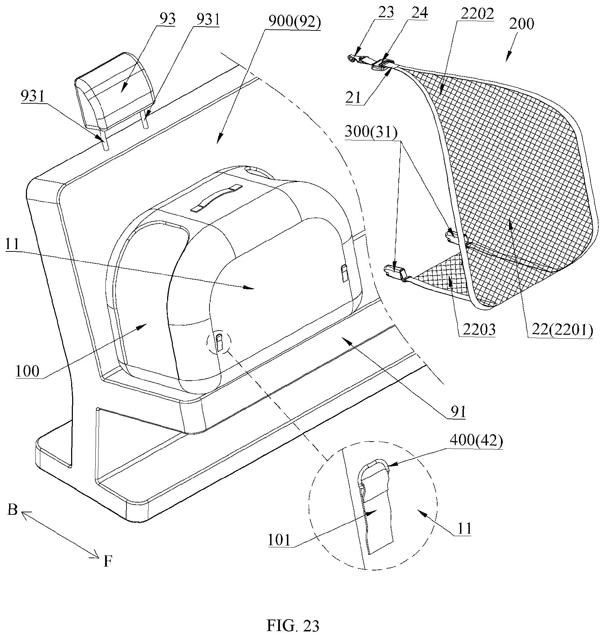

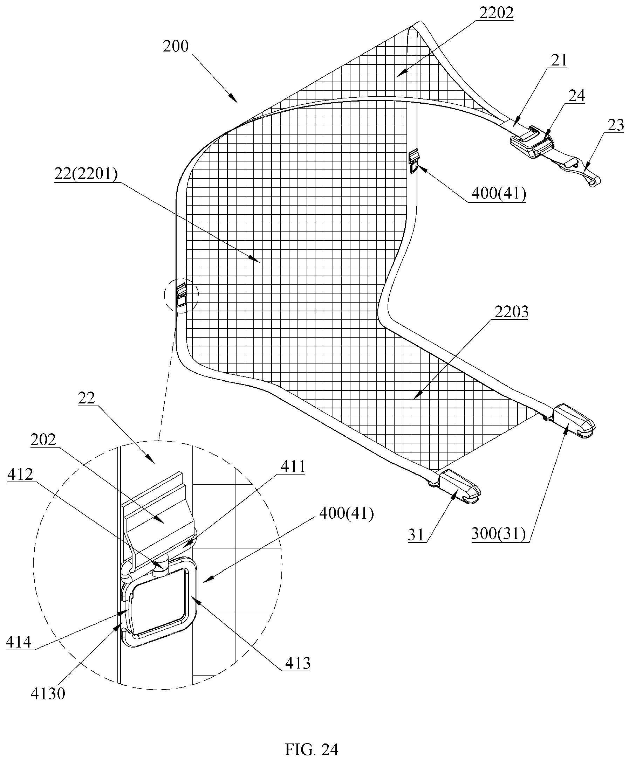

FIGS. 19 and 20 show perspective views illustrating a carrier fixing mechanism 1000 mounted to a seat 900 according to a third embodiment of the present invention from different angles. FIG. 21 shows a side view of the carrier fixing mechanism 1000 and the seat 900 in FIG. 19. FIG. 22 shows a rear view of the carrier fixing mechanism 1000 and the seat 900 in FIG. 19. FIG. 23 shows a perspective view of the carrier fixing mechanism 1000 and the seat 900 in FIG. 19 with the top tether 200 and the LATCH structure 300 removed from the seat 900 and the carrier 100 placed on the seat 900. FIG. 24 shows a perspective view of the top tether 200 and the LATCH structure 300 in FIG. 19.

Referring to FIGS. 19 to 23, the carrier fixing mechanism 1000 may include a carrier 100, a top tether 200, and a LATCH structure 300. The carrier 100 may be placed on the seat cushion 91 on the seat 900, and the top tether 200 and the LATCH structure 300 cooperate to secure the carrier 100 to the seat 900. In some embodiments, the top tether 200 and the LATCH structure 300 may be referred to as a carrier restraint structure.

The seat 900 is, for example, a vehicle seat, including a seat cushion 91, a backrest 92, and a headrest 93. In some embodiments, the headrest 93 has an insertion pole 931 that is inserted into the backrest 92 from the top of the backrest 92. Referring to FIG. 21, in some embodiments, the front surface of the seat 900 has a connection point for connecting with the LATCH structure 300. In some embodiments, the connection point is an ISOFIX structure 94 located between the front surface of the backrest 92 and the seat cushion 91. Referring to FIG. 22, in some embodiments, an anchoring structure 95 is disposed on the back surface of the seat 900. The anchoring structure 95 is configured to be connected with the top tether 200. In some embodiments, the anchoring structure 95 is disposed, for example, on the back surface of the backrest 92. In some embodiments, the anchoring structure 95 may be disposed outside of the seat 900. For example, the anchoring structure 95 is disposed on a wall surface of the vehicle compartment and may be located behind the seat 900.

The carrier 100 may be a pet carrier (e.g., pet basket, pet case). In this embodiment, the carrier 100 is specifically described by taking a pet case as an example, and the carrier 100 forms an accommodation space for accommodating a pet.

Referring to FIGS. 21 to 23, the top tether 200 is provided with an anchoring member 23 which can be detachably connected to the above-described anchoring structure 95. In particular, the anchoring member 23 extends rearward from a position above the backrest 92 and is then connected to the anchoring structure 95. In some embodiments, the anchoring member 23 may pass between the two insertion poles 931 of the headrest 93. In some embodiments, the anchoring member 23 may include, for example, a hook, The anchoring structure 95 may have, for example, a recess portion 950, and a connecting rod 951 is mounted in the recess portion 950. The hook of the anchoring member 23 may be hooked on the connecting rod 951. Of course, the structures of the anchoring structure 95 and the anchoring member 23 are not limited to the above examples. For example, in some embodiments not shown, at least one of the two insertion poles 931 of the headrest 93 may be used as an anchoring structure, and the anchoring member 23 may be connected to the insertion pole 931. For example, the anchoring member 23 may be a lace that can be tied to one or both of the insertion poles 931.

Referring to FIGS. 21, 23 and 24, the LATCH structure 300 is connected to the top tether 200. The top tether 200 may extend from the front to the back along the bottom of the carrier 100, and be detachably connected to the connection point on the seat 900 (more specifically, the ISOFIX structure 94) by the LATCH structure 300. Thus, the carrier 100 is restrained in the space defined by the top tether 200, the LATCH structure 300, and the backrest 92.

In some embodiments, the LATCH structure 300 includes at least one insertion connector 31 that can be detachably connected to the ISOFIX structure 94. In this embodiment, the LATCH structure 300 includes two insertion connectors 31 which are set to be spaced apart from each other on the left and right. Each insertion connector 31 can be directly or indirectly connected to the top tether 200. In some embodiments, the LATCH structure 300 is detachably connected to the top tether 200.

When the carrier 100 needs to be fixed to the seat 900, the LATCH structure 300 may be connected to the ISOFIX structure 94 of the seat 900 first, and then the carrier 100 may be placed on the seat cushion 91 (the top tether 200 has a portion between the carrier 100 and the seat cushion 91). After that, the anchoring member 23 is connected to the anchoring structure 95 after passing through between the two insertion poles 931, and the carrier 100 is thus restrained to the seat 900. In this way, when the vehicle is in emergency braking, the carrier 100 is difficult to fall from the seat 900, and the forward tipping trend of the carrier 100 can be effectively suppressed by the top tether 200.

Referring to FIGS. 19 to 21, in some embodiments, the top tether 200 may also be connected to the carrier 100 by at least one connecting assembly 400. In this way, the top tether 200 can apply pulling force directly to the carrier 100, thereby further preventing the carrier 100 from tipping forward. In addition, the connecting assembly 400 helps to limit the left and right movement of the carrier 100 relative to the seat 900.

Referring to FIGS. 23 and 24, an exemplary embodiment of the connecting assembly 400 is shown. The connecting assembly 400 includes a connector 41 and a positioner 42. The connector 41 is connected to the top tether 200, the positioner 42 is connected to the carrier 100, and the connector 41 is detachably connected to the positioner 42. In some embodiments, one of the connector 41 and the positioner 42 is a connecting buckle, while the other may be a buckle ring, and the connecting buckle can be hooked to the buckle ring. In this embodiment, for example, the connector 41 is the connecting buckle, and the positioner 42 is the buckle ring. In some embodiments, the connecting buckle includes a connecting ring 411, a pivot shaft 412, a hook body 413, and a lock arm 414. The connecting ring 411 is connected to the webbing 202, which can be connected to the top tether 200. The hook body 413 is pivotally connected to the connecting ring 411 through the pivot shaft 412, and the hook body 413 defines a mounting opening 4130. The lock arm 414 is connected to the hook body 413 and can open or close the mounting opening 4130. The buckle ring of the positioner 42 is connected to a connecting band 101, which can be connected to the carrier 100. The buckle ring may enter the hook body 413 through the mounting opening 4130 to hook the hook body 413.

It should be noted that the embodiment of the connecting assembly 400 is not limited to the combination of the above-mentioned connecting buckle and buckle ring, and any suitable detachable connection structure may be employed.

Referring to FIGS. 23 and 24, in some embodiments, the top tether 200 is connected to the carrier 100 by two connecting assemblies 400. The two positioners 42 of the two connecting assemblies 400 are, for example, disposed on the front surface 11 of the carrier 100. In some embodiments, the two positioners 42 are located at the same height. Of course, in some alternative embodiments, the top tether 200 may be connected to the carrier 100 through one, three, or more connecting assemblies 400. The positioners 42 of one or more connecting assemblies 400 may be disposed, for example, on at least one surface selected from the front surface 11, the top surface 12, the back surface 13, the bottom surface 14, and two side surfaces 15 (see FIG. 21) of the carrier 100.

In this embodiment, the number of connectors 41 corresponds one-to-one with the number of positioners 42. In some embodiments, the number and location of the connectors 41 and the positioners 42 may be set as needed. In some embodiments, the number of connectors 41 may not correspond one-to-one with the number of positioners 42. In this case, the connectors 41 and positioners 42 may be selectively connected.

When two or more connecting assemblies 400 are provided, the positioners 42 of these connecting assemblies 400 may be disposed at the same height on the carrier 100 or at different heights on the carrier 100. In some embodiments, at least some positioners 42 are disposed at the same height on the carrier 100. In some embodiments, the positioners 42 at the same height are arranged symmetrically left and right.

Referring to FIGS. 23 and 24, an exemplary embodiment of the top tether 200 is shown. The top tether 200 may include a webbing portion 21 and a sheet portion 22. The webbing portion 21 extends from the sheet portion 22. The anchoring member 23 is connected to the webbing portion 21. The LATCH structure 300 is connected to the sheet portion 22. The connector 41 of the connecting assembly 400 is connected to the sheet portion 22.

In some embodiments, an adjuster 24 may be disposed on the webbing portion 21. The adjuster 24 is configured to adjust the length of the webbing portion 21 to tension the top tether 200.

In some embodiments, the sheet portion 22, for example, has a non-uniform width, and the width direction of the sheet portion 22 is consistent with the left-right direction in FIG. 23. In some embodiments, the sheet portion 22 has a first portion 2201 covering the front surface 11 of the carrier 100. The first portion 2201 has, for example, a wider width, so that the carrier 100 is subjected to a more balanced pulling force applied by the top tether 200 in the left-right direction, thereby better preventing the carrier 100 from tipping forward. Referring to FIG. 24, in this embodiment, the two connectors 41 are connected to the two side edges on the first portion 2201, and correspond to the two positioners 42 one by one.

In some embodiments, the sheet portion 22 includes a second portion 2202 connected between the first portion 2201 and the webbing portion 21. The second portion 2202 may be generally formed as triangular, and the webbing portion 21 may be connected to a corner of the second portion 2202 away from the first portion 2201.

In some embodiments, the sheet portion 22 may further include a third portion 2203 between the bottom surface 14 of the carrier 100 and the seat cushion 91. The third portion 2203 is located between the first portion 2201 and the LATCH structure 300. In some embodiments, the third portion 2203 is, for example, generally rectangular. The two insertion connectors 31 of the LATCH structure 300 are connected to the two corners of the third portion 2203 away from the first portion 2201. In some embodiments, the width of the third portion 2203 is, for example, approximately equal to the distance between a pair of ISOFIX structures 94 of the seat 900.

In some embodiments, the sheet portion 22 may include a nylon fabric sheet or other high strength fabric sheet. Referring to FIG. 24, in some embodiments, the sheet portion 22 may include a mesh fabric sheet. In some embodiments, the fabric sheet of the sheet portion 22 may be made of a light-tight fabric.

In some embodiments not shown, the two insertion connectors 31 of the LATCH structure 300 may be connected to the sheet portion 22 by two connecting bands. In some embodiments not shown, adjusters are respectively disposed on the two connecting bands connecting the two insertion connectors 31 to the sheet portion 22, so that the lengths of the two connecting bands can be respectively adjusted. In some embodiments, the sheet portion 22 may not include the third portion 2203 described above when the two connecting bands have a sufficient length. For example, the two connecting bands respectively extend from the two corners of the first portion 2201 away from the second portion 2202. When the carrier 100 is restrained to the seat 900, the two connecting bands are set to be spaced apart from each other on the left and right and are located between the bottom surface 14 of the carrier 100 and the seat cushion 91.

In some embodiments, the sheet portion 22 may not include the second portion 2202 described above. The webbing portion 21 may be a Y-shaped connecting band, and the webbing portion 21 is directly connected to the first portion 2201.

In some embodiments not shown, the top tether 200 may not include the sheet portion 22. In some embodiments, the top tether 200 may include one connecting band. The anchoring member 23 is located at an end of such one connecting band, and the other end of such one connecting band is connected to one insertion connector 31 of the LATCH structure 300. In some embodiments, the connector 41 is connected to the middle portion of such one connecting band.

In some embodiments not shown, the top tether 200 may not include the sheet portion 22. The top tether 200 includes, for example, a Y-shaped connecting band. The Y-shaped connecting band includes, for example, a main connecting band and two branch connecting bands connected to the main connecting band. The anchoring member 23 is disposed on the main connecting band, and the ends of the branch connecting bands are respectively connected to the insertion connectors 31. In some embodiments, connectors 41 are respectively disposed on the branch connecting bands.

### Fourth Embodiment

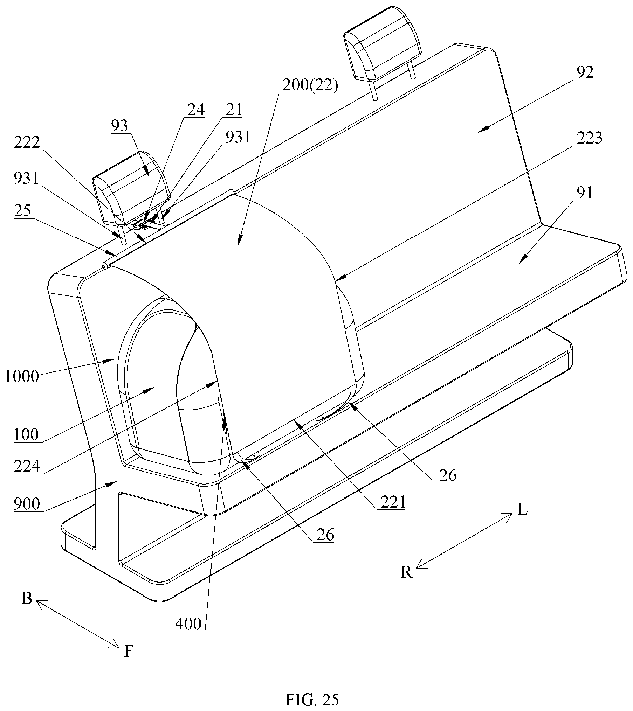

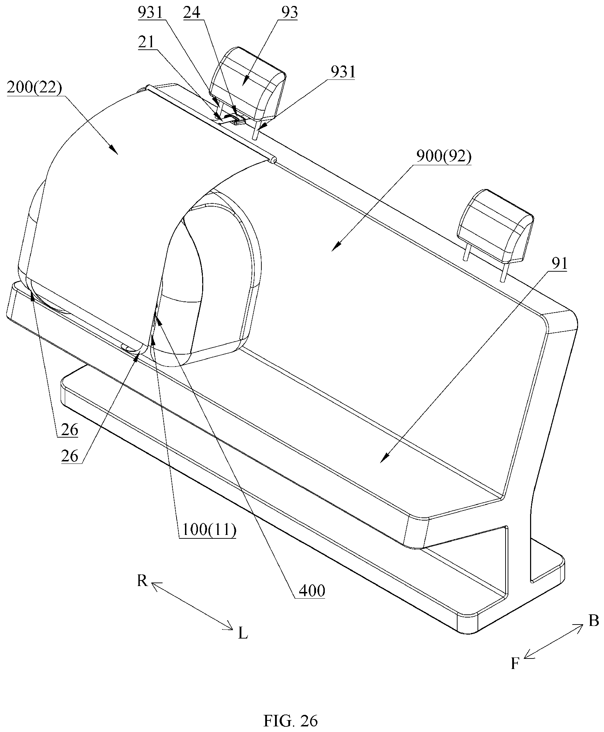

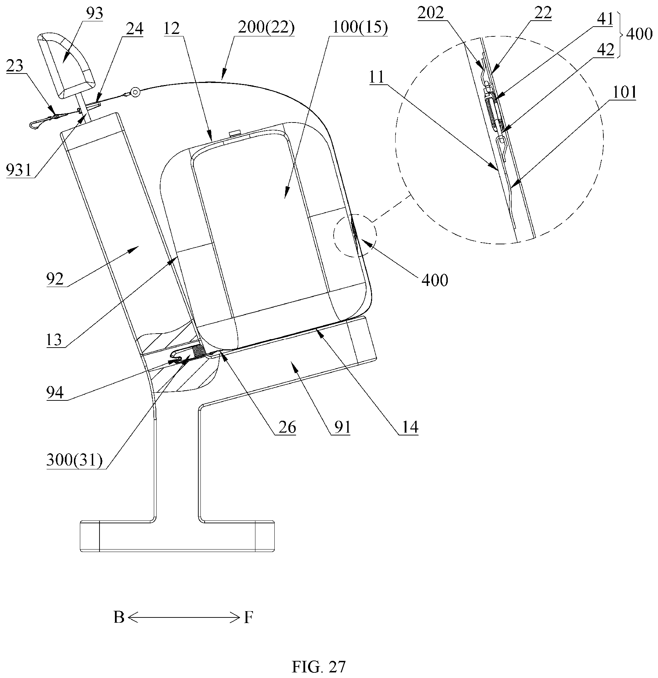

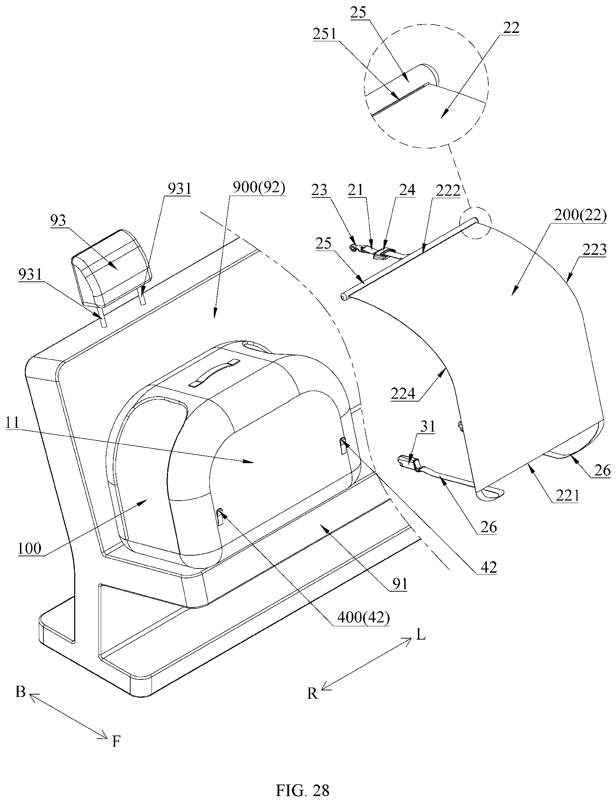

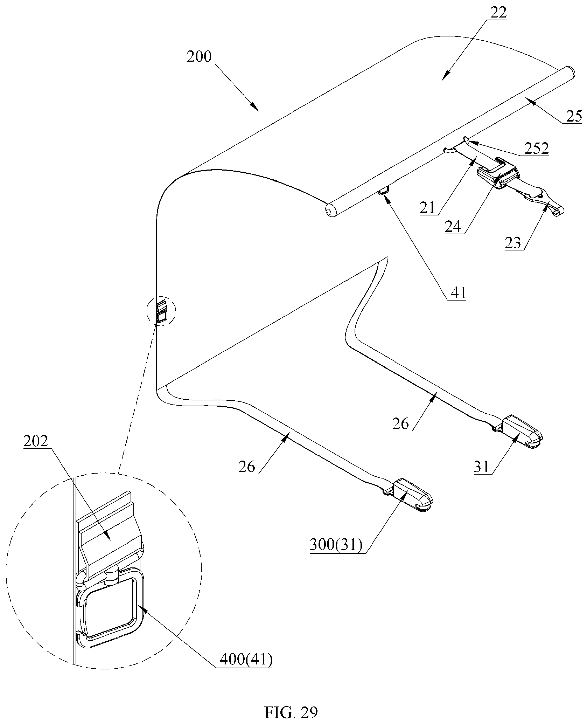

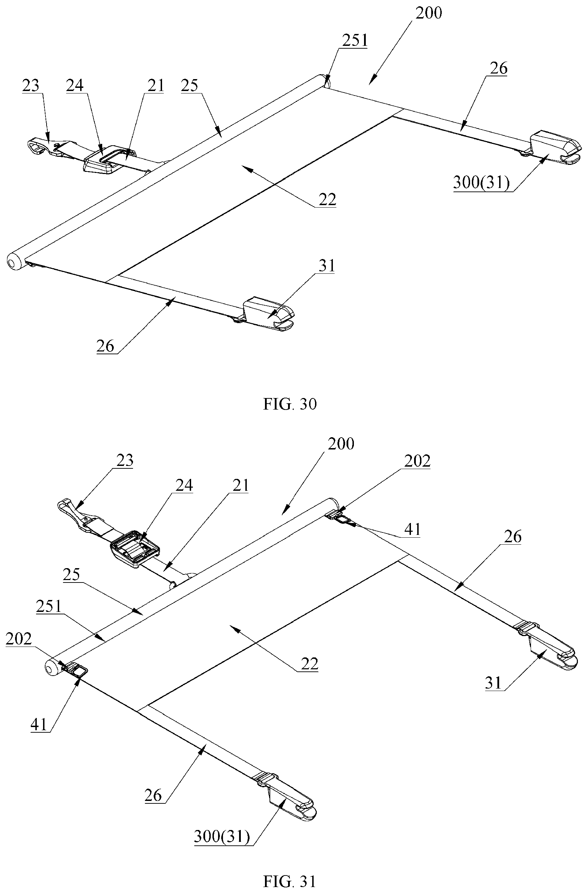

FIGS. 25 and 26 show perspective views illustrating a carrier fixing mechanism 1000 mounted to a seat 900 according to a fourth embodiment of the present invention from different angles. FIG. 27 shows a side view of the carrier fixing mechanism 1000 and the seat 900 in FIG. 25. FIG. 28 shows a perspective view of the carrier fixing mechanism 1000 and the seat 900 in FIG. 25, the top tether 200 and the LATCH structure 300 are removed from the seat 900, the carrier 100 is placed on the seat 900, and the top tether 200 is in the expanded state. FIG. 29 shows a perspective view of the top tether 200 and the LATCH structure 300 in FIG. 25 with the top tether 200 in the expanded state. FIGS. 30 and 31 show perspective views of the top tether 200 and the LATCH structure 300 in FIG. 29 from different angles with the top tether 200 in the stored state.

Compared with the third embodiment described above, this embodiment mainly modifies the structure of the top tether 200. In the case of no conflict, the structure of the carrier fixing mechanism 1000 in this embodiment can refer to the description of the first embodiment above.

Referring to FIGS. 27 to 29, the top tether 200 includes a webbing portion 21, a sheet portion 22, a rod 25, and at least one extension band 26.

The sheet portion 22 is, for example, quadrangular, and more specifically rectangular. A side edge 222 of the sheet portion 22 is connected to the rod 25. In some embodiments, the rod 25 may be an elongated structure, which may be made of rubber, plastic, metal (e.g., iron), or other suitable material. Other suitable materials may be, for example, EPP materials or resilient wood or the like. A fixing portion 252 is disposed on the rod 25. The fixing portion 252 is, for example, disposed in the middle of the rod 25. In some embodiments, the fixing portion 252 may be a fixing ring connected to the rod 25. An end of the webbing portion 21 is connected to the fixing portion 252, and the other end of the webbing portion 21 is connected to the anchoring member 23. In some embodiments, an adjuster 24 may be disposed on the webbing portion 21 for adjusting the length of the webbing portion 21.

In this embodiment, the top tether 200 includes two extension bands 26, which are set to be spaced apart from each other on the left and right. The two extension bands 26 are connected to another side edge 221 of the sheet portion 22, and the side edge 222 is opposed to the side edge 221. In some embodiments, the two extension bands 26 are located at both ends of the side edge 221. The LATCH structure 300 includes two insertion connectors 31 which are respectively connected to the two extension bands 26.

In some embodiments, each extension band 26 may be directly connected to the sheet portion 22. Alternatively, in some embodiments not shown, each extension band 26 may be indirectly connected to the sheet portion 22.

In some embodiments not shown, a rod may be disposed, for example, on the side edge 221 of the sheet portion 22. The rod has a length substantially equal to the length of the side edge 221, and the rod is configured to support the side edge 221. In some embodiments, the rod is capable of undergoing elastic deformation to a certain extent, so as to adapt to the undulation of the surface of the carrier 100. In some embodiments, one, two, or more annular members may be disposed at the side edge 221. One extension band 26 selectively passes through the one or more annular members, and two insertion connectors 31 are disposed at both ends of such one extension band 26.

Referring to FIGS. 25 to 27, in some embodiments, the top tether 200 is connected to the carrier 100 by at least one connecting assembly 400. The structure of each connecting assembly 400 may refer to the description of the third embodiment. For example, the connecting assembly 400 may include a connector 41 and a positioner 42.

Referring to FIG. 28, in some embodiments, two positioners 42 are located on the front surface 11 of the carrier 100 and arranged symmetrically left and right. The sheet portion 22 is provided with two connectors 41, and the two connectors 41 are disposed corresponding to the two positioners 42 one by one. As described for the third embodiment, in some embodiments, the number of connectors 41 may not correspond one-to-one with the number of positioners 42.

When the carrier 100 needs to be fixed to the seat 900, the LATCH structure 300 may be connected to the ISOFIX structure 94 of the seat 900 first, and then the carrier 100 may be placed on the seat cushion 91, and the extension band 26 of the top tether 200 is located between the carrier 100 and the seat cushion 91. Subsequently, each connector 41 is connected to the corresponding positioner 42. After that, the anchoring member 23 is connected to the anchoring structure 95 after passing through between the two insertion poles 931, and the carrier 100 is thus restrained to the seat 900.

In some embodiments, when the carrier fixing mechanism 1000 is in the usage state, the rod 25 may abut against the backrest 92 or against the two insertion poles 931 of the headrest 93. In some embodiments, the two positioners 42 may be closer to the bottom surface of the carrier 100. In this way, the sheet portion 22 may cover the carrier 100 (in particular, the front surface 11 of the carrier 100) with a sufficiently large area, so that the carrier 100 is subjected to a more balanced pulling force applied by the top tether 200 in the left-right direction, thereby better preventing the carrier 100 from tipping forward.

Referring to FIG. 28, in some embodiments, the rod 25 has a hollow structure (not shown in the figures) and an aperture 251 communicating with the hollow structure. An automatic reeling retractor (not shown in the figures) may be provided in the hollow structure, and in some embodiments, the automatic reeling retractor may include a reeling shaft and a reeling spring connected to the reeling shaft. The side edge 222 of the sheet portion 22 enters the hollow structure through the aperture 251 and is connected to the automatic reeling retractor. Referring to FIGS. 30 and 31, when there is no need to use the top tether 200 and LATCH structure 300, at least the sheet portion 22 located between the connector 41 and the rod 25 may be reeled into the hollow structure of the rod 25.

When the top tether 200 and the LATCH structure 300 need to be removed from the seat 900, the connection relationship between the anchoring member 23 and the anchoring structure 95 (see FIG. 22) can be released first, and the reeling spring of the automatic reeling retractor in the rod 25 can then drive the reeling shaft to rotate. When the reeling shaft rotates, the sheet portion 22 can be driven to be automatically wound on the reeling shaft, so that the sheet portion 22 can be stored in the hollow structure of the rod 25 and the top tether 200 is in the stored state. After that, the connection relationship between the connector 41 and the fixer 42 is released, the carrier 100 is removed, and finally, the connection relationship between the insertion connector 31 and the ISOFIX structure 94 is released.

In some alternative embodiments, the rod 25 may not have the hollow structure for receiving the sheet portion 22. For example, the side edge 222 of the sheet portion 22 is sleeved on the rod 25.

In some embodiments, the top tether 200 may not be provided with the connector 41 and the corresponding connecting band 202, which allows the sheet portion 22 to be substantially completely received within the hollow structure of the rod 25. In some embodiments, each extension band 26 may also be received within the hollow structure of the rod 25.

### Fifth Embodiment

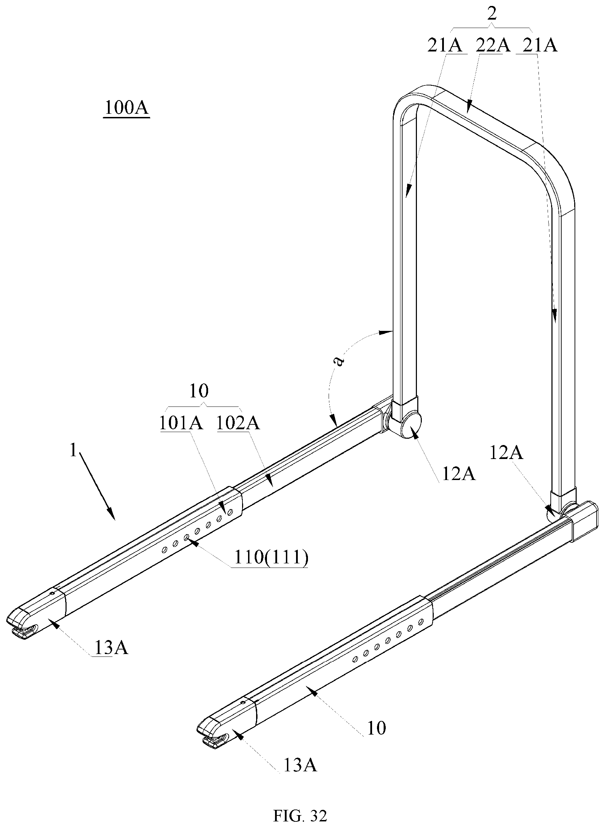

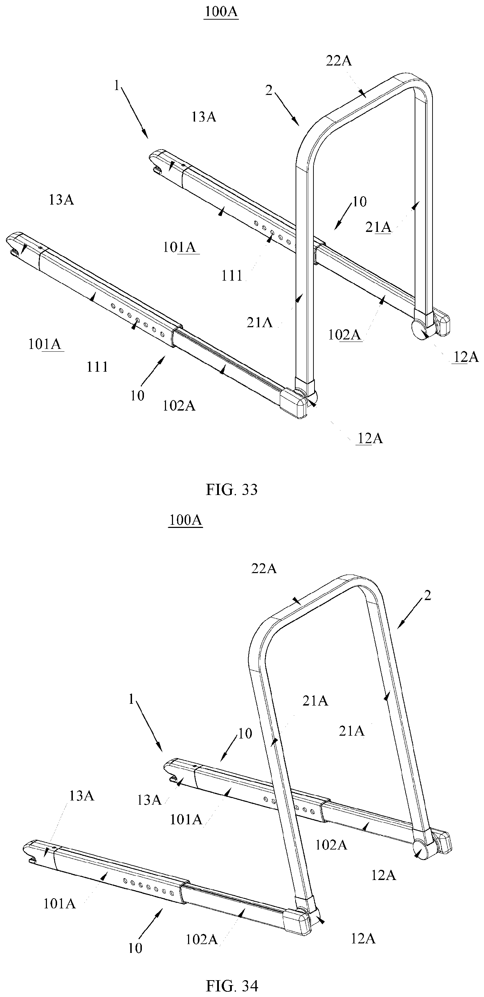

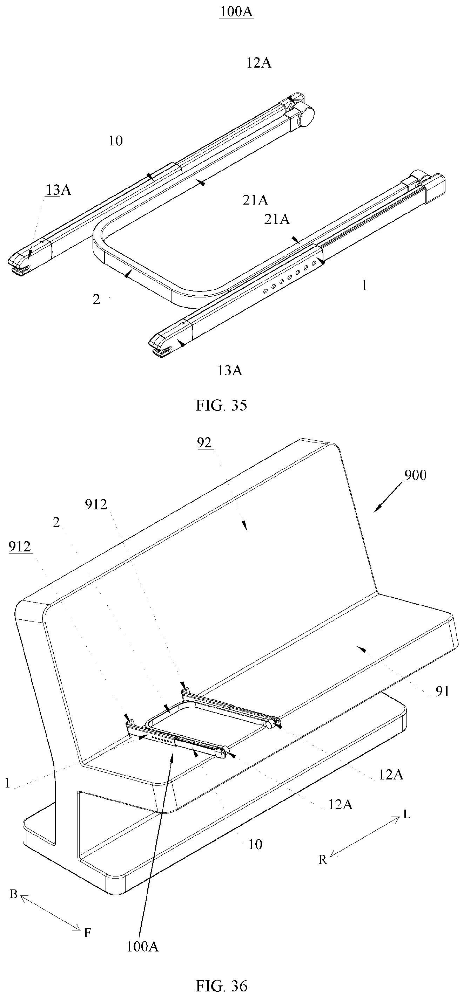

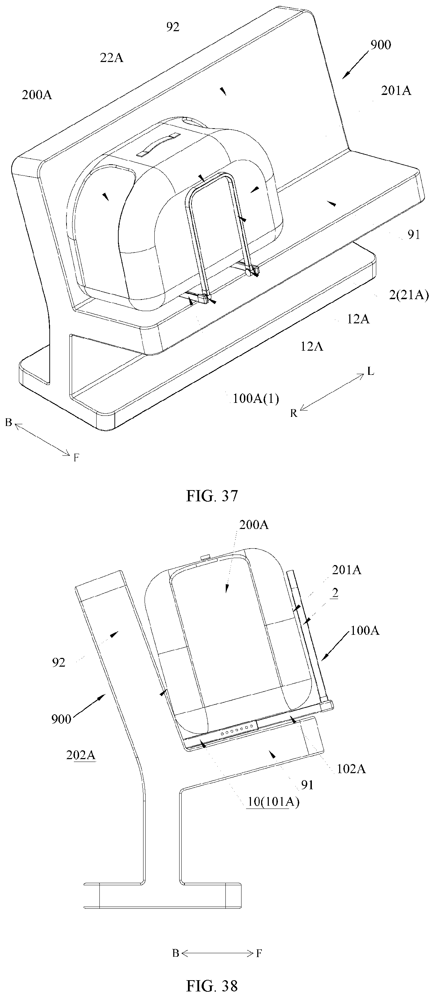

FIGS. 32 and 33 show perspective views illustrating a carrier fixing device 100A in an expanded state according to a fifth embodiment of the present invention from different angles. FIG. 34 shows a perspective view of the carrier fixing device 100A in another expanded state. FIG. 35 shows a perspective view of the carrier fixing device 100A in a folded state. FIG. 36 shows a perspective view illustrating the carrier fixing device 100A mounted to a vehicle seat 900, and the carrier fixing device 100A is in the folded state. FIG. 37 shows a perspective view illustrating a carrier 200A mounted to the vehicle seat 900 by the carrier fixing device 100A, and the carrier fixing device 100A is in the expanded state. FIG. 38 shows a side view of the carrier fixing device 100A, the carrier 200A and the vehicle seat 900 shown in FIG. 37.

For ease of understanding, in the drawings related to this embodiment, arrow *F* indicates a forward direction, arrow *B* indicates a backward direction, arrow *L* indicates a left direction, and arrow *R* indicates a right direction. These orientational terms are only used to make the description of various embodiments of the invention clearer, and are not used to unduly limit the scope of the invention.

Referring to FIGS. 32 to 35, the carrier fixing device 100A includes a pedestal 1 and a blocking member 2. A LATCH structure 13A is disposed on an end of the pedestal 1. The LATCH structure 13A can be connected to the vehicle seat 900, and more specifically, can be connected to an ISOFIX structure 912 (see FIG. 36). The other end of the pedestal 1 is pivotally connected to the blocking member 2 by a pivoting portion 12A. The blocking member 2 can pivot relative to the pedestal 1 about the pivoting portion 12A, so that the carrier fixing device 100A is switched to the usage state or the folded state.

Referring to FIGS. 32 to 34, in the usage state, the blocking member 2 is rotated with respect to the pedestal 1 so that the carrier fixing device 100A is expanded, and the blocking member 2 extends upward with respect to the pedestal 1. In some embodiments, when the carrier fixing device 100A is in the usage state, an included angle *a* formed between the blocking member 2 and the pedestal 1 is about 90 degrees. In some embodiments, when the carrier fixing device 100A is in the usage state, the included angle *a* may be between 90 degrees and 180 degrees. In some embodiments, when the carrier fixing device 100A is in the usage state, the included angle *a* may be less than 90 degrees.

Referring to FIG. 35, in some embodiments, when the carrier fixing device 100A is in the folded state, the blocking member 2 is pivoted to a position substantially parallel to the pedestal 1. In this state, the carrier fixing device 100A is small in volume, making it easy to store. In some embodiments, when the carrier fixing device 100A is in the folded state, the blocking member 2 may be interfered by other structures and cannot be parallel to the pedestal 1, and the blocking member 2 still forms an included angle *a* greater than 0 degree with the pedestal 1. Such folded state is also within the protection scope of this embodiment.

In some embodiments, the pivoting portion 12A has a rotation locking mechanism (not shown in the figures). The rotation locking mechanism can lock the relative positions of the blocking member 2 and the pedestal 1, so that the carrier fixing device 100A remains in the folded state or a certain expanded state. In some embodiments, the rotation locking mechanism may have a locked state and an unlocked state. When the rotation locking mechanism is in the locked state, the blocking member 2 and pedestal 1 cannot rotate relative to each other. When the rotation locking mechanism is in the unlocked state, the blocking member 2 and pedestal 1 can rotate relative to each other.

Referring to FIGS. 36 to 38, when the carrier fixing device 100A is in usage, the pedestal 1 is supported on the seat cushion 91 of the vehicle seat 900, and the LATCH structure 13A is connected to the ISOFIX structure 912 of the vehicle seat 900, After the blocking member 2 pivots to an appropriate position in the direction away from the backrest 92 of the vehicle seat 900, the carrier 200A may be placed on the pedestal 1, so that the carrier 200A is located between the blocking member 2 and the backrest 92. The carrier fixing device 100A positions the carrier 200A between the backrest 92 and the blocking member 2, so as to prevent the carrier 200A from sliding back and forth on the vehicle seat 900.

In some embodiments, the blocking member 2 may be pivoted to a relatively large angle with respect to the pedestal 1 before placing the carrier 200A on the pedestal 1 to facilitate placing the carrier 200A. After placing the carrier 200A on the pedestal 1, the carrier 200A can be held between the backrest 92 and the blocking member 2 by rotating the blocking member 2. When holding the carrier 200A, a front side 201A of the carrier 200A abuts against the blocking member 2, and a rear side 202A of the carrier 200A abuts against the backrest 92.

Referring to FIGS. 32 and 33, in some embodiments, the pedestal 1 has a telescopic structure, such that the length of the pedestal 1 in the front-rear direction can be adjusted. In this way, before placing the carrier 200A on the pedestal 1, the length of the pedestal 1 can be extended to facilitate placing the carrier 200A. After placing the carrier 200A on the pedestal 1, the carrier 200A can be held between the backrest 92 and the blocking member 2 by shortening the length of the pedestal 1.

The carrier 200A may be, for example, but not limited to, a pet carrier (e.g., pet basket, pet case). In this embodiment, the carrier 200A is specifically described by taking a pet case as an example, and the carrier 200A forms an accommodation space (not marked in the figures) for accommodating a pet. It can be understood that, when the carrier 200A is held between the backrest 92 and the blocking member 2, the carrier 200A is not excessively displaced in the front-rear direction if the vehicle is in emergency braking, thereby reducing the likelihood of causing harm to pets.

Referring again to FIGS. 32 and 33, an exemplary embodiment of the pedestal 1 and the blocking member 2 is shown in this embodiment. Specifically, the pedestal 1 includes two bar members 10, which are set to be spaced apart from each other on the left and right. In some embodiments, the two bar members 10 are parallel to each other. A LATCH structure 13A is disposed at an end of each bar member 10. The blocking member 2 is generally U-shaped. The U-shaped blocking member 2 includes a bar member 22A, and two bar members 21A which are set to be spaced apart from each other on the left and right. An end of each bar member 21A is pivotally connected to the other end of each bar member 10 by a pivoting portion 12A. The other ends of the two bar members 21A are connected together through the bar member 22A. In some embodiments, the bar members 10, the bar members 21A, and the bar member 22A may be made of a hollow tube. In some embodiments, when the carrier fixing device 100A is in the folded state, the blocking member 2 is located between the two bar members 10, and the bar members 21A and the bar members 10 are substantially parallel.

Continuing to refer to FIGS. 32 and 33, in some embodiments, the bar member 10 may include at least two tube units sleeved together, which are able to move with respect to each other such that the length of the pedestal 1 may be adjusted. The relative positions of the plurality of tube units of the bar member 10 may be locked by the position locking mechanism 110, so as to lock the length of the bar members 10. More specifically, when the position locking mechanism 110 is in the locked state, the plurality of tube units of the bar member 10 cannot be relatively telescoped or are difficult to be relatively telescoped, and the length of the bar member 10 is relatively fixed. When the position locking mechanism 110 is in the unlocked state, the plurality of tube units of the bar member 10 can be easily telescoped relative to each other, thereby allowing adjustment of the length of the bar member 10.

Specifically, in this embodiment, the bar member 10 includes a first tube unit 101A and a second tube unit 102A. An end of the first tube unit 101A is connected to the LATCH structure 13A, and the other section of the first tube unit 101A is sleeved on the outside of the second tube unit 102A. An end of the second tube unit 102A away from the first tube unit 101A is pivotally connected to the corresponding bar member 21A by the pivoting portion 12A. The position locking mechanism 110 has, for example, a plurality of holes 111 formed on the first tube unit 101A and a locking pin (not shown in the figures) disposed in the second tube unit 102A. When the position locking mechanism 110 is in the locked state, the locking pin is inserted into one of the plurality of holes 111, so that the first tube unit 101A and the second tube unit 102A cannot slide relative to each other. When the position locking mechanism 110 is in the unlocked state, the locking pin is withdrawn from the hole 111, and the first tube unit 101A and the second tube unit 102A can slide relative to each other to adjust the length of the bar member 10.

Of course, the pedestal 1 may also have other embodiments. The pedestal 1 only needs to have the LATCH structure 13A for connecting with a connection structure (e.g., ISOFIX structure 912) of the vehicle seat 900, and be connected to the blocking member 2 to define a space for accommodating the carrier 200A in cooperation with the blocking member 2. For example, in some embodiments, the two bar members 10 of the pedestal 1 may also be connected by at least one connecting element (not shown in the figures, it can be, for example, a connecting rod or a connecting plate), so that the pedestal 1 has a more stable structure. In some embodiments, the connecting element may be connected between the first tube units 101A of the two bar members 10. In some embodiments, the connecting element may be connected between the second tube units 102A of the two bar members 10. In some embodiments, the blocking member 2 may be fixedly connected to the pedestal 1 without being pivotable, which is also within the protection scope of the invention.

The blocking member 2 may also have other embodiments, and is not limited to the U-shaped structure described above. For example, in some embodiments, the blocking member 2 may be H-shaped or T-shaped. The blocking member 2 only needs to be connected to pedestal 1 and be able to limit the forward movement of carrier 200A.

In some embodiments, the carrier fixing device 100A may also be configured with a top tether (not shown in the figures). An end of the top tether may be connected to the blocking member 2 (e.g., to the bar member 22A). The other end of the top tether extends rearward from a position above the backrest 92 and then is connected to the anchoring structure in the vehicle.

### Sixth Embodiment

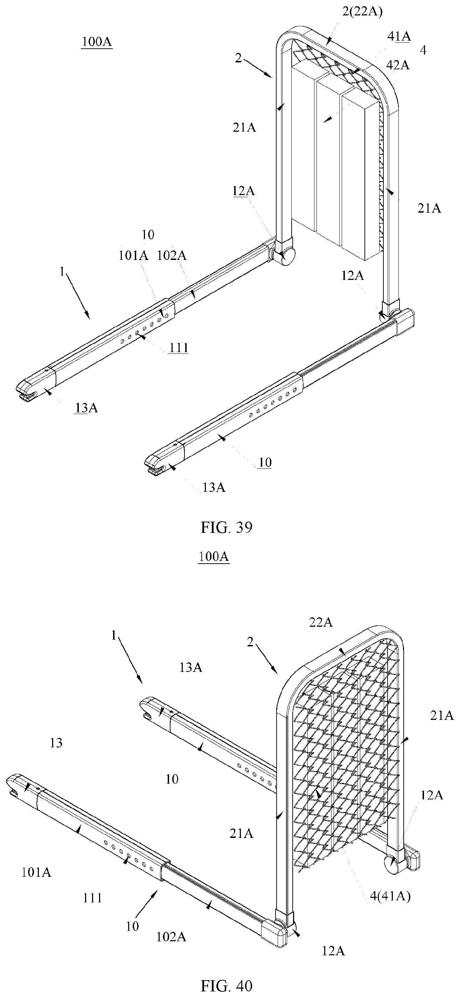

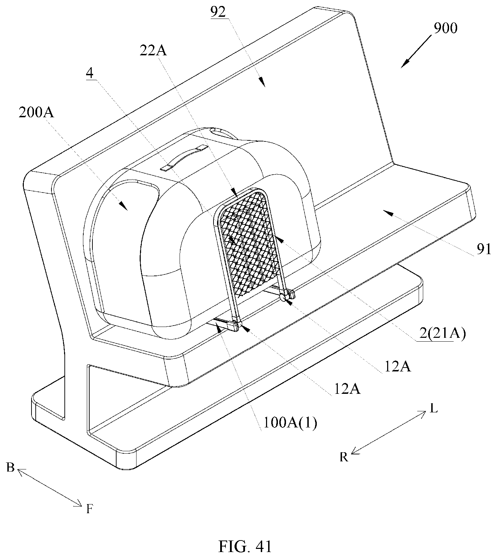

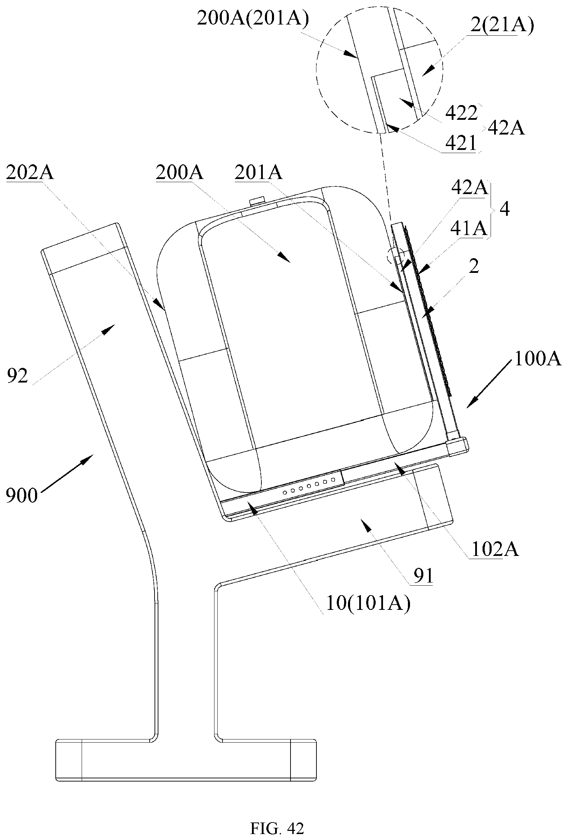

FIGS. 39 and 40 show perspective views illustrating a carrier fixing device 100A in an expanded state according to a sixth embodiment of the present invention from different angles. FIG. 41 shows a perspective view illustrating that a carrier 200A is mounted to the vehicle seat 900 by the carrier fixing device 100A, and the carrier fixing device 100A is in the expanded state. FIG. 42 shows a side view of the carrier fixing device 100A, the carrier 200A and the vehicle seat 900 shown in FIG. 41.

The carrier fixing device 100A provided in this embodiment is a variant of the carrier fixing device 100A provided in the fifth embodiment. In the case of no conflict, the structure of the carrier fixing device 100A according to the present embodiment may refer to the structure of the carrier fixing device 100A according to the fifth embodiment.

Referring to FIGS. 39 and 40, in some embodiments, the carrier fixing device 100A may also be configured with a shock absorbing structure 4. The shock absorbing structure 4 may be mounted on the pedestal 1 and/or the blocking member 2, and the carrier fixing device 100A abuts against the carrier 200A through the shock absorbing structure 4. In case of emergency braking of the vehicle, the shock absorbing structure 4 can cushion the impact force received by the carrier 200A, so as to avoid directly bumping on the bar members of the carrier fixing device 100A when the carrier 200A is impacted, thus avoiding injury to the pet in the carrier 200A. As can be seen from FIG. 42, for the shock absorbing structure 4 disposed on the blocking member 2, a side of the shock absorbing structure 4 facing the carrier 200A protrudes outwardly relative to the blocking member 2 (that is, protrudes in a direction toward the carrier 200A). When the vehicle is in emergency braking, the shock absorbing structure 4 abuts against the carrier 200A before the blocking member 2.

An exemplary embodiment of the shock absorbing structure 4 is shown in this embodiment. Specifically, the shock absorbing structure 4 includes a mesh structure 41A and at least one shock absorbing material 42A disposed on the mesh structure 41A. The mesh structure 41A may be a fabric mesh or a metal mesh. In some embodiments, the mesh structure 41A is connected simultaneously with the bar member 22A and the two bar members 21A. The shock absorbing material 42A faces the carrier 200A and is configured to abut against the carrier 200A. In some embodiments, a plurality of shock absorbing materials 42A are provided, and the plurality of shock absorbing materials 42A may be disposed on the mesh structure 41A in any suitable manner.

In some embodiments, the shock absorbing material 42A may have a single layer structure or a multi-layer structure. The shock absorbing material 42A of the single layer structure may include, but is not limited to, a foam material layer.

In some embodiments, the multi-layer structure of the shock absorbing material 42A includes multiple layers of materials. In some embodiments, the multiple layers of materials may be made of composite multiple layers of materials having shock absorbing property. Referring to FIG. 42, in some embodiments, in the multiple layers of materials of the shock absorbing material 42A, the material layer 421 close to the carrier 200A may be made of a material having a higher hardness but a smaller thickness, and the material layer 422 away from the carrier 200A may be made of a material having a lower hardness but a larger thickness. In this way, when the vehicle is in emergency braking, the carrier 200A directly bumps the material layer 421 with higher hardness. The impact force can be rapidly diffused along the material layer 421 with higher hardness rather than concentrated at the impact point. The impact force after diffusion can be uniformly applied to the material layer 422 with lower hardness, and is fully absorbed by the material layer 422 with lower hardness and a certain thickness. It can be understood that, although the shock absorbing material 42A is described above by taking two material layers 421 and 422 as an example, in practical application, the multi-layer structure of the shock absorbing material 42A may include more than two material layers.

Although the shock absorbing structure 4 disposed on the blocking member 2 is taken as an example for description above, it can be understood that any suitable shock absorbing structure may be disposed on the pedestal 1, and the details are not described herein.

### Seventh Embodiment

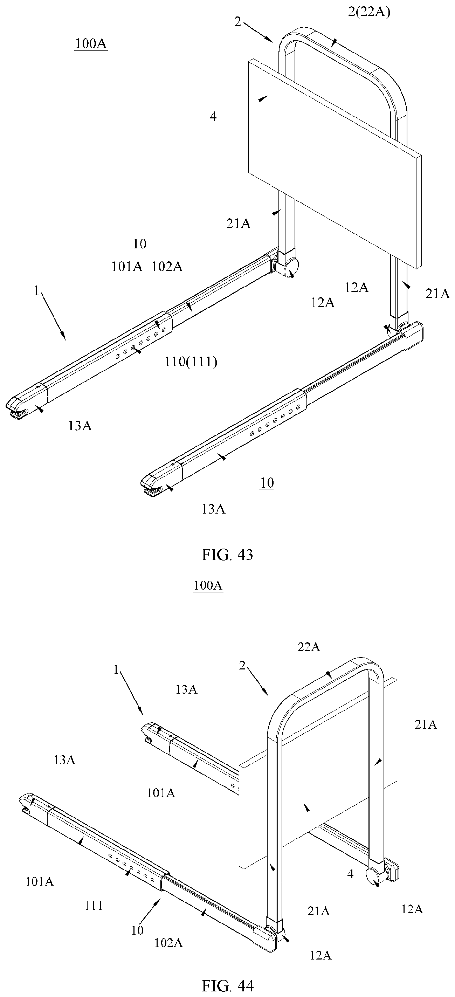

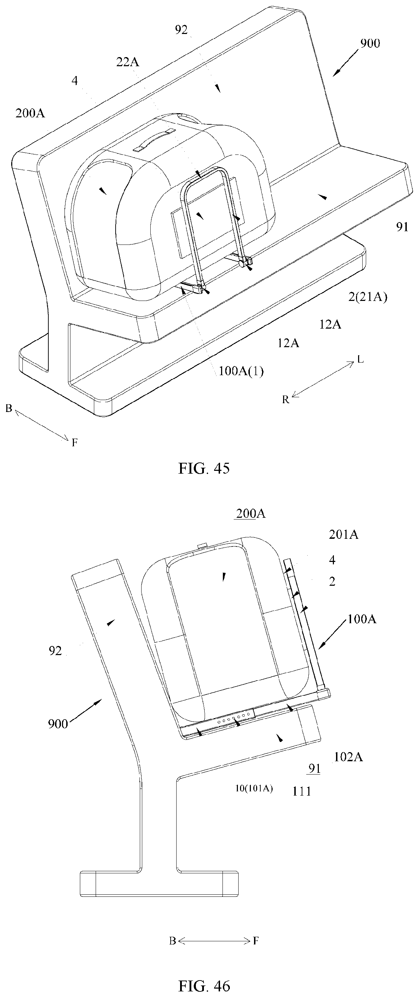

FIGS. 43 and 44 show perspective views illustrating a carrier fixing device 100A in an expanded state according to a seventh embodiment of the present invention from different angles. FIG. 45 shows a perspective view illustrating that a carrier 200A is mounted to the vehicle seat 900 by the carrier fixing device 100A, and the carrier fixing device 100A is in the expanded state. FIG. 46 shows a side view of the carrier fixing device 100A, the carrier 200A and the vehicle seat 900 shown in FIG. 45.

The carrier fixing device 100A provided in this embodiment is a variant of the carrier fixing device 100A provided in the sixth embodiment. In the case of no conflict, the structure of the carrier fixing device 100A of this embodiment can refer to the structure of the carrier fixing device in the sixth embodiment described above.

Another embodiment of the shock absorbing structure 4 disposed on the blocking member 2 is provided in this embodiment. Specifically, the shock absorbing structure 4 may be connected to the two bar members 21A of the blocking member 2. In some embodiments, the shock absorbing structure 4 has a relatively large area for abutting against the carrier 200A. In some embodiments, the length of the shock absorbing structure 4 in the left-right direction may be greater than the distance between the two bar members 21A.

In some embodiments, the shock absorbing structure 4 may include, for example, a single layer of shock absorbing material (for example, may be, but not limited to, a foam material). In some embodiments, the shock absorbing structure 4 may include multiple layers of materials having shock absorbing properties. The multiple layers of materials can be referred to in the description of the sixth embodiment, and details are not described herein again.

### Eighth Embodiment

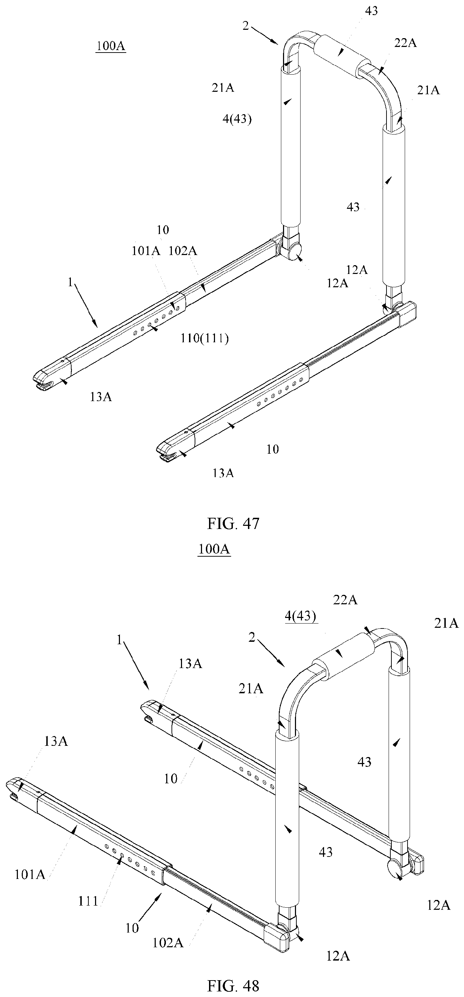

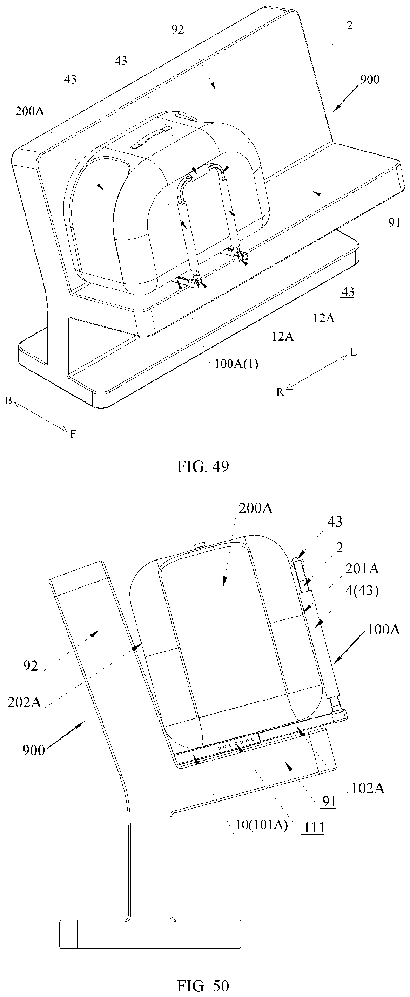

FIGS. 47 and 48 show perspective views illustrating a carrier fixing device 100A in an expanded state according to an eighth embodiment of the present invention from different angles. FIG. 49 shows a perspective view illustrating that a carrier 200A is mounted to the vehicle seat 900 by the carrier fixing device 100A, and the carrier fixing device 100A is in the expanded state. FIG. 50 shows a side view of the carrier fixing device 100A, the carrier 200A and the vehicle seat 900 shown in FIG. 49.

The carrier fixing device 100A provided in this embodiment is a variant of the carrier fixing device 100A provided in the sixth embodiment. In the case of no conflict, the structure of the carrier fixing device 100A according to the present embodiment may refer to the structure of the carrier fixing device 100A according to the sixth embodiment.

Yet another embodiment of the shock absorbing structure 4 disposed on the blocking member 2 is provided in this embodiment. The shock absorbing structure 4 is disposed on at least one of the bar member 22A or the two bar members 21A. A side of the shock absorbing structure 4 facing the carrier 200A protrudes outwardly with respect to the blocking member 2. In some embodiments, the shock absorbing structure 4 may be glued to the corresponding bar member. In some embodiments, the shock absorbing structure 4 may be integrated with the corresponding bar member by over molding.

In some embodiments, the shock absorbing structure 4 includes at least one shock absorbing sleeve 43. The shock absorbing sleeve 43 may be sleeved on at least one of the bar member 22A or the two bar members 21A. In some embodiments, the shock absorbing sleeve 43 may include a single layer of shock absorbing material (for example, may be, but not limited to, a foam material). In some embodiments, the shock absorbing structure 4 may include multiple layers of materials having shock absorbing properties. The multiple layers of materials can be referred to in the description of the sixth embodiment, and details are not described herein again.

In some embodiments, each shock absorbing sleeve 43 wraps around a corresponding bar member. In some embodiments, each shock absorbing sleeve 43 may surround a corresponding bar member in a conformal manner. In some embodiments, the outer profile section of each shock absorbing sleeve 43 is circular.

In some embodiments, the shock absorbing structure 4 may not fully wrap around the corresponding bar member in the circumferential direction, and the shock absorbing structure 4 may be provided only on an area of the corresponding bar member facing the carrier 200A.

### Ninth Embodiment

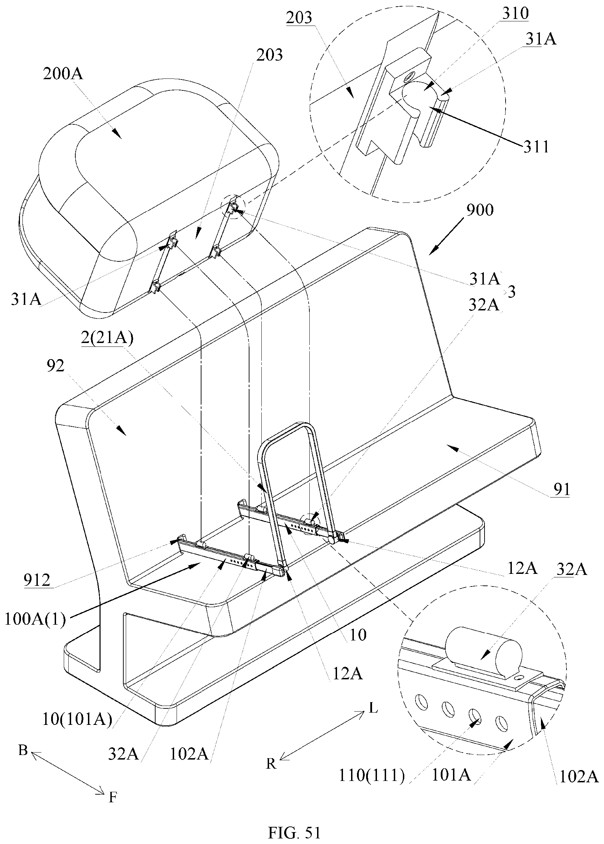

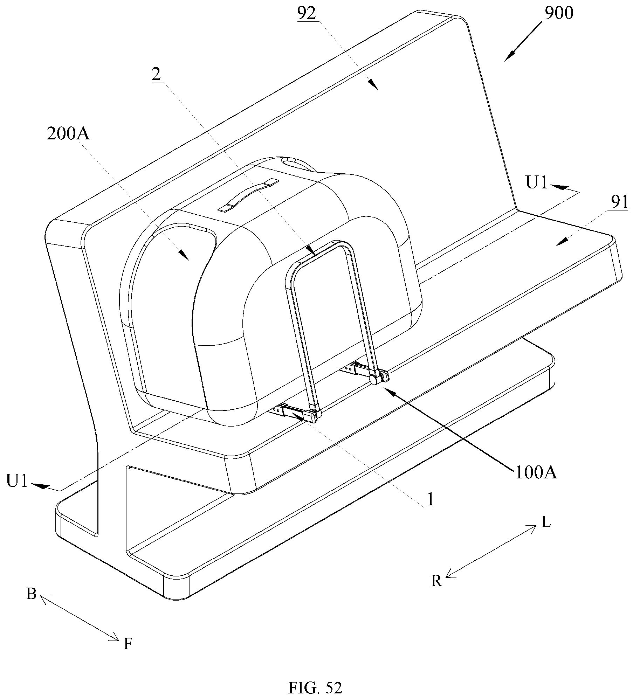

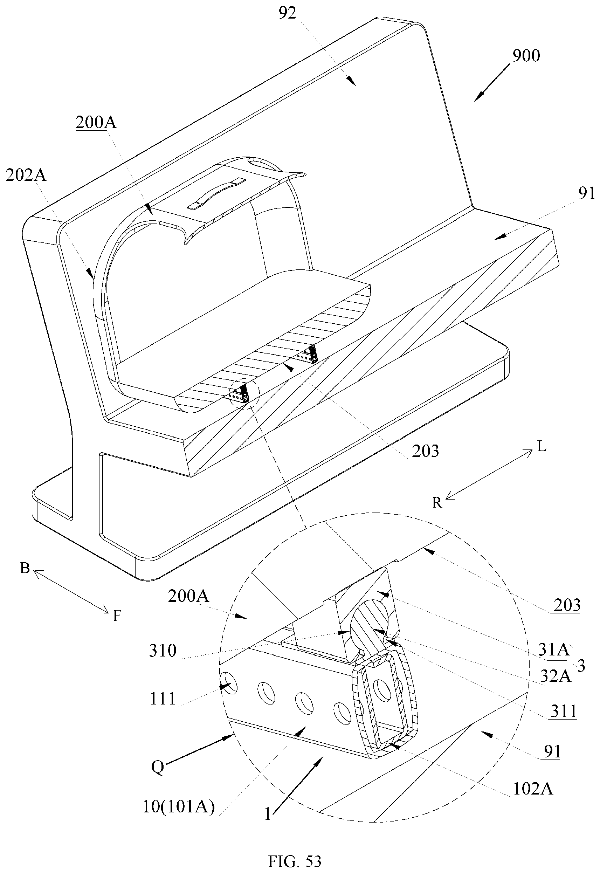

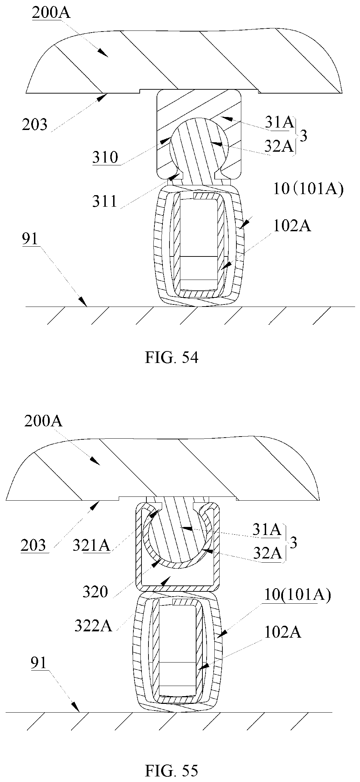

FIG. 51 shows a perspective view of a carrier fixing device 100A according to a ninth embodiment of the present invention, and the carrier fixing device 100A is mounted on a vehicle seat 900 and in an expanded state, and the carrier 200A is separated from the carrier fixing device 100A. FIG. 52 shows a perspective view illustrating that the carrier fixing device 100A is mounted to the vehicle seat, and the carrier 200A is mounted on the carrier fixing device 100A. FIG. 53 shows a cross-sectional perspective view taken along the line U1-U1 in FIG. 52. FIG. 54 shows a front view of a first positioning structure 3 shown in the partial enlarged view *Q* of FIG. 53. FIGS. 55 to 60 show a plurality of variant embodiments of the first positioning structure 3 shown in FIG. 54.

The carrier fixing device 100A provided in this embodiment is a variant of the carrier fixing device 100A provided in the fifth embodiment. In the case of no conflict, the structure of the carrier fixing device 100A of this embodiment can refer to the structure of the carrier fixing device in the fifth embodiment described above.

Referring to FIGS. 51 to 53, in the present embodiment, the first positioning structure 3 is disposed between the pedestal 1 of the carrier fixing device 100A and the bottom surface 203 of the carrier 200A. The first positioning structure 3 is configured to determine the relative positions of the carrier 200A and the pedestal 1.

In some embodiments, the first positioning structure 3 may be a snap-on structure. More specifically, the first positioning structure 3 includes at least one snap-on member disposed on at least one of the pedestal 1 or the carrier 200A, and the pedestal 1 and the carrier 200A are detachably snapped together by the at least one snap-on member. In some embodiments, the first positioning structure 3 may lock the relative positions of the carrier 200A and the pedestal 1 in the left-right direction, so as to prevent the carrier 200A from sliding left and right relative to the pedestal 1.

Referring to FIGS. 51, 53 and 54, an exemplary embodiment of the first positioning structure 3 is shown. The first positioning structure 3 includes a first snap-on member 31A and a second snap-on member 32A. The first snap-on member 31A is disposed on the bottom surface 203 of the carrier 200A, and the second snap-on member 32A is disposed on the pedestal 1. The first snap-on member 31A protrudes downward with respect to the bottom surface 203 of the carrier 200A. A receiving portion 310 and a snap-on opening 311 communicating with the receiving portion 310 are formed in the first snap-on member 31A. The second snap-on member 32A protrudes upward with respect to the pedestal 1. The second snap-on member 32A may enter the receiving portion 310 through the snap-on opening 311, so that the second snap-on member 32A and the first snap-on member 31A are detachably snapped together. More specifically, when the carrier 200A is placed on the carrier fixing device 100A, the snap-on opening 311 is pushed to expand as the second snap-on member 32A is in contact with the snap-on opening 311. After the second snap-on member 32A enters the receiving portion 310, the snap-on opening 311 is automatically reset, so that the first snap-on member 31A and the second snap-on member 32A are connected together and cannot easily be separated. In some embodiments, the portion of the second snap-on member 32A that enters the receiving portion 310 matches the shape of the receiving portion 310.

In some embodiments not shown, the first positioning structure 3 may further include a locking member and a first release member, which are operatively connected together. When the carrier 200A and the pedestal 1 are snapped together, the locking member locks the carrier 200A and the pedestal 1 so that they cannot be separated. When the locking member locks the carrier 200A and the pedestal 1, correspondingly, the snap-on structure of the first positioning structure 3 cannot be separated. Specifically, in this embodiment, the first snap-on member 31A and the second snap-on member 32A cannot be separated. In some embodiments, the locking member may also lock the relative positions of the carrier 200A and the pedestal 1 in the front-rear direction, so as to prevent the carrier 200A from sliding forward and backward relative to the pedestal 1. When the connection relationship between the first snap-on member 31A and the second snap-on member 32A needs to be released, the first release member drives the locking member to move to a release position. The locking member unlocks the carrier 200A and the pedestal 1, and then pulls the carrier 200A upward to separate the first snap-on member 31A and the second snap-on member 32A.

Referring to the above, in some embodiments, the pedestal 1 includes two bar members 10, and the second snap-on member 32A may be disposed on at least one bar member 10. As described in the above embodiments, the bar member 10 may include a plurality of tube units that are sleeved together. The plurality of tube units can be moved relatively so that the length of the bar member 10 can be adjusted by telescoping. The second snap-on member 32A may be mounted on the outermost tube unit of the plurality of tube units. Specifically, in this embodiment, the telescopic bar member 10 includes a first tube unit 101A and a second tube unit 102A. The first tube unit 101A is sleeved on the outside of the second tube unit 102A. The second snap-on member 32A may be disposed on the first tube unit 101A.

In some embodiments, one, two, or more second snap-on members 32A may be disposed on each bar member 10. The positions of the bottom surface 203 of the carrier 200A corresponding to each bar member 10 may be correspondingly provided with one, two or more first snap-on members 31A. In some embodiments, when two or more second snap-on members 32A are disposed on the bar member 10, the snap-on members 32A are spaced apart along the length of the bar member 10.

FIG. 55 shows a variant embodiment of the first positioning structure 3. More specifically, a hollow receiving portion 320 and a snap-on opening 321A communicating with the receiving portion 320 are formed in the second snap-on member 32A. The first snap-on member 31A may enter the receiving portion 320 through the snap-on opening 321A, so that the first snap-on member 31A and the second snap-on member 32A are detachably snapped together. In some embodiments, the interior 322A of the second snap-on member 32A may be hollow.

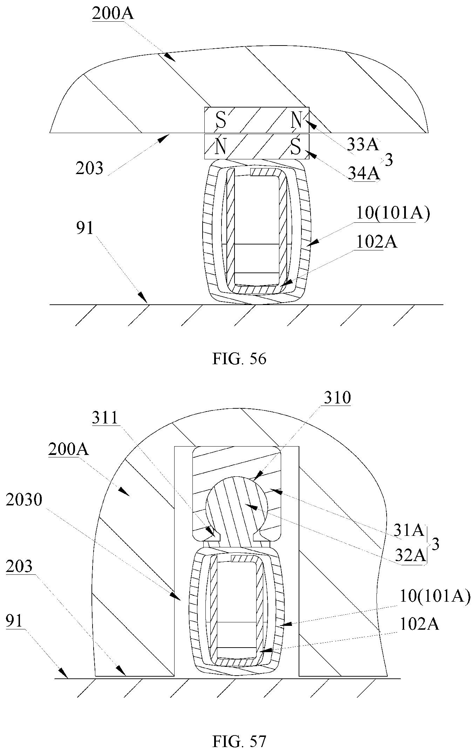

FIG. 56 shows another variant embodiment of the first positioning structure 3, and the first positioning structure 3 may be a magnetic structure. More specifically, the first positioning structure 3 includes at least one magnetic member disposed on at least one of the pedestal 1 or the carrier 200A, and the pedestal 1 and the carrier 200A are detachably connected by the at least one magnetic member. In some embodiments, the first positioning structure 3 includes a first magnetic member 33 and a second magnetic member 34. The first magnetic member 33 is disposed on the bottom surface 203 of the carrier 200A, and the second magnetic member 34 is disposed on the bar member 10 of the pedestal 1. As described above, the bar member 10 may include a first tube unit 101A and a second tube unit 102A that are sleeved together. The second snap-on member 32A may be disposed on the first tube unit 101A that is located on the outside. When the carrier 200A is placed on the pedestal 1, the opposite magnetic poles N and S of the first magnetic member 33 and the second magnetic member 34 attract each other, and function to position the carrier 200A. When the carrier 200A needs to be separated from the pedestal 1, the first magnetic member 33 and the second magnetic member 34 may be moved away from each other by moving the carrier 200A. In some embodiments, the carrier 200A may be first moved to a position where the same magnetic poles of the first magnetic member 33 and the second magnetic member 34 are repelling each other, so that the carrier 200A may be easily removed by means of the repulsive magnetic force.

FIG. 57 shows yet another variant embodiment of the first positioning structure 3. In this embodiment, the carrier 200A is modified on the basis of the first positioning structure 3 shown in FIG. 54. More specifically, a recess portion 2030 is formed on the bottom surface 203 of the carrier 200A, and the first snap-on member 31A is located in the recess portion 2030. In some embodiments, the first snap-on member 31A is located in the recess portion 2030 without protruding with respect to the bottom surface 203 so that the first snap-on member 31A is less susceptible to impact by external objects. In some embodiments, when the first snap-on member 31A and the second snap-on member 32A are snapped together, the first positioning structure 3 may be located in the recess portion 2030. In some embodiments, the recess portion 2030 may be sufficiently deep to receive the bar member 10 fully therein so that the bottom surface 203 of the carrier 200A may be supported by the seat cushion 91. In some embodiments, the recess portion 2030 and the bar member 10 cooperate with each other to assist in limiting the relative positions between the carrier 200A and the pedestal 1 in the left-right direction. Of course, in some embodiments, the bottom of the first snap-on member 31A may protrude downward from the recess portion 2030 (i.e., the first snap-on member 31A has a portion below the bottom surface 203), or the bottom of the first snap-on member 31A may be flush with the bottom surface 203.

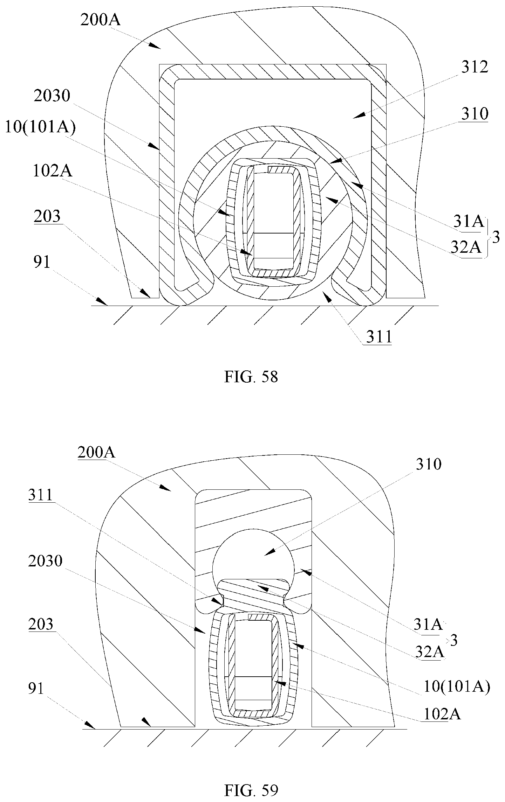

FIG. 58 shows yet another variant embodiment of the first positioning structure 3. In this embodiment, the first snap-on member 31A and the second snap-on member 32A are modified on the basis of the first positioning structure 3 shown in FIG. 57. In some embodiments, the outer contour of the first snap-on member 31A may match the shape of the recess portion 2030. The bottom of the first snap-on member 31A protrudes slightly downward from the recess portion 2030. The interior 312 of the first snap-on member 31A may be hollow. The second snap-on member 32A may be wrapped around the bar member 10, more specifically, wrapped around the first tube unit 101A of the bar member 10. In some embodiments, the second snap-on member 32A may be cylindrical.

FIG. 59 shows yet another variant embodiment of the first positioning structure 3. In this embodiment, the second snap-on member 32A is mainly modified on the basis of the first positioning structure 3 shown in FIG. 57. The second snap-on member 32A may be integrally formed with the bar member 10 (more specifically, the first tube unit 101A of the bar member 10).

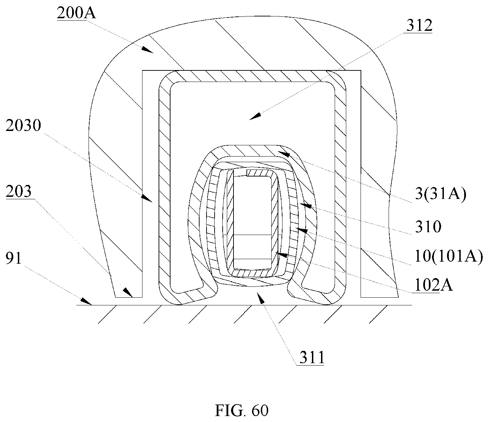

FIG. 60 shows yet another variant embodiment of the first positioning structure 3. This embodiment is mainly different from the first positioning structure 3 shown in FIG. 58 in that the second snap-on member 32A is omitted in the first positioning structure 3, and the first snap-on member 31A is directly snapped together with the bar member 10 (more specifically, with the first tube unit 101A of the bar member 10).

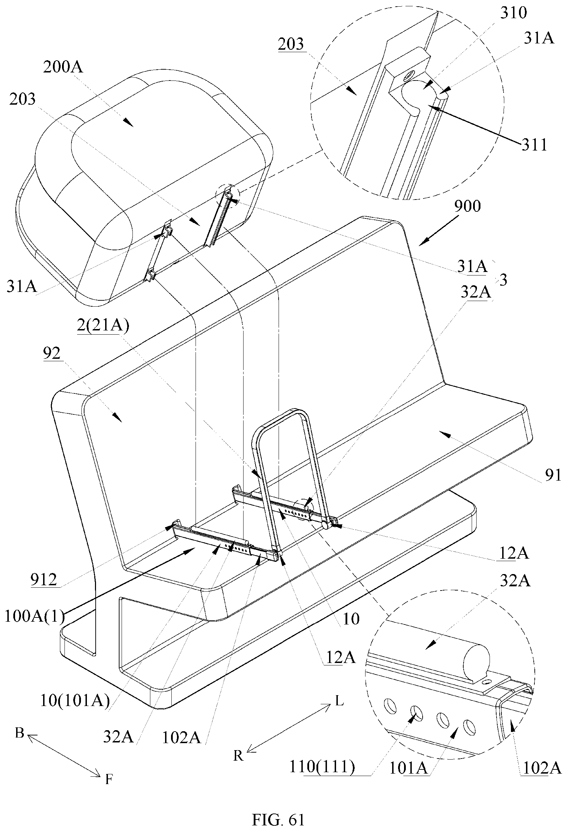

FIG. 61 shows a variant embodiment of the first positioning structure 3 shown in FIG. 51. In some embodiments, at least one first snap-on member 31A may have a longer length, and/or at least one second snap-on member 32A may have a longer length. In this way, when the carrier 200A is mounted on the carrier fixing device 100A, the first snap-on member 31A and the second snap-on member 32A can slide relative to each other in the front-rear direction to adjust the carrier 200A to an appropriate position. In addition, the first snap-on member 31A and/or the second snap-on member 32A having a longer length can improve the versatility of the carrier fixing device 100A and the carrier 200A, and can also reduce the accuracy requirements for the setting positions of the first snap-on member 31A and the second snap-on member 32A.

In the case of no conflict, the shock absorbing structure 4 provided in the above embodiments can be applied to the carrier fixing device 100A provided in this embodiment.

### Tenth Embodiment

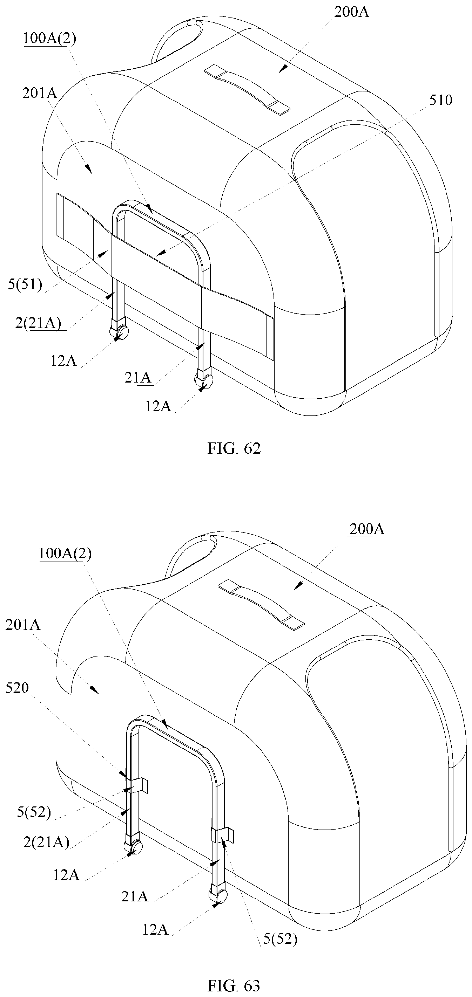

FIGS. 62 to 64 show variant embodiments of a carrier 200A according to a tenth embodiment of the present invention. A second positioning structure 5 may be disposed on the carrier 200A for determining the relative positions of the carrier 200A and the blocking member 2 of the carrier fixing device 100A. Pedestal 1 is omitted in FIGS. 62 to 64.

Referring to FIG. 62, in some embodiments, the second positioning structure 5 includes a fixing belt 51. The left and right sides of the fixing belt 51 are respectively connected to the carrier 200A. A passage 510 is formed between the fixing belt 51 and the front side 201A of the carrier 200A. When the carrier 200A is mounted on the carrier fixing device 100A, the blocking member 2 may be disposed passing through the passage 510 so that the blocking member 2 is connected to the carrier 200A. More specifically, the two bar members 21A of the blocking member 2 pass through the passage 510 together.

Referring to FIG. 63, in some embodiments, the second positioning structure 5 may include at least one fixing belt 52. The fixing belt 52 is connected to the carrier 200A. A passage 520 is formed between the fixing belt 52 and the carrier 200A. The bar member 21A or the bar member 22A is sleeved in the passage 520. The fixing belt 52 can be connected to the carrier 200A by any suitable connection structure. In some embodiments, the connection structure may be, for example, a buckle, a buckle ring, a magnetic buckle, a slide buckle, a Velcro, or the like.

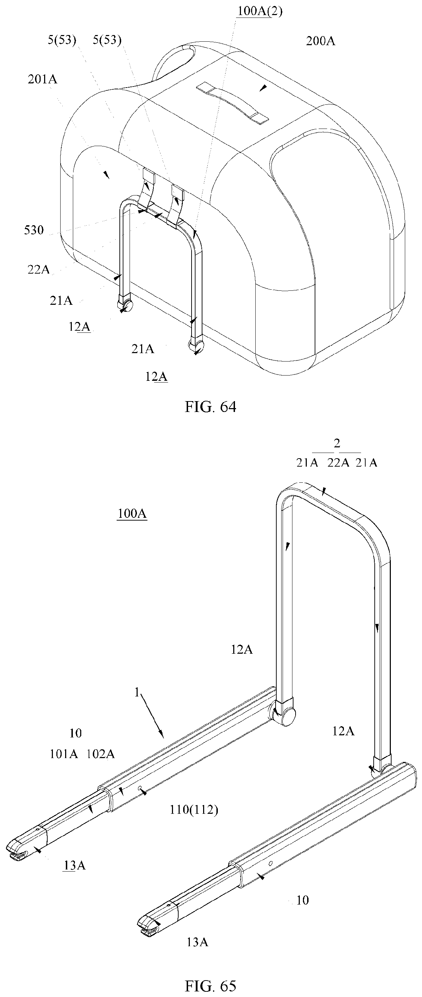

Referring to FIG. 64, in some embodiments, the second positioning structure 5 may include at least one fixing belt 53. An end of the fixing belt 53 is connected to the carrier 200A, and the other end of the fixing belt 53 may be connected to the bar member 21A or the bar member 22A. In some embodiments, the other end of the fixing belt 53 may be connected to the bar member 22A by an annular sleeve 530.

In the case of no conflict, the second positioning structure 5 of the present embodiment may be combined with the carrier 200A in any of the embodiments of the present invention.

### Eleventh Embodiment

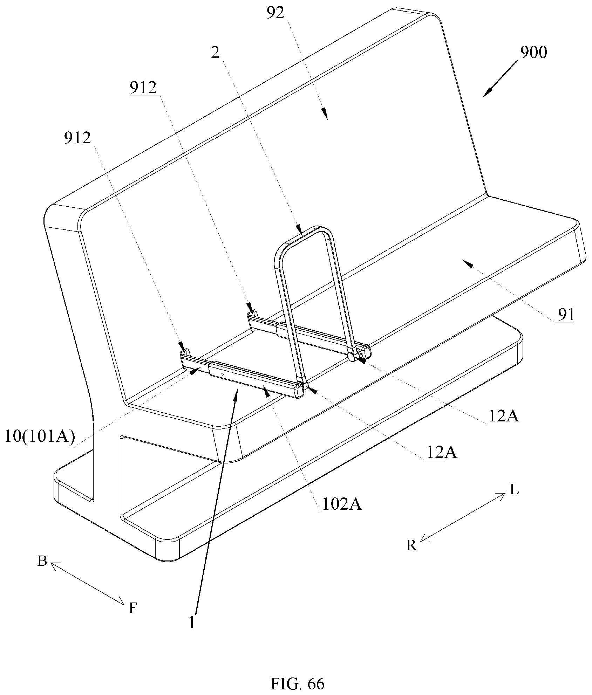

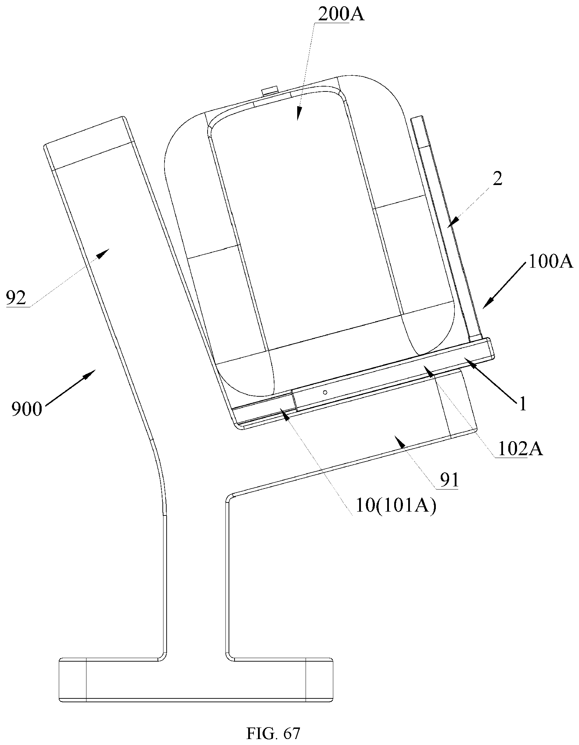

FIG. 65 shows a perspective view of a carrier fixing device 100A according to an eleventh embodiment of the present invention. FIG. 66 shows a perspective view illustrating the carrier fixing device 100A mounted to a vehicle seat 900. FIG. 67 shows a side view illustrating a carrier 200A mounted to the vehicle seat 900 by the carrier fixing device 100A, and the carrier fixing device 100A is in an expanded state.

This embodiment is a variant of the carrier fixing device 100A provided in the fifth embodiment. Unlike the fifth embodiment described above, the first tube unit 101A provided with the LATCH structure 13A is sleeved inside the second tube unit 102A. The position locking mechanism 110 may adopt any suitable structure, and an exemplary structure of the position locking mechanism 110 is shown in the thirteenth embodiment below.

In the case of no conflict, the shock absorbing structure 4 provided in the above embodiments can be applied to the carrier fixing device 100A provided in this embodiment.

In the case of no conflict, the carrier fixing device 100A provided in this embodiment may be combined with the carrier 200A provided in any of the above embodiments.

### Twelfth Embodiment

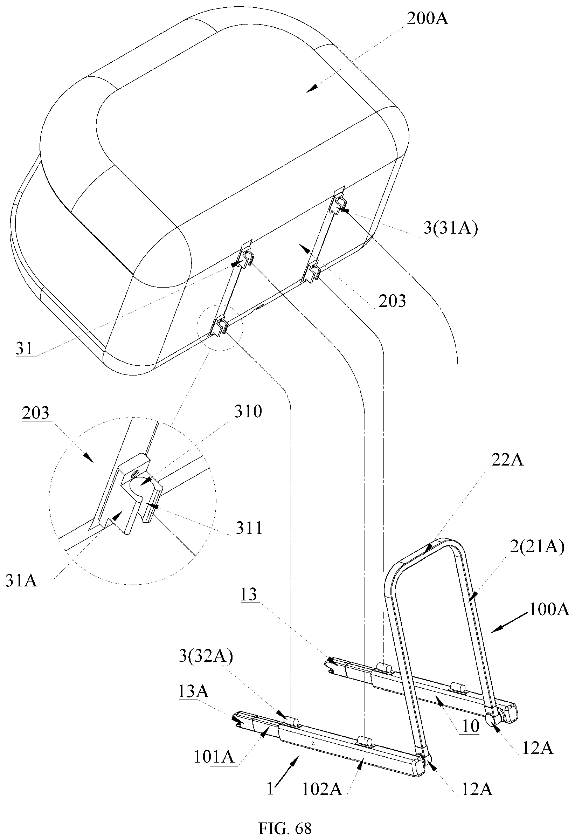

FIG. 68 shows a perspective view of a carrier 200A and a carrier fixing device 100A according to a twelfth embodiment of the present invention, and the carrier 200A is separated from the carrier fixing device 100A. This embodiment is a variant of the carrier fixing structure 100 provided in the eleventh embodiment. In the case of no conflict, the structure of the carrier fixing device 100A can refer to the description of the eleventh embodiment above.

As can be seen from FIG. 68, the first positioning structure 3 as described in the ninth embodiment can be disposed between the pedestal 1 of the carrier fixing device 100A and the carrier 200A. It can be understood that the first positioning structure 3 may include a first snap-on member 31A and a second snap-on member 32A. The first snap-on member 31A is disposed on the bottom surface 203 of the carrier 200A. Unlike the ninth embodiment, the second snap-on member 32A is disposed on the second tube unit 102A of the bar member 10 that is located on the outside. Alternatively, the first positioning structure 3 may include a first magnetic member and a second magnetic member. The first magnetic member is disposed on the bottom surface 203 of the carrier 200A, and the second magnetic member is disposed on the second tube unit 102A that is located on the outside.

In the case of no conflict, for a specific embodiment of the first positioning structure 3, please refer to the description of the ninth embodiment, and details are not described herein again.

### Thirteenth Embodiment

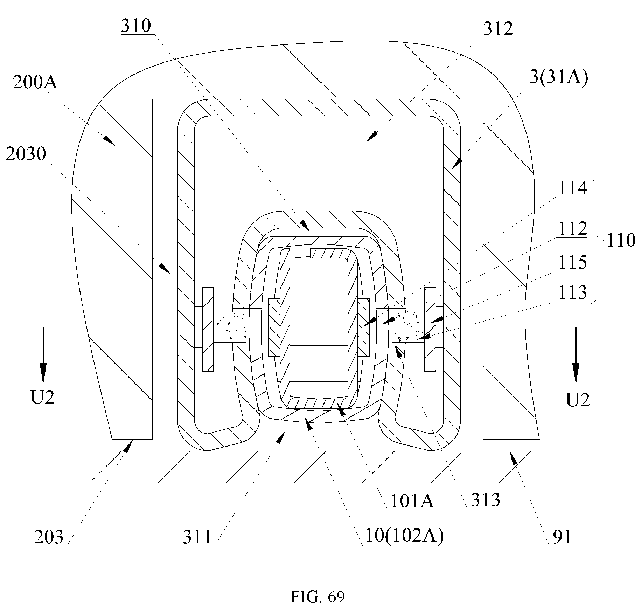

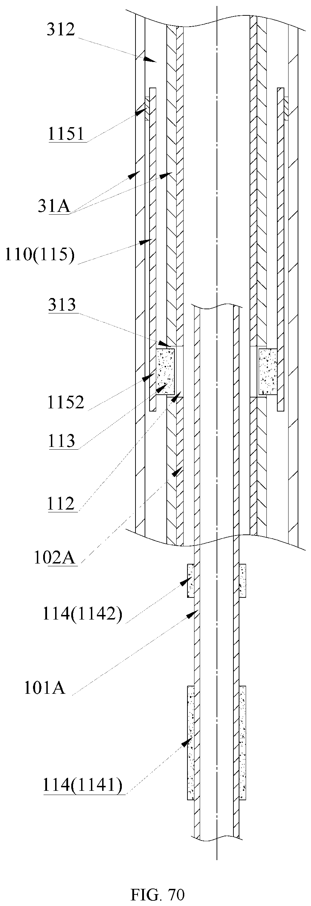

FIG. 69 shows a partial sectional view of a carrier 200A and a carrier fixing device 100A according to a thirteenth embodiment of the present invention. In the case of no conflict, the structure of the carrier fixing device 100A can refer to the description of the eleventh embodiment above. FIGS. 70 to 72 show cross-sectional views taken along the line U2-U2 in FIG. 69, illustrating different operating states of a position locking mechanism 110.

A first positioning structure 3 is disposed between the carrier fixing device 100A and the carrier 200A. In some embodiments, the first positioning structure 3 includes a first snap-on member 31A mounted in a recess portion 2030 on the bottom surface 203 of the carrier 200A. A receiving portion 310 and a snap-on opening 311 communicating with the receiving portion 310 are formed in the first snap-on member 31A. The first snap-on member 31A can be directly snapped together with the bar member 10 (more specifically, with the second tube unit 102A of the bar member 10). That is, the second tube unit 102A may enter the receiving portion 310 through the snap-on opening 311 to be snapped together with the first snap-on member 31A.

An exemplary embodiment of the position locking mechanism 110 is shown in this embodiment. The position locking mechanism 110 includes a third magnetic member 113, a fourth magnetic member 114, an elastic arm 115, and a lock hole 112.

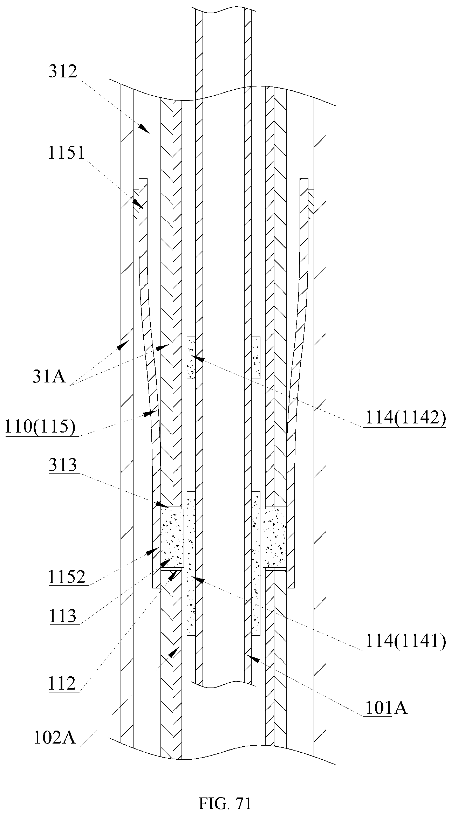

Referring to FIGS. 69 to 71, in some embodiments, the interior 312 of the first snap-on member 31A is hollow. The first end 1151 of the elastic arm 115 is fixed to the interior 312 of the first snap-on member 31A, and the third magnetic member 113 is located at the second end 1152 of the elastic arm 115. A through hole 313 is formed at a position of the first snap-on member 31A between the second tube unit 102A and the third magnetic member 113, and the through hole 313 is formed corresponding to the lock hole 112. The lock hole 112 is located on the second tube unit 102A (see FIG. 65). The fourth magnetic member 114 is disposed on the first tube unit 101A, for example, on an outer periphery of the first tube unit 101A. In some embodiments, the fourth magnetic member 114 includes a first magnetic stripe 1141. Referring to FIG. 71, when the first tube unit 101A and the second tube unit 102A move relative to each other, and when the first magnetic stripe 1141 and the third magnetic member 113 are facing each other, the magnetic poles on the adjacent sides of the first magnetic stripe 1141 and the third magnetic member 113 are opposite and attract each other. Therefore, the third magnetic member 113 can pass through the through hole 313 and the lock hole 112 to be attracted by the first magnetic stripe 1141, which facilitates locking the relative positions of the first tube unit 101A and the second tube unit 102A, and locking the relative positions of the carrier 200A and the second tube unit 102A, thereby reinforcing the connection between the carrier 200A and the carrier fixing device 100A.

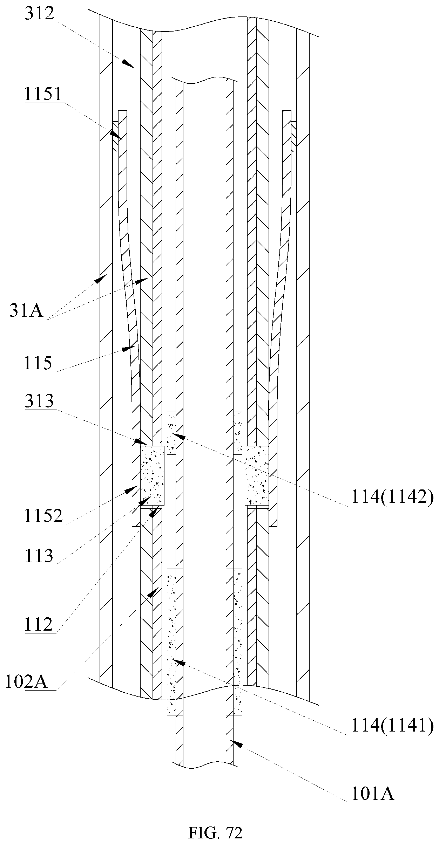

Referring to FIG. 72, in some embodiments, the fourth magnetic member 114 further includes a second magnetic stripe 1142. In some embodiments, the second magnetic stripe 1142 and the first magnetic stripe 1141 may be spaced apart. Referring to FIG. 71, when the first tube unit 101A and the second tube unit 102A move relative to each other, and when the second magnetic stripe 1142 and the third magnetic member 113 are facing each other, the magnetic poles on the adjacent sides of the second magnetic stripe 1142 and the third magnetic member 113 are the same and repel each other, so that the second magnetic stripe 1142 can easily move toward the interior 312 of the first snap-on member 31A.

It should be noted that the position locking mechanism 110 provided in this embodiment is also applicable to the embodiment in which the second tube unit 102A is sleeved inside the first tube unit 101A. Accordingly, the lock hole 112 is formed on the first tube unit 101A that is located on the outside. The fourth magnetic member 114 is disposed on the second tube unit 102A that is located on the inside, for example, on an outer periphery of the second tube unit 102A.

### Fourteenth Embodiment

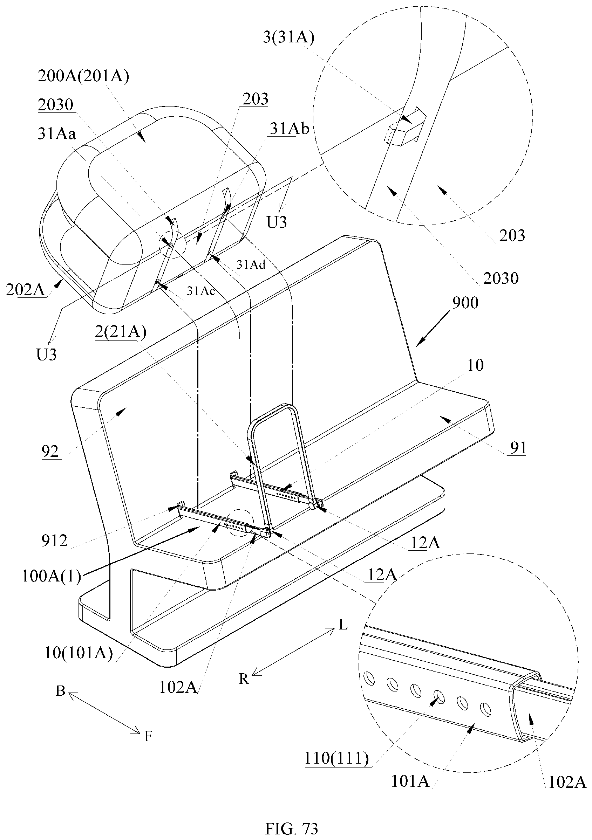

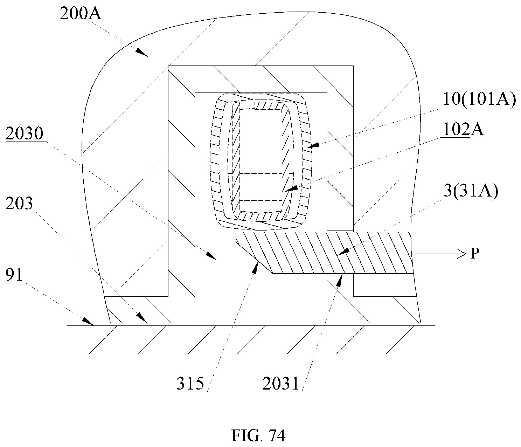

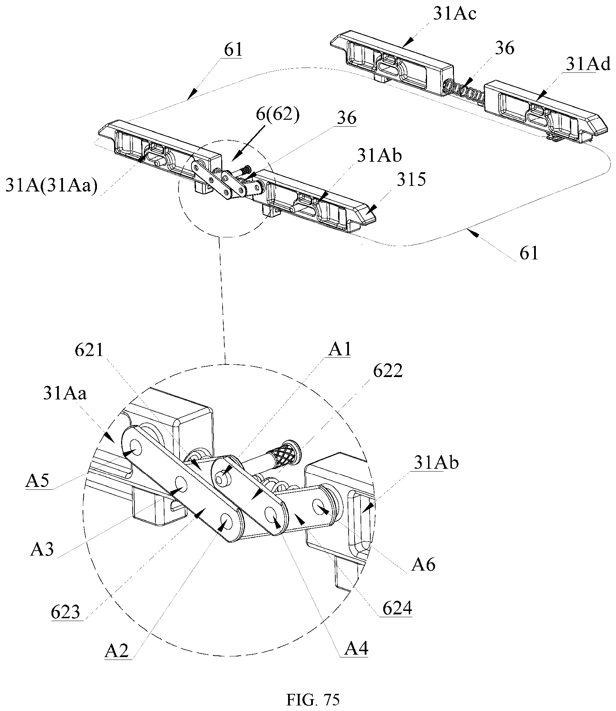

FIG. 73 shows a perspective view of a carrier fixing device 100A according to a fourteenth embodiment of the present invention, and the carrier fixing device 100A is mounted on a vehicle seat 900 and in an expanded state, and the carrier 200A is separated from the carrier fixing device 100A. FIG. 74 shows a partial sectional view taken along the line U3-U3 in FIG. 73. For ease of illustration, the bar member 10 is shown in dashed line in FIG. 74. FIG. 75 shows a perspective view of the first positioning structure in this embodiment.

The carrier fixing device 100A provided in this embodiment is a variant of the carrier fixing device 100A provided in the thirteenth embodiment. In the case of no conflict, the structure of the carrier fixing device 100A according to the present embodiment may refer to the structure of the carrier fixing device 100A according to the thirteenth embodiment.

Referring to FIGS. 73 and 74, at least one recess portion 2030 is formed on the bottom surface 203 of the carrier 200A for receiving at least one bar member 10 of the pedestal 1. In this embodiment, the length of the bar member 10 can be adjusted by telescoping. It can be understood that, in other embodiments, the bar member 10 may have a fixed length and is not telescopic. In some embodiments, the recess portion 2030 penetrates the front side 201A and the rear side 202A of the carrier 200A.

In this embodiment, the first positioning structure 3 includes at least one first snap-on member 31A. At least one hole 2031 is formed on the wall of the recess portion 2030. The first snap-on member 31A is movably disposed in the corresponding hole 2031, so that the first snap-on member 31A has a locking position and a release position. Referring to FIG. 74, when the first snap-on member 31A is in the locking position, the first snap-on member 31A protrudes into the recess portion 2030 and locks the bar member 10 in the recess portion 2030, in which case the bar member 10 cannot move out from the recess portion 2030. When it is necessary to remove the carrier 200A from the carrier fixing device 100A, the first snap-on member 31A is driven to move in the direction P toward the release position, and the length of the first snap-on member 31A in the recess portion 2030 is shortened. When the first snap-on member 31A arrives the release position, the first snap-on member 31A no longer interferes with the removal of the bar member 10 from the recess portion 2030.

Referring to FIG. 75, in some embodiments, the first positioning structure 3 may further include at least one reset member 36. The reset member 36 applies a force to move the first snap-on member 31A toward the locking position. In the absence of external force, the reset member 36 holds the first snap-on member 31A in the locking position. In some embodiments, the reset member 36 includes, for example, a spring.

In some embodiments not shown, the first positioning structure 3 further includes at least one second release member. The second release member is operatively connected to the first snap-on member 31A. The second release member is configured to drive the first snap-on member 31A to move toward the release position. In some embodiments, the second release member is, for example, rigidly connected to the first snap-on member 31A. In some embodiments, the second release member is connected to the first snap-on member 31A, for example, by a pulling member (e.g., a steel wire rope). In some embodiments, the second release member may be, but is not limited to, a button.

Referring to FIGS. 74 and 75, in some embodiments, the first snap-on member 31A has, for example, a guide ramp 315. When mounting the carrier 200A to the pedestal 1, the bar member 10 can apply a force to the first snap-on member 31A to move it to the release position through the guide ramp 315. Thus, without operating the second release member, the bar member 10 can pass over the first snap-on member 31A and be locked in the recess portion 2030 by the first snap-on member 31A.

Referring to FIGS. 73 and 75, in some embodiments, the first positioning structure 3 includes four first snap-on members 31A. The four first snap-on members 31A include a first snap-on member 31Aa, a first snap-on member 31Ab, a first snap-on member 31Ac, and a first snap-on member 31Ad. The four first snap-on members 31A are arranged in a rectangular array at the bottom of the carrier 200A. In some embodiments, the first snap-on members 31A move in the same direction toward the locking position or release position. In some embodiments, the first snap-on members (e.g., the first snap-on member 31Aa and the first snap-on member 31Ab) located in the same row in the left-right direction move in the opposite directions toward the locking position or the release position; and the first snap-on members (e.g., the first snap-on member 31Aa and the first snap-on member 31Ac) located in the same column in the front-rear direction move in the same direction toward the locking position or the release position.

Referring to FIG. 75, in some embodiments, at least two first snap-on members 31A may be connected by a linkage device 6. When any one of the plurality of first snap-on members 31A connected by the linkage device 6 moves toward the release position, the other first snap-on members 31A move synchronously toward the release position.

Continuing to refer to FIG. 75, in some embodiments, the linkage device 6 may include a linkage assembly 62 connected between two first snap-on members 31A (e.g., the first snap-on member 31Aa and the first snap-on member 31Ab) in the same row, and a linkage member 61 connected between two first snap-on members 31A (e.g., the first snap-on member 31Aa and the first snap-on member 31Ad) located diagonally.

In some embodiments, the linkage assembly 62 includes a four-bar linkage mechanism. Specifically, the four-bar linkage mechanism includes a first linkage bar 621, a second linkage bar 622, a third linkage bar 623, and a fourth linkage bar 624, the first linkage bar 621, the second linkage bar 622, the third linkage bar 623, and the fourth linkage bar 624 are connected in pairs to form four connection points. The four connection points correspond to the pivot shafts A1, A2, A3, and A4. One of the four connection points is a fixed pivot point. In this embodiment, the pivot shaft A1 is fixed to the bottom of the carrier 200A as the fixed pivot point. The third linkage bar 623 and the fourth linkage bar 624 connected to the center connection point (corresponding to the pivot shaftA2) opposite to the fixed pivot pointA1 are respectively connected to the first snap-on member 31Aa and the first snap-on member 31Ab by the pivot shaftA5 and the pivot shaftA6. The linkage assembly 62 allows the first snap-on member 31Aa and the first snap-on member 31Ab to move synchronously toward the locking position or the release position. For example, when any one of the first snap-on member 31Aa and the first snap-on member 31Ab moves toward the release position under the drive of the second release member, the pivot shaftA2 moves in the direction away from the pivot shaftA1, which drives the other one of the first snap-on member 31Aa and the first snap-on member 31Ab to move synchronously toward the release position. When any one of the first snap-on member 31Aa and the first snap-on member 31Ab moves toward the locking position under the drive of the reset member 36, the pivot shaftA2 moves in the direction approaching the pivot shaftA1, which drives the other one of the first snap-on member 31Aa and the first snap-on member 31Ab to move synchronously toward the locking position.

In some embodiments, the linkage member 61 includes, for example, but is not limited to, a pulling member (e.g., a steel wire rope). In some embodiments, the first snap-on member 31Aa and the first snap-on member 31Ad located diagonally are connected by a linkage member 61, the first snap-on member 31Ab and the first snap-on member 31Ac located diagonally are connected by another linkage member 61, When the first snap-on member 31Aa and the first snap-on member 31Ab move synchronously toward the release position, the first snap-on member 31Ac and the first snap-on member 31Ad also move synchronously toward the release position under the action of the two linkage members 61.

### Fifteenth Embodiment

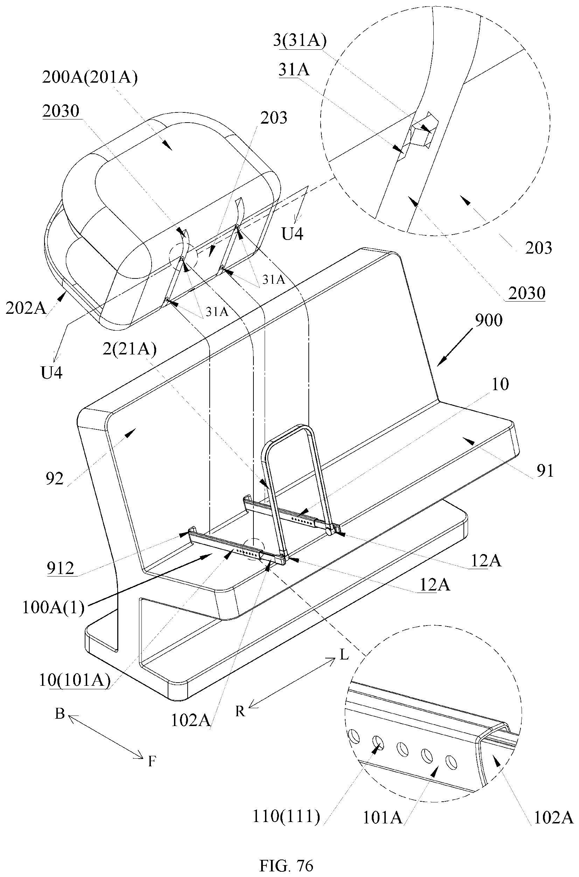

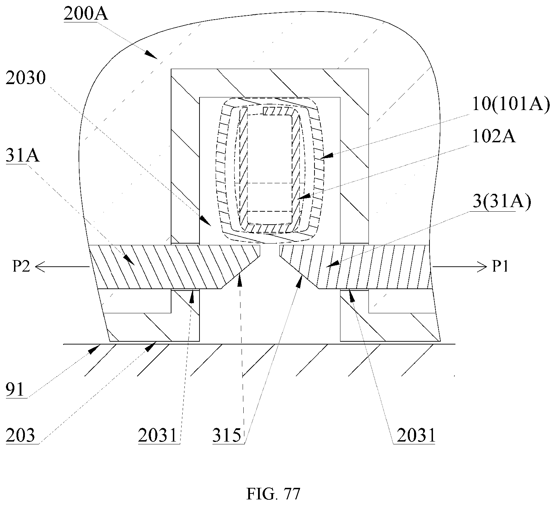

FIG. 76 shows a perspective view of a carrier fixing device 100A according to a fifteenth embodiment of the present invention, and the carrier fixing device 100A is mounted on a vehicle seat 900 and in an expanded state, and the carrier 200A is separated from the carrier fixing device 100A. FIG. 77 shows a partial sectional view taken along the line U4-U4 in FIG. 76. For ease of illustration, the bar member 10 is shown in dashed line in FIG. 77.

The carrier fixing device 100A provided in this embodiment is a variant of the carrier fixing device 100A provided in the fourteenth embodiment. In the case of no conflict, the structure of the carrier fixing device 100A according to the present embodiment may refer to the structure of the carrier fixing device 100A according to the fourteenth embodiment.

In this embodiment, the first positioning structure 3 includes first snap-on members 31A arranged in pairs. Two holes 2031 opposite to each other may be formed on two opposite walls of the recess portion 2030 of the carrier 200A. Two paired first snap-on members 31A are respectively retractably disposed in the two holes 2031 opposite to each other.

The two paired first snap-on members 31A have a locking position and a release position. Referring to FIG. 77, when the two first snap-on members 31A are in the locking position, the two first snap-on members 31A respectively protrude into the recess portion 2030 for a certain length, and lock the bar member 10 in the recess portion 2030, in which case the bar member 10 cannot move out from the recess portion 2030. When the two first snap-on members 31A move to the release position in the opposite directions P1 and P2, respectively, the two first snap-on members 31A no longer interfere with the removal of the bar member 10 from the recess portion 2030.

In some embodiments not shown, the first positioning structure 3 may further include at least one reset member. The reset member applies a force to move the first snap-on member 31A toward the locking position. In the absence of external force, the reset member holds the first snap-on members 31A in the locking position. In some embodiments, the reset member includes, for example, a spring.

In some embodiments not shown, the first positioning structure 3 may further include a second release member. The second release member is operatively connected to the first snap-on member 31A. The second release member is configured to drive the first snap-on member 31A to move toward the release position.

In some embodiments, the first snap-on members 31A may also be connected by the linkage device to be able to move synchronously toward the release position.

### Sixteenth Embodiment

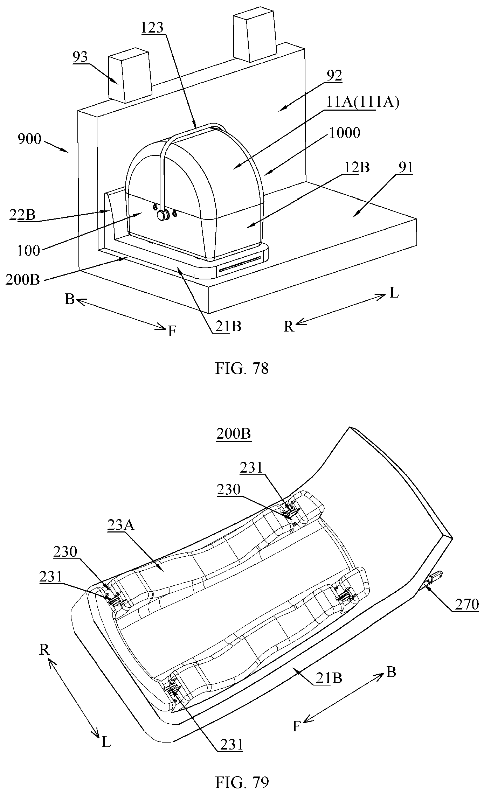

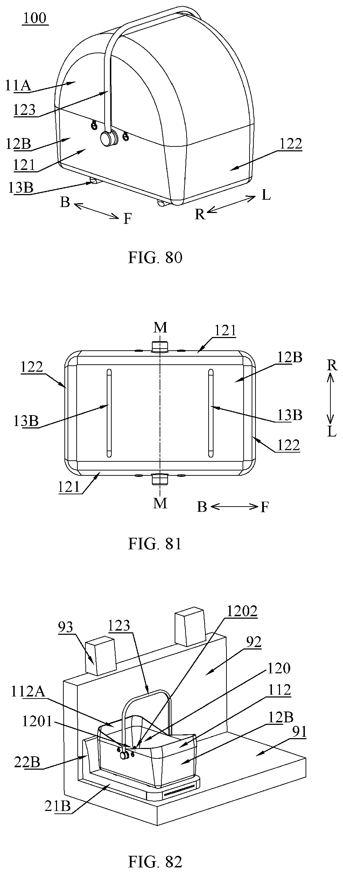

FIG. 78 shows a perspective view illustrating a carrier fixing mechanism 1000 mounted to a seat 900 according to a sixteenth embodiment of the present invention, and a canopy assembly 11A of a carrier 100 is in a closed state. FIG. 79 shows an exemplary perspective view of the base 200B in FIG. 78. FIG. 80 shows a perspective view of the carrier 100 in FIG. 78. FIG. 81 shows a top view of the carrier 100 in FIG. 80. FIG. 82 shows another perspective view of the carrier fixing mechanism 1000 and the seat 900 in FIG. 78, and the canopy assembly 11A of the carrier 100 is in an opening state.

Referring to FIGS. 78 to 81, the carrier fixing mechanism 1000 includes a carrier 100 and a base 200B. The carrier 100 is detachably mounted on the base 200B, the base 200B is detachably mounted on the seat 900, and the carrier 100 is fixed to the seat 900 by means of the base 200B. The seat 900 may be, for example, but not limited to, a vehicle seat.

Referring to FIG. 78, the seat 900 includes a seat cushion 91, a backrest 92, and a headrest 93. In some embodiments, the headrest 93 has an insertion pole (not shown in the figures) that is inserted into the backrest 92 from the top surface of the backrest 92. The front surface of the seat 900 generally has a connection point located at the intersection of the front surface of the backrest 92 and the front surface of the seat cushion 91. The connection point is configured to connect an ISOFIX structure or a LATCH structure 270 (see FIG. 79). In some embodiments, an anchoring structure (not shown in the figures) is disposed on the back surface or the top surface of the backrest 92. The anchoring structure may be a rod-shaped member for connection with the anchoring member of the top tether assembly.

Referring to FIGS. 78 and 79, the base 200B may include a basal portion 21B and an abutment portion 22B. The basal portion 21B is configured to be placed on the seat cushion 91. The abutment portion 22B extends upward from the rear end of the basal portion 21B, and the abutment portion 22B is configured to abut against the backrest 92. In some embodiments, the base 200B (more specifically, the basal portion 21B) may be configured with an ISOFIX structure or a LATCH structure, and the insertion member of the ISOFIX structure or the LATCH structure may be detachably connected to the connection point on the seat 900. The ISOFIX structure and the LATCH structure are not shown in the figures, and reference may be made to the ISOFIX structure and the LATCH structure of the child safety seat. In some embodiments, the base 200B may be secured to the seat 900 by being tied with a safety belt that matches the seat 900. The abutment portion 22B can be configured with a top tether assembly.

Referring to FIGS. 80 and 82, the carrier 100 is configured to accommodate pets, and the carrier 100 may be a pet case or a pet basket. In this embodiment, the carrier 100 is specifically described by taking a pet basket as an example. The carrier 100 includes a canopy assembly 11A and a receiving body 12B. When the carrier 100 is removed from the base 200B, the carrier 100 can be used alone as a means of transportation for moving pets.

The receiving body 12B is, for example, a case-type structure defining a receiving space 1201 for accommodating an infant or a pet. The receiving space 1201 has a top opening 120 which the pet can enter the receiving space 1201. In some embodiments, the receiving body 12B is approximately cuboid, and the side surfaces of the receiving body 12B include two opposite first side surfaces 121 and two opposite second side surfaces 122, and the two second side surfaces 122 are located between the two first side surfaces 121. In this embodiment, the first side surfaces 121 extend in the front-rear direction, and the second side surfaces 122 extend in the left-right direction. In some embodiments, the length of the first side surface 121 extending in the front-rear direction is greater than the length of the second side surface 122 extending in the left-right direction.

In some embodiments, a fixing ring 1202 may be disposed in the interior of the receiving body 12B. The fixing ring 1202 can be connected to an engaging ring on the pet vest or on the pet collar. Specifically, two fixing rings 1202 may be provided, and the two fixing rings 1202 are arranged diagonally. When the top opening 120 is open, the connection between the fixing ring 1202 and the pet vest can prevent pets from accidentally jumping out.

In some embodiments, the receiving body 12B may include a case body made of foam, a bracket assembly fitted on the outside of the case body, and a seat cloth. The bracket assembly is configured to enhance the structural strength of the case body outside the case body, and the bracket assembly may be a frame structure made of metal. The seat cloth is wrapped, for example, outside the case body and the bracket assembly so that the receiving body 12B has a clean appearance. Of course, the structure and shape of the receiving body 12B may also have other embodiments without being limited to the above examples.

A U-shaped handle 123 may also be disposed on the receiving body 12B. Both ends of the U-shaped handle 123 are pivotally connected to both sides of the receiving body 12B. In this embodiment, the two ends of the handle 123 are, more specifically, pivotally connected to middle positions at the top of the two first side surfaces 121.

FIGS. 79 to 81 show an exemplary structure by which the carrier 100 is detachably mounted on the base 200B. Of course, the manner in which the carrier 100 is detachably connected to the base 200B is not limited to the following examples. An engagement mechanism 23A may be disposed on the basal portion 21B. An engaging rod 13B is disposed on the bottom of the carrier 100. The engagement mechanism 23A and the engaging rod 13B are detachably engaged together to fix the carrier 100 to the basal portion 21B. In some embodiments, the engagement mechanism 23A includes a plurality of engagement grooves 230 formed on the basal portion 21B and a plurality of engagement hooks 231 cooperating with the plurality of engagement grooves 230. The engagement grooves 230 are arranged at intervals in the front-rear direction and/or the left-right direction. The engaging rods 13B of the carrier 100 can be inserted into these engagement grooves 230 and locked by the engagement hooks 231.

In this embodiment, the bottom of the carrier 100 is provided with two engaging rods 13B arranged at intervals in the front-rear direction. Each engaging rod 13B protrudes downward with respect to the bottom of the receiving body 12B, and each engaging rod 13B extends in the left-right direction. The engagement mechanism 23A includes four engagement grooves 230. Each engaging rod 13B corresponds to two engagement grooves 230. Of course, the embodiments of the engaging rod 13B and the engagement mechanism 23A are not limited to the above examples. For example, in some embodiments not shown, the bottom of the carrier 100 may be provided with only one engaging rod 13B extending in the left-right direction, and such engaging rod 13B is offset at the bottom of the carrier 100 with respect to a center plane M-M of the carrier 100.

In some embodiments, the engagement mechanism 23A may further include a release member (not shown in the figures). The release member is operatively connected to each engagement hook 231, and configured to drive the engagement hook 231 to release the engaging rod 13B. In some embodiments, a display device may also be disposed on the basal portion 21B. The display device is configured to display whether or not the engaging rod 13B is locked by the engagement hook 231.

The canopy assembly 11A is mounted at the top of receiving body 12B. In some embodiments, the canopy assembly 11A is, for example, detachably connected to the receiving body 12B. In some alternative embodiments, the canopy assembly 11A is non-detachably connected to the receiving body 12B.

The canopy assembly 11A includes a ceiling fabric 111A and a bracket (not shown in the figures) for supporting the ceiling fabric 111A. In this embodiment, the canopy assembly 11A is a fully covering ceiling, and the canopy assembly 11A has a fully expanded state and a fully folded state. In some embodiments, the canopy assembly 11A may also have an intermediate folded state between the fully expanded state and the fully folded state. When the canopy assembly 11A is in the fully expanded state shown in FIG. 78, the canopy assembly 11A completely covers the top opening 120 of the receiving body 12B (see FIG. 82). When the canopy assembly 11A is in the fully folded state shown in FIG. 82, the top opening 120 is maximally opened.

In some embodiments, as shown in FIG. 82, the canopy assembly 11A may include two half ceilings 112A which open in opposite directions. The two half ceilings 112A may rotate in opposite directions to move away from each other, so as to open the top opening 120 from the middle. In some alternative embodiments, the middle of the canopy assembly 11A may not be opened, and when the top opening 120 needs to be opened, the front side and/or the rear side of the canopy assembly 11A are flipped upward, so that the front side and/or the rear side of the canopy assembly 11A leave the receiving body 12B, and the top opening 120 is thus opened. Of course, embodiments of the canopy assembly 11A are not limited to the above examples.

It should be noted that, although the canopy assembly 11A in this embodiment is described by taking a fully covering ceiling as an example, in some alternative embodiments, the canopy assembly 11A may be a partially covering ceiling. It will be appreciated that even in the fully expanded state, the partially covering ceiling covers only a portion of the top opening 120 and does not completely close the top opening 120.

It should be noted that, although the carrier 100 in this embodiment is described with the configuration of the canopy assembly 11A as an example, in some alternative embodiments, the carrier 100 may not be configured with the canopy assembly 11A. The carrier 100 without the canopy assembly 11A is also within the protection scope of the present application.

### Seventeenth Embodiment

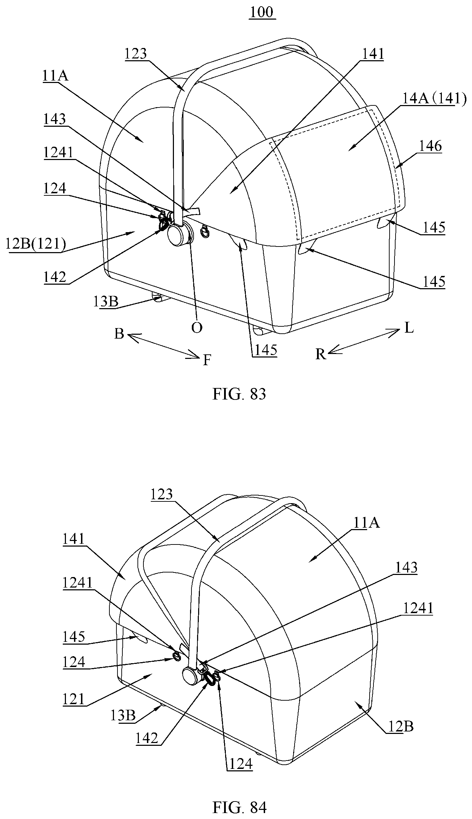

FIGS. 83 and 84 show perspective views of a carrier 100 according to a seventeenth embodiment of the present invention from different angles. This carrier 100 is a variant of the carrier 100 of the sixteenth embodiment described above. In the case of no conflict, the structure of the carrier 100 of this embodiment can refer to the structure of the carrier 100 in the sixteenth embodiment described above.

As shown in FIGS. 83 and 84, the carrier 100 includes a canopy assembly 11A and a receiving body 12B. The canopy assembly 11A is described taking a fully covering ceiling as an example. An engaging rod 13B is disposed at the bottom of the receiving body 12B. The carrier 100 can be detachably connected to the base 200B according to the sixteenth embodiment by means of the engaging rod 13B.

The carrier 100 is also configured with an anti-collision protection device 14A. The anti-collision protection device 14A is detachably connected to at least one of the receiving body 12B, the canopy assembly 11A, or the handle 123. The anti-collision protection device 14A is configured to cover at least a portion of the area of the canopy assembly 11A, such as the front side or the rear side of the canopy assembly 11A. On the one hand, the anti-collision protection device 14A protects the canopy assembly 11A from being damaged when the canopy assembly 11A in the expanded state is impacted, thereby preventing the damaged canopy assembly 11A from protruding into the receiving space 1201 (see FIG. 82) and injuring the pet. On the other hand, when the pet inside the receiving space 1201 collides with the canopy assembly 11A, the anti-collision protection device 14A can also act as a buffer against the collision. In some embodiments, the anti-collision protection device 14A covers an area of the canopy assembly 11A where the structural strength is weak, the impact resistance is poor, and the collision with the pet is prone to happen.

An exemplary embodiment of the anti-collision protection device 14A is shown in this embodiment. The anti-collision protection device 14A may include a shield body 141 and two second connecting elements 142. The shield body 141 has, for example, a shape with two narrow ends and a wide middle part. When the anti-collision protection device 14A is in the usage state shown in FIGS. 83 and 84, the shield body 141 covers the canopy assembly 11A in the expanded state, and the shield body 141 is arched in accordance with the shape of the canopy assembly 11A in the expanded state. Both ends of the shield body 141 correspond to the left and right sides of the carrier 100. Two second connecting elements 142 are disposed at both ends of the shield body 141. first connecting elements 124 are disposed at the left and right sides of the carrier 100, respectively. Each second connecting element 142 can be detachably connected to the corresponding first connecting element 124, so that the shield body 141 laterally covers a viewing area at the front or rear part of the canopy assembly 11A.

Referring to FIGS. 83 and 84, the second connecting elements 142 may be fixed to both ends of the shield body 141 by, for example, webbings 143. The second connecting element 142 is, for example, a hook buckle. At least one first connecting element 124 is disposed on the receiving body 12B. More specifically, one, two, or more first connecting elements 124 are respectively disposed on each of the two first side surfaces 121 of the receiving body 12B. The first connecting element 124 is, for example, a ring made of metal, and the ring can be fixed to the seat cloth of the receiving body 12B through the webbing 1241. The first connecting element 124 is located near the pivot point *O* between the handle 123 and the receiving body 12B. When a plurality of first connecting elements 124 are provided, the plurality of first connecting elements 124 are, for example, symmetrically arranged with respect to the pivot point *O*. The second connecting element 142 may be connected to any of the first connecting elements 124 as required. Of course, the embodiments of the first connecting element 124 and the second connecting element 142 are not limited to the above examples.

In some alternative embodiments, the first connecting element 124 may be disposed on the canopy assembly 11A, for example, on the ceiling fabric of the canopy assembly 11A. In this case, the first connecting element 124 and the second connecting element 142 are, such as Velcros or snap fasteners, that cooperate with each other. Alternatively, in some alternative embodiments, the first connecting element 124 may be disposed on the handle 123. In the case where the first connecting element 124 is provided on the handle 123, the first connecting element 124 may be a hole formed on the handle 123, and the second connecting element 142 is detachably connected to such hole.

Referring to FIG. 83, when the anti-collision protection device 14A is in the usage state, at least one connection point 145 may be formed between the lower edge of the anti-collision protection device 14A and the outer side surface of the receiving body 12B, and such connection point 145 is configured to facilitate fixing the relative positions of the anti-collision protection device 14A and the canopy assembly 11A, so as to avoid sliding of the anti-collision protection device 14A. When the number of connection points 145 is more than one, the connection points correspond, for example, to different outer side surfaces of the receiving body 12B. The connection point 145 may be formed by a structure such as a buckle, a Velcro and a snap fastener that cooperate with each other. In some alternative embodiments, at least one connection point may be formed between the anti-collision protection device 14A and the outer side surface of the canopy assembly 11A. Of course, in some alternative embodiments, at least one connection point can be formed between the anti-collision protection device 14A and the receiving body 12B, and also between the anti-collision protection device 14A and the canopy assembly 11A.

Continuing to refer to FIG. 83, in some embodiments, the material layers of the shield body 141 may include, for example, an inner material layer and an outer material layer made of fabric. The inner material layer faces the canopy assembly 11A, and the outer material layer faces away from the canopy assembly 11A. An energy-absorbing device 146 (shown in dashed lines in FIG. 83) may be interposed between the inner material layer and the outer material layer. The energy-absorbing device 146 is configured to buffer impacts. In some embodiments, the energy-absorbing device 146 may be disposed on a surface of the inner material layer facing away from the outer material layer.

The energy-absorbing device 146 may be disposed in the transverse middle area of the shield body 141 to locally improve the impact resistance performance (i.e., collision protection performance) of an area of the canopy assembly 11A where is most susceptible to impact. The energy-absorbing device 146 may be a single layer structure or a multi-layer structure. If the energy-absorbing device 146 is a single layer structure, it may be made of, for example, inert memory cotton or other suitable material. If the energy-absorbing device 146 is a multi-layer structure, it may be, for example, a combination of an EPP (foamed polypropylene) material layer, an EPS (foamed polystyrene) material layer, and an EPE (foamed polyethylene, also referred to as pearl cotton) material layer; a combination of an inert memory cotton material layer and a PE (polyethylene) material layer, or a combination of other suitable material layers. Of course, in some alternative embodiments, the energy-absorbing device 146 is not limited to being provided in the transverse middle area of the shield body 141, and the area of the shield body 141 covering the canopy assembly 11A may all be provided with the energy-absorbing device 146. In some embodiments, the thickness of the energy-absorbing device 146 may not be uniform. A portion of the energy-absorbing device 146 corresponding to the transverse middle area of the shield body 141 has a relatively large thickness, and portions of the energy-absorbing device 146 corresponding to two end areas of the shield body 141 has a relatively small thickness.

In some embodiments, two anti-collision protection devices 14A may be provided to respectively cover the front side and rear side of the canopy assembly 11A, thereby improving the impact resistance performance of each covered area of the canopy assembly 11A.

### Eighteenth Embodiment

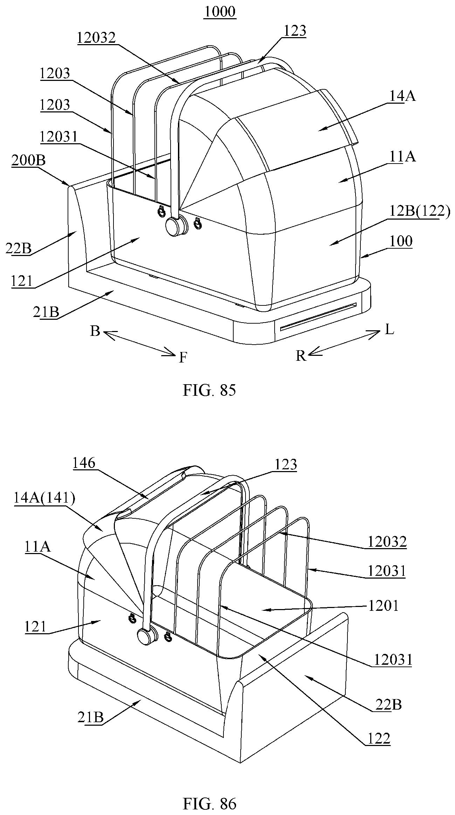

FIGS. 85 and 86 show perspective views of a carrier fixing mechanism 1000 according to an eighteenth embodiment of the present invention from different angles. The carrier fixing mechanism 1000 includes a carrier 100 and a base 200B. The base 200B can refer to the description of the sixteenth embodiment. This carrier 100 is a variant of the carrier 100 of the seventeenth embodiment described above. In the case of no conflict, the structure of the carrier 100 of this embodiment can refer to the structure of the carrier 100 in the seventeenth embodiment described above.

As shown in FIGS. 85 and 86, the carrier 100 includes a canopy assembly 11A, a receiving body 12B, and an anti-collision protection device 14A. The canopy assembly 11A is described taking a partially covering ceiling as an example. The canopy assembly 11A is connected to portions of upper edges of the two first side surfaces 121 and an upper edge of one second side surface 122. An engaging rod 13B is disposed at the bottom of the receiving body 12B. The carrier 100 can be detachably connected to the base 200B by means of the engaging rod 13B.

At least one U-shaped strip 1203 (also referred to as U-shaped elastic strip) is disposed on the receiving body 12B. The U-shaped strip 1203 can serve as an anti-collision protection device. Each U-shaped strip 1203 includes two opposing arms 12031 and a transverse strip 12032 connected between the arms 12031. The U-shaped strip 1203 is arranged upside down on the receiving body 12B, and the transverse strip 12032 is located at the top of the two arms 12031. In some embodiments, the two arms 12031 extend upward from portions of the upper edges of the two first side surfaces 121 that are not covered by the canopy assembly 11A. If the number of U-shaped strips 1203 is more than one, the plurality of U-shaped strips 1203 may be arranged at intervals along the front-rear direction, and the plurality of U-shaped strips 1203 are parallel to each other.

The U-shaped strip 1203 may be made of a soft material, and the U-shaped strip 1203 may be, but is not limited to, a plastic strip or a metal strip. The U-shaped strip 1203 can be elastically deformed when subjected to an external force, thus serving as a buffer against impact.

The anti-collision protection device 14A is configured to cover at least a portion of the area of the canopy assembly 11A to protect the canopy assembly 11A in the expanded state. For the structure of the anti-collision protection device 14A and the fixing manner between the anti-collision protection device 14A and at least one of the receiving body 12B, the canopy assembly 11A or the handle 123, reference may be made to the description of the seventeenth embodiment. In some embodiments, a thickened energy-absorbing device 146 is disposed on the inner material layer of the transverse middle area of the shield body 141, and the energy-absorbing device 146 is in contact with the canopy assembly 11A to provide locally enhanced cushioning performance.

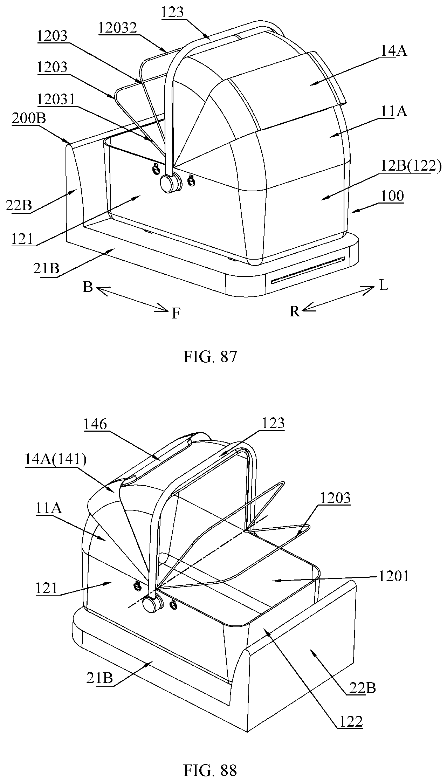

FIGS. 87 and 88 show a variant embodiment of the carrier fixing mechanism 1000 shown in FIGS. 85 and 86, and mainly, the U-shaped strip 1203 shown in FIGS. 85 and 86 is modified. As shown in FIGS. 87 and 88, the plurality of U-shaped strips 1203 are not arranged in parallel with each other, but are arranged at predetermined angles apart in the circumferential direction. The U-shaped strips 1203 are located above the area where the receiving body 12B is not covered by the canopy assembly 11A. In some embodiments, the arms 12031 of the plurality of U-shaped strips 1203 may be connected to the same centerline.

### Nineteenth Embodiment

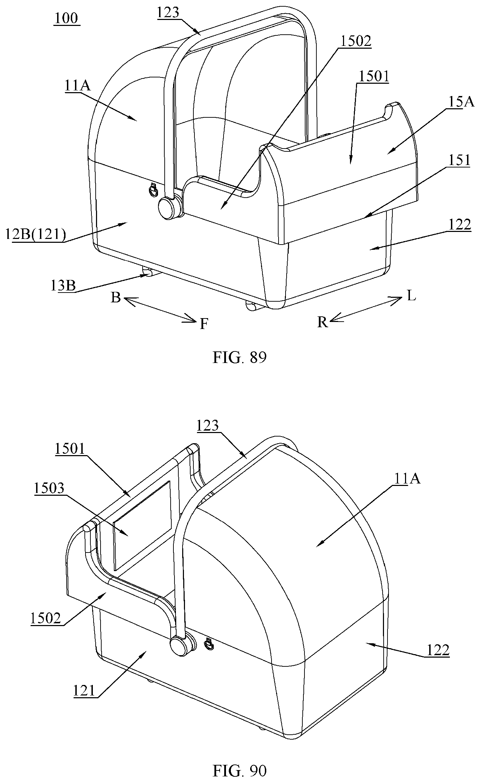

FIGS. 89 and 90 show perspective views of a carrier 100 according to a nineteenth embodiment of the present invention from different angles. This carrier 100 is a variant of the carrier 100 of the eighteenth embodiment described above. In the case of no conflict, the structure of the carrier 100 of this embodiment can refer to the structure of the carrier 100 in the eighteenth embodiment described above.

As shown in FIGS. 89 and 90, unlike the eighteenth embodiment described above, the U-shaped strip 1203 is omitted in this embodiment, and an anti-collision protection device 15A is mounted to an area of the receiving body 12B not connected to the canopy assembly 11A. More specifically, the anti-collision protection device 15A is opposite to the canopy assembly 11A and is detachably connected to the upper edge of the receiving body 12B. More specifically, the bottom 151 of the anti-collision protection device 15A is C-shaped, so that the bottom 151 of the anti-collision protection device 15A covers portions of the upper edges of the two first side surfaces 121 and an upper edge of one second side surface 122.

In some embodiments, the bottom 151 of the anti-collision protection device 15A has, for example, a slot. The slot can be detachably engaged with the upper edge of the receiving body 12B. Of course, the anti-collision protection device 15A may also be disposed on the upper edge of the receiving body 12B in other suitable ways.

The anti-collision protection device 15A can not only buffer the impact from the outside of the carrier 100 or the pet, but also effectively prevent the pet in the receiving space 1201 from falling to the outside of the carrier 100 through the top opening 120, thereby ensuring the safety of the pet in the receiving space 1201.

Referring to FIG. 89, the anti-collision protection device 15A includes a first portion 1501 protruding upward from the second side surface 122 and a second portion 1502 protruding upward from the first side surface 121. The height of the first portion 1501 is greater than the height of the second portion 1502. In some embodiments, steps are formed at a transition part between the first portion 1501 and second portion 1502. In some alternative embodiments, an upper edge of the second portion 1502 extends obliquely to an upper edge of the first portion 1501. In some embodiments, the heights of the first portion 1501 and second portion 1502 may be generally consistent.

In some embodiments, the anti-collision protection device 15A may be made of, for example, an integrally formed foamed material. In some embodiments, the anti-collision protection device 15A may include a fabric layer and an energy-absorbing device wrapped inside the fabric layer. The energy-absorbing device may be made of, for example, an integrally formed foamed material.

In some embodiments, the inner side surface of the anti-collision protection device 15A facing the receiving space 1201 may be provided with a energy-absorbing device 1503. The energy-absorbing device 1503 may be attached to the inner side surface of the anti-collision protection device 15A by bonding or otherwise. The energy-absorbing device 1503 may be a material having a cushioning effect, and may have an appropriate area and thickness. The material and structure of the energy-absorbing device 1503 may refer to, for example, the material and structure of the energy-absorbing device 146 in the second embodiment.

### Twentieth Embodiment

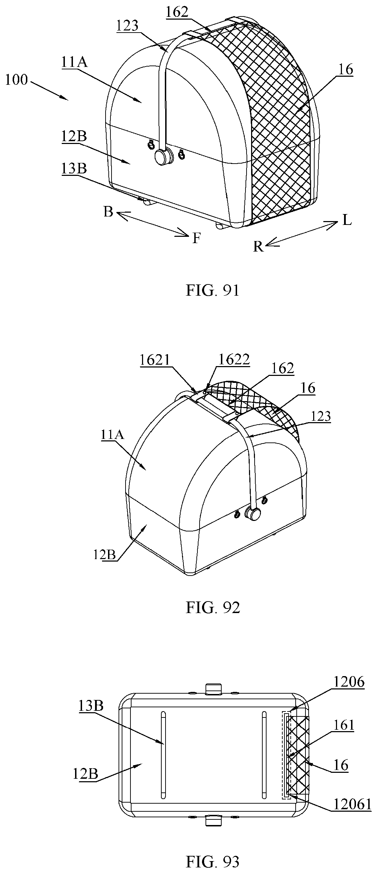

FIGS. 91 to 93 show perspective views of a carrier 100 according to a twentieth embodiment of the present invention from different angles. This carrier 100 is a variant of the carrier 100 of the sixteenth embodiment described above. In the case of no conflict, the structure of the carrier 100 of this embodiment can refer to the structure of the carrier 100 in the sixteenth embodiment described above.

As shown in FIGS. 91 to 93, the carrier 100 includes a canopy assembly 11A and a receiving body 12B. The canopy assembly 11A in the figures is described taking a fully covering ceiling as an example. In other embodiments, the canopy assembly 11A may be a partially covering ceiling. An engaging rod 13B is disposed at the bottom of the receiving body 12B. The carrier 100 can be detachably connected to the base 200B by means of the engaging rod 13B.

The carrier 100 is further configured with a protective sheet 16, which may be a transparent protective mesh or a non-transparent protective cloth. The protective sheet 16 includes a first side edge 161 and a second side edge 162 opposite to each other, the first side edge 161 is connected to the receiving body 12B, and the second side edge 162 extends upward and is detachably connected to the handle 123. When the carrier 100 is mounted to the seat 900 by the base 200B, the handle 123 is rotated to tension the protective sheet 16. The position of the handle 123 is locked after the protective sheet 16 is tensioned to keep the protective sheet 16 in a tensioned state. The tensioned protective sheet 16 covers at least a portion of the canopy assembly 11A to provide impact buffering protection.

In some embodiments, a receiving cavity 1206 may be formed in the receiving body 12B for receiving the protective sheet 16. The protective sheet 16 may be in a stored state when being received in the receiving cavity 1206; or in a usage state when extending out from the receiving cavity 1206 and being connected to the handle 123. An opening 12061 of the receiving cavity 1206, which is configured for the protective sheet 16 to extend out, may be formed on a bottom surface of the receiving body 12B, may be formed on a side surface of the receiving body, or may be formed on an upper edge of the receiving body 12B.

In some embodiments, an automatic reeling retractor (not shown in the figures) is disposed in the receiving cavity 1206. The automatic reeling retractor may include a reeling shaft and a reeling spring connected to the reeling shaft. The first side edge 161 of the protective sheet 16 enters the receiving cavity 1206 through the opening 12061 and is connected to the automatic reeling retractor. When the second side edge 162 of the protective sheet 16 is connected to the handle 123, the length of the protective sheet 16 extending out from the receiving cavity 1206 can be adjusted by changing a pivot position of the handle 123 with respect to the receiving body 12B, and the protective sheet 16 extending out from the receiving cavity 1206 is kept tensioned under the action of the automatic reeling retractor. When there is no need to use the protective sheet 16, the automatic reeling retractor can automatically reel the protective sheet 16 into the receiving cavity 1206. Of course, in some embodiments where the automatic reeling retractor is not provided, the protective sheet 16 may be manually received into the receiving cavity 1206.

Referring to FIG. 92, a connecting band 1621 is disposed on the second side edge 162 of the protective sheet 16. A positioning portion 1622 is disposed on the connecting band 1621. The positioning portion 1622 may be, but is not limited to, a structure such as a Velcro, a snap fastener, a magnetic fastener, or the like. The connecting band 1621 can be positioned by the positioning portion 1622 after being wound around the handle 123 once to form an annular structure detachably sleeved on the handle 123. In some alternative embodiments, the second side edge 162 of the protective sheet 16 may be hooked, for example, to the handle 123.

It should be noted that, although the carrier 100 in this embodiment has the canopy assembly 11A, it can be understood that the protective sheet 16 provided in this embodiment can also be applied to some carriers 100 without the canopy assembly 11A.

In addition, in some alternative embodiments, the second side edge 162 of the protective sheet 16 may not be connected to the handle 123, but rather to the headrest 93. More specifically, an extension band may be disposed on the second side edge 162 of the protective sheet 16. The extension band may be fixed to the headrest of the basal portion 21B. More specifically, the extension band forms an annular structure that can be fitted on the headrest 93.

In addition, in some alternative embodiments, the second side edge 162 of the protective sheet 16 may be connected to the abutment portion 22B of the base 200 after passing over the handle 123 approximately in a vertical state, and the handle 123 supports the protective sheet 16.

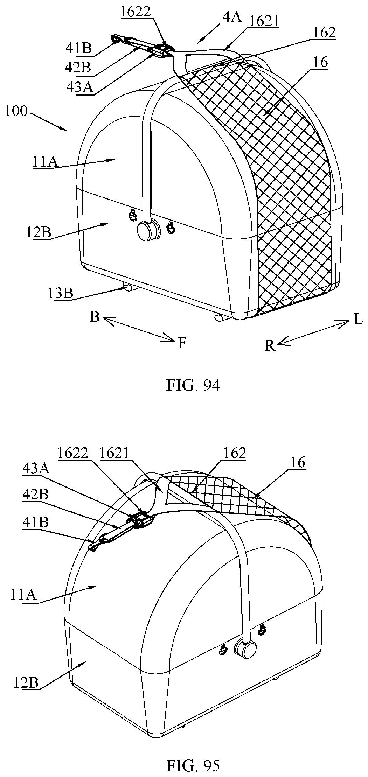

FIGS. 94 and 95 show a variant embodiment of the carrier 100 shown in FIG. 91. The second side edge 162 of the protective sheet 16 is connected to a top tether assembly 4A. An anchoring member 41B is disposed on the top tether assembly 4A. The anchoring member 41B can move downwardly after passing over the top of the backrest 92 to be detachably connected to the anchoring structure on the back surface of the backrest 92. In the embodiment in which the anchoring structure is arranged on the top surface of the backrest 92, the anchoring member 41B is detachably connected to the anchoring structure on the top surface of the backrest 92.

Referring to FIGS. 94 and 95, the top tether assembly 4A includes an anchoring member 41B, a webbing 42B, and a second buckle 43A. The second side edge 162 of the protective sheet 16 is connected to a first buckle 1623 through a connecting band 1621, and the first buckle 1623 and the second buckle 43A are detachably connected. In some embodiments, a length adjuster is disposed on the webbing 42B thereby allowing adjustment of the length of the webbing 42B.

Referring to FIG. 95, in some embodiments, the connecting band 1621 extends from two opposite ends of the second side edge 162 of the protective sheet 16. In some embodiments, a cross rod may be disposed on the second side edge 162 of the protective sheet 16. The connecting band 1621 may extend from a middle position of the second side edge 162.

In some embodiments, the first buckle 1623 and the second buckle 43A may be omitted, and the webbing 42B and the connecting band 1621 may be an integral webbing.

### Twenty-first Embodiment

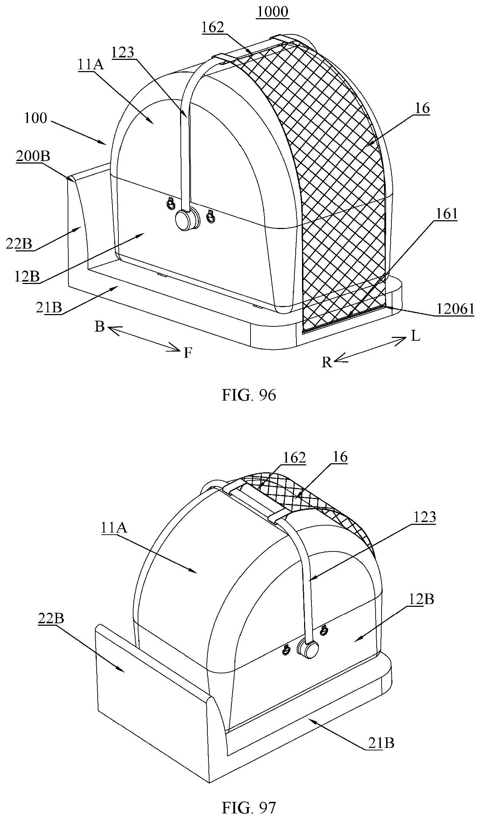

FIGS. 96 and 97 show perspective views of a carrier fixing mechanism 1000 according to a twenty-first embodiment of the present invention from different angles. The base 200B in this embodiment is a variant of the base 200B in the sixteenth embodiment. In the case of no conflict, the structure of the base 200B according to the present embodiment may refer to the structure of the base 200B according to the sixteenth embodiment. The carrier 100 in this embodiment may refer to the carrier 100 in the sixteenth embodiment.

As shown in FIGS. 96 and 97, the carrier 100 includes a canopy assembly 11A and a receiving body 12B. The canopy assembly 11A is described taking a fully covering ceiling as an example. In other embodiments, the canopy assembly 11A may be a partially covering ceiling. An engaging rod 13B is disposed at the bottom of the receiving body 12B. The carrier 100 can be detachably connected to the base 200B by means of the engaging rod 13B.

The base 200B is configured with a protective sheet 16. In the case of no conflict, this protective sheet 16 may refer to the description of the protective sheet 16 in the twentieth embodiment. In this embodiment, unlike the above-described twentieth embodiment, the first side edge 161 of the protective sheet 16 is connected to the base 200B. Accordingly, a receiving cavity (not shown in the figures) for receiving the protective sheet 16 is formed at the front of the base 200B, and an opening 12061 configured for the protective sheet 16 to extend out of the receiving cavity may be formed on the top surface, front side or bottom surface of the base 200B.

### Twenty-second Embodiment

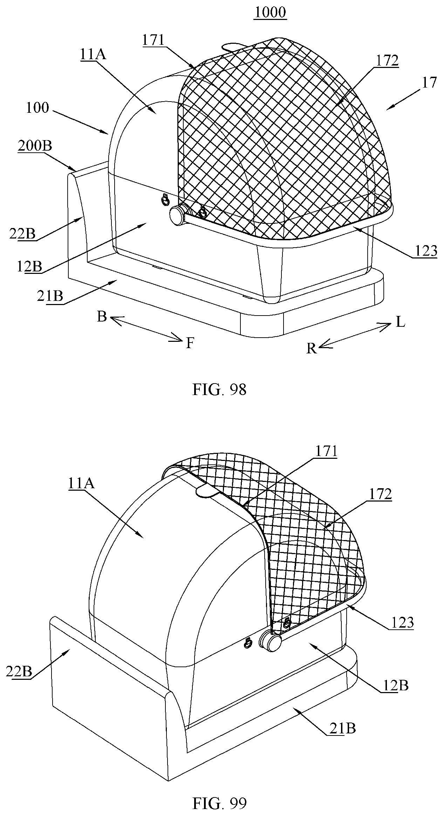

FIGS. 98 to 101 show perspective views of a carrier fixing mechanism 1000 according to a twenty-second embodiment of the present invention from different angles. The carrier fixing mechanism 1000 includes a carrier 100 and a base 200B. This embodiment modifies the carrier 100 in the sixteenth embodiment. In the case of no conflict, the structure of the carrier fixing mechanism 1000 of this embodiment can refer to the structure of the carrier fixing mechanism 1000 in the sixteenth embodiment described above.

As shown in FIGS. 98 and 99, the carrier 100 includes a canopy assembly 11A and a receiving body 12B. The canopy assembly 11A in the figures is described taking a fully covering ceiling as an example. In other embodiments, the canopy assembly 11A may be a partially covering ceiling. In some alternative embodiments, an anti-collision protection device 14A as described in the seventeenth embodiment may be disposed on the canopy assembly 11A. In some alternative embodiments, the carrier 100 may not be configured with the canopy assembly 11A.

The carrier 100 includes a protective shed 17 fixed to the handle 123. The protective shed 17 includes a U-shaped frame 171 and a shed fabric 172. The two ends of the U-shaped frame 171 are pivotally connected with the two ends of the handle 123. A positioning lock (not shown in the figures) may be disposed between the U-shaped frame 171 and the handle 123. The positioning lock may lock the U-shaped frame 171 at different pivot positions with respect to the handle 123. The shed fabric 172 may be a transparent mesh fabric or an opaque fabric. The shed fabric 172 is connected between the U-shaped frame 171 and the handle 123. In some embodiments, an energy-absorbing device (not shown in the figures, please refer to the energy-absorbing device 146 in the seventeenth embodiment or the energy-absorbing device 1503 in the nineteenth embodiment) may be disposed on the shed fabric 172. When the carrier 100 is mounted on the base 200B, the handle 123 may be pivoted forward to place the handle 123 horizontally, and then the pivot position of the U-shaped frame 171 relative to the handle 123 may be adjusted to adjust how much the shed fabric 172 opens. The shed fabric 172 covers the canopy assembly 11A to provide impact buffering protection.

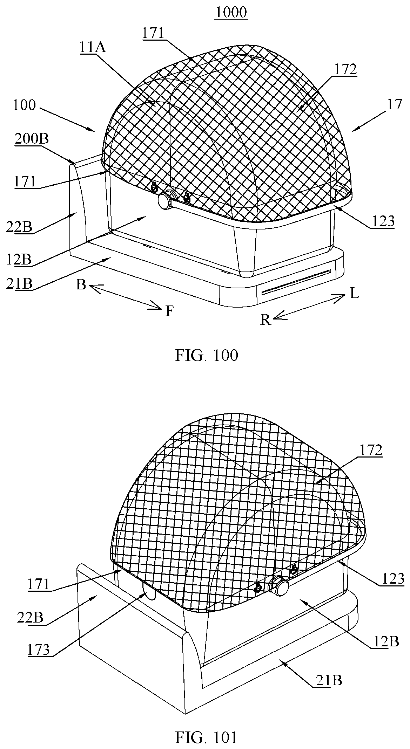

As shown in FIGS. 98 and 99, In some embodiments, the U-shaped frame 171 can pivot to a maximum of 90 degrees with respect to the handle 123. As shown in FIGS. 100 and 101, in some embodiments, the U-shaped frame 171 can pivot to a maximum of 180 degrees with respect to the handle 123. In this case, the shed fabric 172 may completely cover the canopy assembly 11A.

In some embodiments, a positioning member 173 may be disposed at the position of the protective shed 17 corresponding to the U-shaped frame 171. When the U-shaped frame 171 is in the position shown in FIGS. 100 and 101, the positioning member 173 may, for example, cooperate with the corresponding positioning member on the receiving body 12B or the canopy assembly 11A to form a fixing joint point so as to lock the position of the U-shaped frame 171. In some embodiments, the positioning member 173 is located, for example, at a middle position of the U-shaped frame 171. The positioning member 173 may be, for example, a Velcro, a snap fastener, a buckle, or the like.

### Twenty-third Embodiment

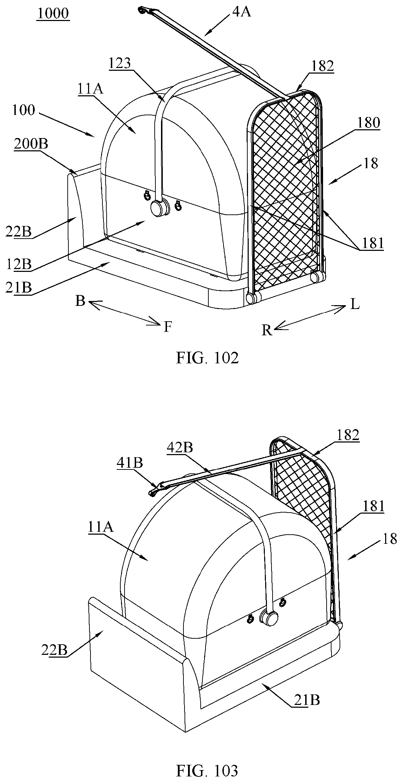

FIGS. 102 to 103 show perspective views of a carrier fixing mechanism 1000 according to a twenty-third embodiment of the present invention from different angles. The carrier fixing mechanism 1000 includes a carrier 100 and a base 200B. This embodiment modifies the carrier 100 in the sixteenth embodiment. In the case of no conflict, the structure of the carrier fixing mechanism 1000 of this embodiment can refer to the structure of the carrier fixing mechanism 1000 in the sixteenth embodiment described above.

As shown in FIGS. 102 and 103, the carrier 100 includes a canopy assembly 11A and a receiving body 12B. The canopy assembly 11A in the figures is described taking a fully covering ceiling as an example. In other embodiments, the canopy assembly 11A may be a partially covering ceiling. In some alternative embodiments, an anti-collision protection device 14A as described in the second embodiment may be disposed on the canopy assembly 11A. In some alternative embodiments, the carrier 100 may not be configured with the canopy assembly 11A.

A blocking member 18 is disposed on the front end of the base 200B. The blocking member 18 extends upward from the front end of the basal portion 21B by a certain height to protect the receiving body 12B and the canopy assembly 11A. The blocking member 18 includes a U-shaped rod, which includes a bar member 182, and two bar members 181 spaced apart from each other on the left and right. The lower ends of the two bar members 181 are connected to the front end of the base 200B (more specifically, to the front end of the basal portion 21B), and the upper ends of the two bar members 181 are respectively connected to the bar member 182. In some embodiments, the bar members 181 and the bar member 182 may be made of hollow tube units.

The blocking member 18 may also include an energy-absorbing device 180. During emergency braking of the vehicle, the energy-absorbing device 180 can cushion the impact force on the carrier 100. An exemplary embodiment of the energy-absorbing device 180 is shown in this embodiment. Specifically, the energy-absorbing device 180 includes a mesh structure. The mesh structure may be a fabric mesh or a metal mesh. The mesh structure is connected to the bar member 182 and the two bar members 181 at the same time. In some embodiments, the energy-absorbing device 180 may further include at least one shock absorbing material disposed on the mesh structure. The shock absorbing material is at least arranged on a side of the mesh structure facing the carrier 100, and when impact occurs, the shock absorbing material abuts against the carrier 100.

In some embodiments, the bar member 181 may be a telescopic bar including at least two tube units sleeved together. The relative positions of the at least two tube units may be locked by a position locking mechanism not shown. When the position locking mechanism is in a locked state, the plurality of tube units of the bar member 181 cannot be relatively telescoped or are difficult to be relatively telescoped. When the position locking mechanism is in an unlocked state, the plurality of tube units of the bar member 181 can be easily telescoped relative to each other, thereby allowing adjustment of the length of the bar member 181. When the bar member 181 is a telescopic bar, the innermost tube unit of the telescopic bar is connected to the basal portion 21B, and the mesh structure of the energy-absorbing device 180 is connected to the outermost tube unit of the telescopic bar. The height of the mesh structure can be adjusted by adjusting the length of each bar member 181.

In some embodiments, the carrier fixing mechanism 1000 may also be configured with a top tether assembly 4A. The top tether assembly 4A includes an anchoring member 41B and a webbing 42B. An end of the webbing 42B can be connected to the blocking member 18 (e.g., detachably connected to the bar member 182), and the anchoring member 41B is disposed on the other end of the webbing 42B. The anchoring member 41B can move downwardly after passing over the top of the backrest 92 to be detachably connected to the anchoring structure on the back surface of the backrest 92. In some alternative embodiments, an end of the top tether assembly 4A is connected to the blocking member 18 and the other end may be connected to the headrest 93. In some embodiments, a length adjuster is disposed on the webbing 42B thereby allowing adjustment of the length of the webbing 42B.

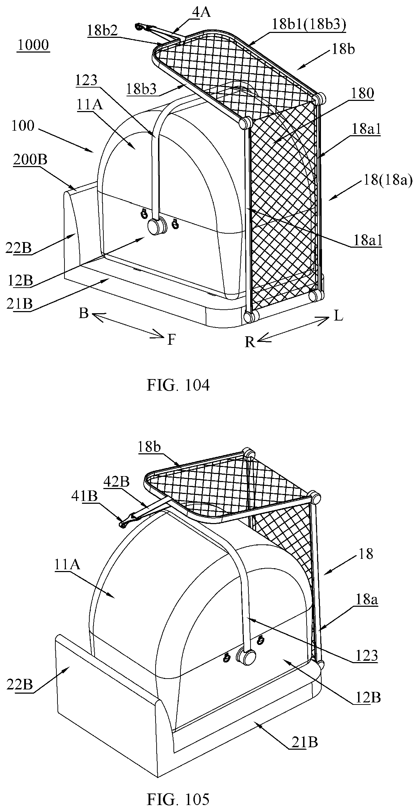

FIGS. 104 and 105 show a variant embodiment of the carrier fixing mechanism 1000 shown in FIGS. 102 and 103, and the structure of the blocking member 18 is mainly modified. As shown in the figures, the blocking member 18 may be of a bent type having a multi-section design. The pivoting angles between different sections may be adjusted to form a more comprehensive protection for the carrier 100.

Referring to FIGS. 104 and 105, more specifically, the blocking member 18 includes a first section 18a and a second section 18b. The first section 18a includes two bar members 18a1, which are set to be spaced apart from each other on the left and right. An end of each bar member 18a1 is connected to the front end of the basal portion 21B, and the other end of each bar member 18a1 extends upward. The second section 18b includes a U-shaped bracket 18b1, which includes a bar member 18b2 and two bar members 18b3. An end of each bar member 18b3 is pivotally connected to the upper end of each bar member 18a1, and the other end of each bar member 18b3 is connected to the bar member 18b2. Force absorbing devices 180 are disposed on the first section 18a and the second section 18b. In some embodiments, the bar member 18a1 may be a telescopic bar.

A rotation locking mechanism (not shown in the figures) may be disposed between the first section 18a and the second section 18b. The rotation locking mechanism can lock the relative pivot positions of the first section 18a and the second section 18b so that the blocking member 18 remains in a certain state. In some embodiments, the rotation locking mechanism may have a locked state and an unlocked state. When the rotation locking mechanism is in the locked state, the first section 18a and the second section 18b cannot rotate relative to each other. When the rotation locking mechanism is in the unlocked state, the first section 18a and the second section 18b can rotate relative to each other.

It should be noted that although the blocking member 18 in the above embodiment includes two sections, in other embodiments, the blocking member 18 may include three or more sections. In some embodiments, the blocking member 18 has a section connected to and supported by the abutment portion 22B of the base 200B.

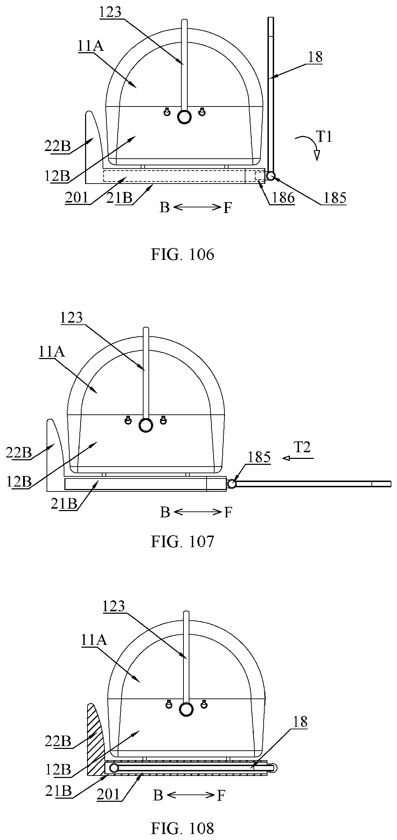

FIGS. 106 to 108 show an exemplary embodiment in which the blocking member 18 shown in FIGS. 102 and 103 is housed in the base 200B. A storage cavity 201 is formed inside the base 200B. The lower end of the blocking member 18 is pivotally connected to the slider 186 by a pivot joint 185. The slider 186 slidably engages with the storage cavity 201. A rotation locking mechanism (not shown in the figures) is disposed on the pivot joint 185 for locking the relative pivot positions of the blocking member 18 and the slider 186. When it is necessary to store the blocking member 18, the rotation locking mechanism is switched to an unlocked state, then the blocking member 18 is rotated in the direction T1 to a horizontal state, and then the blocking member 18 is pushed into the storage cavity 201 in the direction T2. When the blocking member 18 needs to be used, the blocking member 18 is pulled in a direction opposite to the direction T2, and then the blocking member 18 is rotated in a direction opposite to the direction T1 after the blocking member 18 is moved out of the storage cavity 201. After the blocking member 18 is rotated in place, the rotation locking mechanism is switched to a locked state, so that the blocking member 18 cannot rotate relative to the slider 186 now.

In some embodiments, the lower end of the blocking member 18 is detachably connected to the slider 186 directly or indirectly. For example, when there is no need to use the blocking member 18, the blocking member 18 may disengage from the pivot joint 185, or the blocking member 18 may disengage from the slider 186 together with the pivot joint 185 at its lower end.

When the blocking member 18 is of a bent structure such as that shown in FIGS. 104 and 105 and the blocking member 18 needs to be received, a plurality of sections of the blocking member 18 may be folded together first. The plurality of sections may be substantially parallel to each other after being folded. The folded blocking member 18 may then be pushed into the storage cavity 201.

In some alternative embodiments, the slider 186 and the storage cavity 201 in FIGS. 106 to 108 may be omitted. The blocking member 18 is pivotally connected to the basal portion 21B of the base 200B by the pivot joint 185, and the blocking member 18 is detachably connected to the basal portion 21B of the base 200B directly or indirectly. When there is no need to use the blocking member 18, the blocking member 18 may disengage from the pivot joint 185, or the blocking member 18 may disengage from the basal portion 21B together with the pivot joint 185 at its lower end.

In some embodiments not shown, a receiving groove for receiving the blocking member 18 may be formed on the upper surface of the basal portion 21B. The blocking member 18 is pivotally connected to the front end of the basal portion 21B through a pivot joint. When there is no need to use the blocking member 18, the blocking member 18 is rotated in a direction opposite to the direction T1 shown in FIG. 106, and the blocking member 18 can be directly embedded into the receiving groove. The blocking member 18 may be configured with the energy-absorbing device 180 with a mesh structure, which can be elastically deformed to a certain extent and does not affect the connection of the carrier 100 and the base 200B.

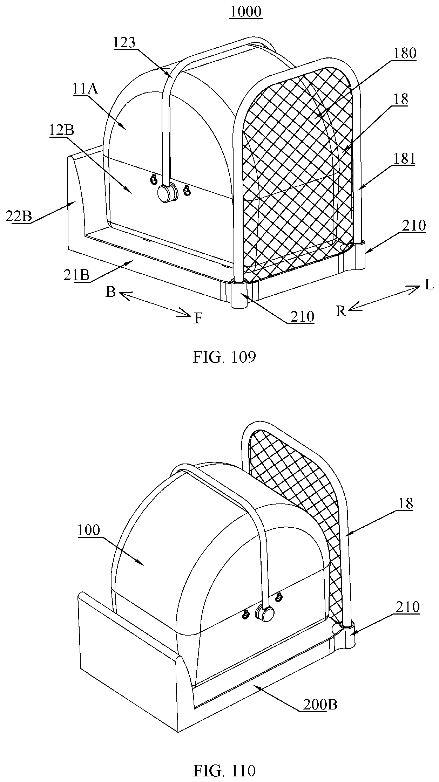

FIGS. 109 and 110 show another variant embodiment of the carrier fixing mechanism 1000 shown in FIGS. 102 and 103, and the blocking member 18 is detachably connected to the basal portion 21B, and more specifically, the lower end of the blocking member 18 is detachably connected to the basal portion 21B. More specifically, a socket 210 is formed at the front end of the basal portion 21B. The lower end of the bar member 181 can be inserted into the socket 210 to fix the blocking member 18 to the base 200B. When there is no need to use the blocking member 18, the lower end of the bar member 181 can be pulled out from the socket 210 to remove the blocking member 18 from the base 200B. The bar member 181 may be a telescopic bar. Of course, the manner in which the blocking member 18 is detachably connected to the basal portion 21B is not limited to the above examples.

In some embodiments, a chamber (not shown in the figures) may be formed in the base 200B to receive the blocking member 18, and the blocking member 18 removed from the base 200B may be received in the chamber.

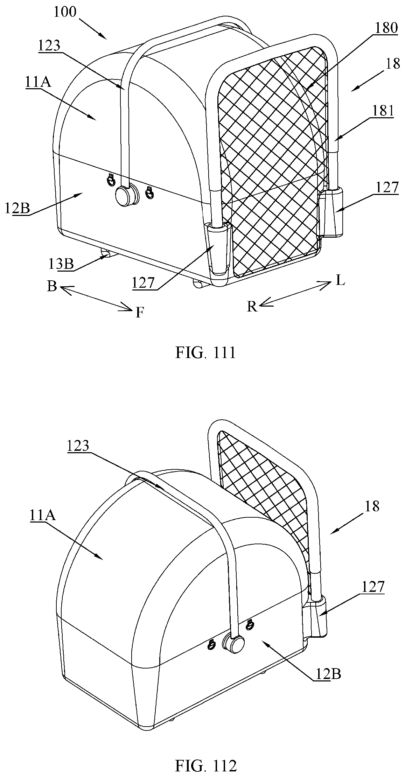

FIGS. 111 and 112 show another modified manner for mounting the blocking member 18. The blocking member 18 is not connected to the base 200B, but is detachably connected to the carrier 100. More specifically, a socket 127 is formed at the front end of the receiving body 12B of the carrier 100, and the bar member 181 of the blocking member 18 is inserted into the socket 127. The bar member 181 may be a telescopic bar. In the case of no conflict, the structure of the carrier 100 of this embodiment can refer to the structure of the carrier 100 in any embodiment. Of course, the manner in which the blocking member 18 is detachably connected to the carrier 100 is not limited to the above examples.

### Twenty-fourth Embodiment

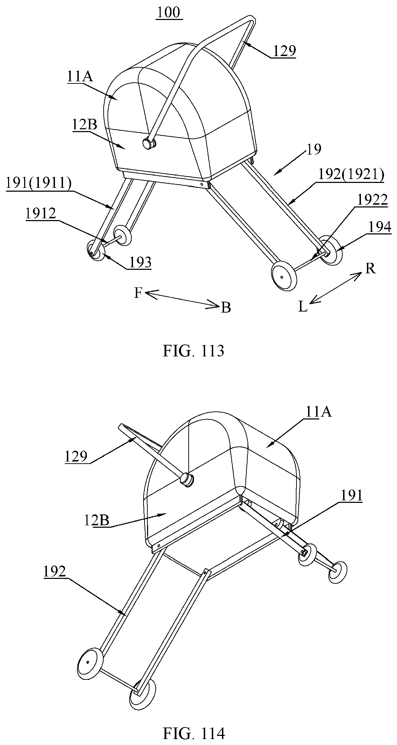

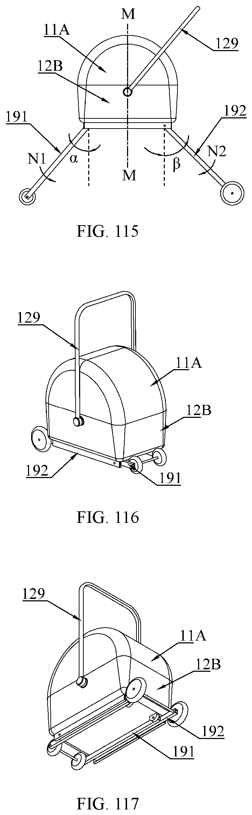

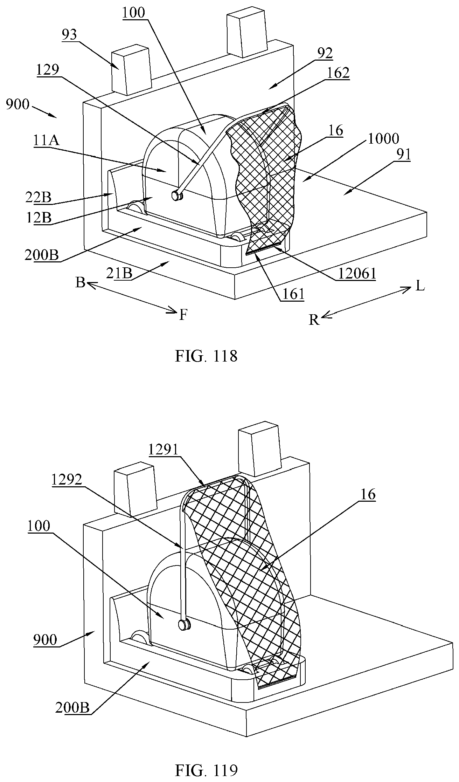

FIGS. 113 to 115 show perspective views illustrating a carrier 100 used as a stroller according to a twenty-fourth embodiment of the present invention from different angles, and supporting leg device 19 of the carrier 100 is in an unfolded state. FIGS. 116 and 117 show perspective views illustrating the carrier 100 with the supporting leg device 19 being in a stored state from different angles. FIGS. 118 and 119 show perspective views illustrating the carrier 100 shown in FIGS. 116 and 117 being mounted to a base 200B from different angles.

As shown in FIGS. 113 and 114, the carrier 100 includes a canopy assembly 11A, a receiving body 12B, a supporting leg device 19, and a handlebar 129.

The canopy assembly 11A may be a fully covering ceiling, or a partially covering ceiling. In the case of no conflict, the structures of the canopy assembly 11A and the receiving body 12B can refer to those described in any of the preceding embodiments. Of course, in some alternative embodiments, the carrier 100 may not be configured with the canopy assembly 11A.

The supporting leg device 19 includes a front supporting leg 191 and a rear supporting leg 192. The front supporting leg 191 includes two front bars 1911 and a first cross bar 1912. The upper ends of the two front bars 1911 are pivotally connected to the receiving body 12B respectively, and the first cross bar 1912 is connected between the two front bars 1911. The first cross bar 1912 is, for example, located close to the lower ends of the two front bars 1911. Front wheels 193 are mounted at the bottom of the front supporting leg 191. The rear supporting leg 192 includes two rear bars 1921 and a second cross bar 1922. The upper ends of the two rear bars 1921 are pivotally connected to the receiving body 12B respectively, and the second cross bar 1922 is connected between the two rear bars 1921. The second cross bar 1922 is, for example, located close to the lower ends of the two rear bars 1921. Rear wheels 194 are mounted at the bottom of the rear supporting leg 192. The front supporting leg 191 and the rear supporting leg 192 may be pivotally unfolded, so that the carrier 100 can be used as a stroller.

In this embodiment, the two front bars 1911 are pivotally connected to the bottom of the front end of the receiving body 12B, and the two rear bars 1921 are pivotally connected to the bottom of the rear end of the receiving body 12B. When the supporting leg device 19 is unfolded, the front supporting leg 191 and the rear supporting leg 192 are separated from each other and form a trumpet shape. As shown in FIG. 115, an acute angle *α* is formed between the front supporting leg 191 and a vertical plane, and an acute angle *β* is formed between the rear supporting leg 192 and the vertical plane. In some alternative embodiments, the middle of the two front bars 1911 and the middle of the two rear bars 1921 are pivotally connected, so that the supporting leg device 19 forms an X shape when the supporting leg device 19 is unfolded.

A locking mechanism for locking the pivot position of the front supporting leg 191 may be disposed between the front supporting leg 191 and the receiving body 12B. A locking mechanism for locking the pivot position of the rear supporting leg 192 may be disposed between the rear supporting leg 192 and the receiving body 12B. The locking mechanism has a locked state and an unlocked state to allow rotation of the front supporting leg 191 and the rear supporting leg 192, or to lock rotation of the front supporting leg 191 and the rear supporting leg 192.

In some embodiments, the locking mechanisms of the front supporting leg 191 and the rear supporting leg 192 may be linked. If one of the two locking mechanisms of the front supporting leg 191 and the rear supporting leg 192 is unlocked, then the other one is also unlocked. Both the front supporting leg 191 and the rear supporting leg 192 can be locked after they are unfolded in place. In some embodiments, the locking mechanisms of the front supporting leg 191 and the rear supporting leg 192 are not linked. The unlocking operation and the locking operation of each locking mechanism are performed separately.

Referring to FIG. 115, when it is necessary to place the carrier 100 on the base 200B, the front supporting leg 191 is rotated backward in the direction N1 and the rear supporting leg 192 is rotated forward in the direction N2 until both the front supporting leg 191 and the rear supporting leg 192 arrive at the bottom of the receiving body 12B (see FIG. 116). Referring to FIGS. 116 and 117, the front supporting leg 191 and the rear supporting leg 192 are substantially flush after arriving the bottom of the receiving body 12B, which means the supporting leg device 19 is switched to the stored state.

Referring to FIG. 117, when the supporting leg device 19 is in the stored state, one of the front supporting leg 191 and the rear supporting leg 192 is located on the inner side of the other the front supporting leg 191 and the rear supporting leg 192. In this case, the first cross bar 1912 and the second cross bar 1922 can be used as engaging rods of the carrier 100 for detachably engaging with the base 200B. Referring to FIGS. 118 and 119, the carrier 100 is detachably engaged with the engagement mechanism on the pedestal 21 by the first cross bar 1912 and the second cross bar 1922. The protective sheet 16 as described in the above embodiment may be disposed on the base 200B.

Referring to FIGS. 118 and 119, the handlebar 129 is pivotally connected to the receiving body 12B, and the pivot position of the handlebar 129 relative to the receiving body 12B can be adjusted. In some embodiments, the handlebar 129 can be extended and retracted. When the carrier 100 is used as a stroller, the handlebar 129 can be extended to a longer length and adjusted to a suitable pivot position. As shown in FIG. 118, when the carrier 100 is mounted on the base 200B, the handlebar 129 may firstly be retracted to an appropriate length, then the second side edge 162 of the protective sheet 16 is detachably connected to the handlebar 129. Then, the pivot position of the handlebar 129 is adjusted to tension the protective sheet 16. The tensioned protective sheet 16 can provide protection to the carrier 100.

In some embodiments, the protective sheet 16 may be connected only to the cross bar 1291 of the handlebar 129. In some embodiments, the protective sheet 16 may be connected to both the cross bar 1291 and the side bar 1292 of the handlebar 129, and may provide three-dimensional protection for the carrier 100 when the protective sheet 16 is tensioned.

Of course, in some alternative embodiments, the second side edge 162 of the protective sheet 16 may be connected to the abutment portion 22B of the base 200 after passing over the handlebar 129 approximately in a vertical state, so that the handlebar 129 supports the protective sheet 16. Alternatively, the second side edge 162 of the protective sheet 16 is connected to the top tether assembly 4A described above.

In some embodiments, a carrier fixing mechanism includes a carrier and a top tether. The top tether has an anchoring member. The carrier and the top tether are detachably connected by at least one connecting assembly.

In some embodiments, the carrier fixing mechanism further includes a LATCH structure. The LATCH structure is connected to the carrier and includes at least one insertion connector configured for connecting to at least one connection point of a vehicle seat.

In some embodiments, the connecting assembly includes a connector and a positioner. The connector is connected to the top tether. The positioner is connected to the carrier. The connector is detachably connected to the positioner. The top tether includes a webbing portion and a sheet portion. The webbing portion is connected to an anchoring member. The sheet portion is connected to the connector.

In some embodiments, an adjuster is disposed on the webbing portion.

In some embodiments, the sheet portion covers at least a part of the front surface of the carrier.

In some embodiments, the sheet portion is formed as triangular. The webbing portion extends from one corner of the sheet portion. The connectors are respectively disposed on the other two corners of the sheet portion.

In some embodiments, the top tether further includes a rod. The webbing portion and the sheet portion are respectively connected to the rod.

In some embodiments, the rod has a hollow structure and an aperture communicating with the hollow structure. An automatic reeling retractor is disposed in the hollow structure. The sheet portion is connected to the automatic reeling retractor after passing through the aperture.

In some embodiments, the top tether includes a rod, a webbing portion and a sheet portion. The webbing portion and the sheet portion are respectively connected to the rod. The webbing portion is connected to an anchoring member. The sheet portion is connected to a connector.

In some embodiments, the rod has a hollow structure and an aperture communicating with the hollow structure. An automatic reeling retractor is disposed in the hollow structure. The sheet portion is connected to the automatic reeling retractor after passing through the aperture.

In some embodiments, a carrier fixing mechanism includes a carrier and a carrier restraint structure. The carrier restraint structure includes a top tether and a LATCH structure. The top tether includes an anchoring member configured for connecting to an anchoring structure in a vehicle. The LATCH structure includes at least one insertion connector configured for connecting to at least one connection point of a vehicle seat. The top tether and the LATCH structure are configured to define a space for restraining the carrier with a backrest of the vehicle seat.

In some embodiments, the top tether includes a connecting band and a sheet portion. The anchoring member is connected to the connecting band. The LATCH structure is connected to the sheet portion.

In some embodiments, the top tether includes a connecting band, a sheet portion, a rod, and at least one extension band. A first side edge of the sheet portion and the connecting band are respectively connected to the rod. A second side edge of the sheet portion is connected to the at least one extension band. The first side edge is opposite to the second side edge. The LATCH structure is connected to the at least one extension band.

In some embodiments, at least a part of the sheet portion covers a front surface of the carrier.

In some embodiments, the rod has a hollow structure and an aperture communicating with the hollow structure. An automatic reeling retractor is disposed in the hollow structure. The first side edge of the sheet portion is connected to the automatic reeling retractor after passing through the aperture.

In some embodiments, at least one connector is disposed on the connecting band. The at least one connector is configured for connecting to the carrier.

In some embodiments, at least one connector is disposed on the top tether. The at least one connector is configured for detachably connecting to a front surface of the carrier.

In some embodiments, the top tether is connected to the carrier by at least one connecting assembly.

In some embodiments, the connecting assembly includes a connector and a positioner. The connector is connected to the top tether. The positioner is connected to the carrier. The connector is detachably connected to the positioner.

In some embodiments, a carrier fixing mechanism includes a base and a blocking member. A LATCH structure is disposed on an end of the pedestal. The pedestal is adapted to be placed on a seat cushion of a seat. The blocking member is connected to another end of the pedestal. The blocking member extends upward from the pedestal to form a space for receiving a carrier with a backrest of the seat.

In some embodiments, the blocking member is pivotally connected to the pedestal.

In some embodiments, the pedestal has a telescopic structure.

In some embodiments, the pedestal includes two parallel bar members. Each bar member includes at least one tube unit sleeved together. Relative positions of the at least one tube unit is locked by a position locking mechanism.

In some embodiments, a shock absorbing structure is disposed on the pedestal and/or the blocking member.

In some embodiments, a carrier is mounted on the pedestal. The carrier is connected to the pedestal by a first positioning structure.

In some embodiments, the first positioning structure is a snap-on structure or a magnetic structure.

In some embodiments, a carrier is mounted on the pedestal. The carrier is connected to the blocking member by a second positioning structure.

In some embodiments, a carrier fixing mechanism includes a base and a carrier. The base is adapted to be detachably mounted on a seat. The base includes a basal portion and an abutment portion extending upward from the basal portion. The basal portion is adapted to be placed on a seat cushion of the seat. The abutment portion is adapted to abut against a backrest of the seat. The carrier is detachably connected to the base.

In some embodiments, the carrier includes a receiving body and a canopy assembly disposed on the receiving body. The carrier is further configured with an anti-collision protection device covering at least a part of an area of the canopy assembly.

In some embodiments, the anti-collision protection device covers a front side area of the canopy assembly.

In some embodiments, the anti-collision protection device includes a shield body and two second connecting elements. The two second connecting elements are disposed at both ends of the shield body. first connecting elements are disposed at the left and right sides of the carrier, respectively. Each second connecting element is detachably connected to the corresponding first connecting element.

In some embodiments, the anti-collision protection device includes an energy-absorbing device disposed on the shield body.

In some embodiments, when the anti-collision protection device is in a usage state, at least one connection point is formed between a lower edge of the anti-collision protection device and an outer side surface of the receiving body.

In some embodiments, the carrier includes a receiving body and a canopy assembly disposed on the receiving body. The canopy assembly is a partially covering ceiling. A U-shaped elastic strip is disposed in an area where the receiving body is not covered by the canopy assembly.

In some embodiments, two arms of the U-shaped elastic strip protrude upward from an upper edge of the receiving body not covered by the canopy assembly.

In some embodiments, the number of the U-shaped elastic strips is more than one. A plurality of U-shaped elastic strips are arranged at intervals along a front-rear direction.

In some embodiments, the carrier includes a receiving body and a canopy assembly disposed on the receiving body. The canopy assembly is a partially covering ceiling. An upper edge of the receiving body which is not connected to the canopy assembly is detachably connected to an anti-collision protection device.

In some embodiments, the receiving body includes two opposite first side surfaces and two opposite second side surfaces. The two second side surfaces are located between the two first side surfaces. The first side surfaces extend in a front-rear direction, and the second side surfaces extend in a left-right direction. The anti-collision protection device includes a first portion protruding upward from the second side surface, and a second portion protruding upward from the first side surface. A height of the first portion is greater than a height of the second portion.

In some embodiments, the anti-collision protection device includes an integrally formed foamed material.

In some embodiments, the carrier includes a receiving body and a handle pivotally connected to the receiving body. The carrier fixing mechanism further includes a protective sheet. A first side edge of the protective sheet is connected to the carrier or the basal portion. A second side edge of the protective sheet is detachably connected to the handle or a top tether assembly.

In some embodiments, the carrier includes a receiving body and a handle pivotally connected to the receiving body. A protective shed is mounted on the handle. The protective shed includes a U-shaped frame and a shed fabric. Two ends of the U-shaped frame are pivotally connected to two ends of the handle. A pivot position of the U-shaped frame relative to the handle can be adjusted to cover the shed fabric over the receiving body.

In some embodiments, a positioning member is disposed on the protective shed. The positioning member is configured to cooperate with a corresponding positioning member on the receiving body or the canopy assembly to form a fixing joint point so as to lock the position of the U-shaped frame.

In some embodiments, a blocking member extending upward is disposed on a front end of the basal portion or the carrier. The blocking member includes an energy-absorbing device and a bar member supporting the energy-absorbing device. The energy-absorbing device faces the carrier.

In some embodiments, the blocking member is pivotally connected to the basal portion. A storage cavity is formed inside the base. The blocking member can be inserted into the storage cavity when being pivoted to a horizontal state.

In some embodiments, a supporting leg device is disposed at a bottom of the carrier. The supporting leg device has an unfolded state and a stored state. When the carrier is removed from the base and the supporting leg device is in the unfolded state, the carrier can be used as a stroller. When the supporting leg device is in the stored state, a bar member of the supporting leg device can be detachably engaged with the base.

In some embodiments, a carrier fixing mechanism includes a base, a carrier and a protective sheet. The base is adapted to be detachably mounted on a seat. The base includes a basal portion. The basal portion is adapted to be placed on a seat cushion of the seat. The carrier is detachably connected to the base. The carrier includes a receiving body and a handle pivotally connected to the receiving body. A first side edge of the protective sheet is connected to the basal portion. A second side edge of the protective sheet is detachably connected to the handle or a top tether assembly.

In some embodiments, a carrier fixing mechanism includes a carrier and a protective sheet. The carrier includes a receiving body and a handle pivotally connected to the receiving body. A first side edge of the protective sheet is connected to the receiving body. A second side edge of the protective sheet is detachably connected to the handle or a top tether assembly.

In some embodiments, the protective sheet is tensioned by rotating the handle or adjusting the top tether assembly. The tensioned protective sheet covers a front side area of the carrier.

In some embodiments, a receiving cavity for receiving the protective sheet is formed in the carrier or the basal portion. The protective sheet has a stored state when being received in the receiving cavity, and a usage state when extending out from the receiving cavity and being connected to the handle or the top tether assembly.

In some embodiments, the tensioned protective sheet covers at least a part of the canopy assembly of the carrier.

In some embodiments, the second side edge of the protective sheet is connected to an abutment portion of the base after passing over the handle in a vertical state, so that the handle supports the protective sheet. The abutment portion extends upward from a rear end of the basal portion. The abutment portion is adapted to abut against a backrest of a seat.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several embodiment modes of the present invention, and the description thereof is relatively specific and detailed, but it should not be construed as limiting the scope of the invention patent. It should be noted that for those skilled in the art, various modifications and improvements may be made without departing from the concept of the present invention, and all these modifications and improvements belong to the protection scope of the present invention. Therefore, the scope of protection of the invention patent shall be subject to the appended claims.

## Claims

1. A carrier fixing mechanism, comprising a carrier and a top tether, the top tether having an anchoring member, the carrier and the top tether being detachably connected by at least one connecting assembly;
wherein the connecting assembly comprises a connector and a positioner, the connector is connected to the top tether, the positioner is connected to the carrier and located on a front surface of the carrier, and the connector is detachably connected to the positioner.

2. The carrier fixing mechanism according to claim 1, further comprising an LATCH structure, wherein the LATCH structure is connected to the carrier and comprises at least one insertion connector configured for connecting to at least one connection point of a vehicle seat; and wherein the top tether comprises a webbing portion and a sheet portion, the webbing portion is connected to the anchoring member, the sheet portion is connected to the connector, and the sheet portion covers at least a part of the front surface of the carrier.

3. A carrier fixing mechanism, comprising a carrier and a carrier restraint structure, wherein the carrier restraint structure comprises a top tether and an LATCH structure; the top tether comprises an anchoring member configured for connecting to an anchoring structure in a vehicle; the LATCH structure comprises at least one insertion connector configured for connecting with at least one connection point of a vehicle seat; and the top tether and the LATCH structure are configured to define a space for restraining the carrier with a backrest of the vehicle seat.

4. The carrier fixing mechanism according to claim 3, wherein the top tether comprises a connecting band and a sheet portion, the anchoring member is connected to the connecting band, and the LATCH structure is connected to the sheet portion.

5. The carrier fixing mechanism according to claim 3, wherein at least one connector is disposed on the top tether, and the at least one connector is configured for detachably connecting to a front surface of the carrier.

6. A carrier fixing mechanism, comprising:
a pedestal, a LATCH structure being disposed on an end of the pedestal, wherein the pedestal is adapted to be placed on a seat cushion of a seat; and
a blocking member connected to another end of the pedestal, wherein the blocking member is pivotally connected to the pedestal, and extends upward from the pedestal to form a space for receiving a carrier with a backrest of the seat.

7. The carrier fixing mechanism according to claim 6, wherein the pedestal has a telescopic structure, the pedestal comprises two parallel bar members, each bar member comprises at least one tube unit sleeved together, and relative positions of the at least one tube unit is locked by a position locking mechanism.

8. The carrier fixing mechanism according to claim 6, wherein a carrier is mounted on the pedestal, the carrier is connected to the pedestal by a first positioning structure, and the carrier is connected to the blocking member by a second positioning structure.

9. A carrier fixing mechanism, comprising a base and a carrier, wherein the base is adapted to be detachably mounted on a seat, the base comprises a basal portion and an abutment portion extending upward from the basal portion, the basal portion is adapted to be placed on a seat cushion of the seat, the abutment portion is adapted to abut against a backrest of the seat, and the carrier is detachably connected to the base.

10. The carrier fixing mechanism according to claim 9, wherein the carrier comprises a receiving body and a canopy assembly disposed on the receiving body, the carrier is further configured with an anti-collision protection device covering at least a part of the canopy assembly.

11. The carrier fixing mechanism according to claim 9, wherein the carrier comprises a receiving body and a canopy assembly disposed on the receiving body, the canopy assembly is a partially covering ceiling, and a U-shaped elastic strip is disposed in an area where the receiving body is not covered by the canopy assembly.

12. The carrier fixing mechanism according to claim 11, wherein two arms of the U-shaped elastic strip protrude upward from an upper edge of the receiving body not covered by the canopy assembly.

13. The carrier fixing mechanism according to claim 9, wherein the carrier comprises a receiving body and a canopy assembly disposed on the receiving body, the canopy assembly is a partially covering ceiling, an upper edge of the receiving body which is not connected to the canopy assembly is detachably connected to an anti-collision protection device.

14. The carrier fixing mechanism according to claim 13, wherein the receiving body comprises two opposite first side surfaces and two opposite second side surfaces, the two second side surfaces are located between the two first side surfaces, the first side surfaces extend in a front-rear direction, and the second side surfaces extend in a left-right direction; and the anti-collision protection device comprises a first portion protruding upward from the second side surface, and a second portion protruding upward from the first side surface, and a height of the first portion is greater than a height of the second portion.

15. The carrier fixing mechanism according to claim 9, wherein the carrier comprises a receiving body and a handle pivotally connected to the receiving body, the carrier fixing mechanism further comprises a protective sheet, a first side edge of the protective sheet is connected to the carrier or the basal portion, a second side edge of the protective sheet is detachably connected to the handle or a top tether assembly.

16. The carrier fixing mechanism according to claim 15, wherein the protective sheet is tensioned by rotating the handle position or adjusting the top tether assembly, and the tensioned protective sheet covers a front side area of the carrier.

17. The carrier fixing mechanism according to claim 9, wherein the carrier comprises a receiving body and a handle pivotally connected to the receiving body, a protective shed is mounted on the handle, the protective shed comprises a U-shaped frame and a shed fabric, two ends of the U-shaped frame are pivotally connected to two ends of the handle, and a pivot position of the U-shaped frame relative to the handle is capable of being adjusted to cover the shed fabric over the receiving body.

18. The carrier fixing mechanism according to claim 9, wherein a blocking member extending upward is disposed on a front end of the basal portion or the carrier, the blocking member comprises an energy-absorbing device and a bar member supporting the energy-absorbing device, and the energy-absorbing device faces the carrier.

19. The carrier fixing mechanism according to claim 18, wherein the blocking member is pivotally connected to the basal portion, a storage cavity is formed inside the base, and the blocking member is capable of being inserted into the storage cavity when being pivoted to a horizontal state.

20. The carrier fixing mechanism according to claim 9, wherein a supporting leg device is disposed at a bottom of the carrier, and the supporting leg device has an unfolded state and a stored state; and wherein when the carrier is removed from the base and the supporting leg device is in the unfolded state, the carrier is capable of being used as a stroller, and when the supporting leg device is in the stored state, a bar member of the supporting leg device is capable of being detachably engaged with the base.
